(19) Europäisches Patentamt
European Patent Office
Office européen des brevets

(11) EP 3 988 296 A1

(12) EUROPEAN PATENT APPLICATION
published in accordance with Art. 153(4) EPC

(43) Date of publication:
**27.04.2022 Bulletin 2022/17**

(21) Application number: **20831697.6**

(22) Date of filing: **24.06.2020**

(51) International Patent Classification (IPC):
***B32B 17/10** (2006.01)* ***C08F 8/42** (2006.01)*
***C08F 4/70** (2006.01)* ***C08F 210/02** (2006.01)*
***C08L 23/26** (2006.01)* ***C08J 5/18** (2006.01)*

(52) Cooperative Patent Classification (CPC):
**B32B 17/10; C08F 4/70; C08F 8/42; C08F 210/02; C08J 5/18; C08L 23/26**

(86) International application number:
**PCT/JP2020/024884**

(87) International publication number:
**WO 2020/262482 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2019 JP 2019116698**
**24.06.2019 JP 2019116761**
**01.07.2019 JP 2019123065**
**02.07.2019 JP 2019123619**
**02.07.2019 JP 2019123624**

(71) Applicant: **Japan Polyethylene Corporation**
**Tokyo 100-8251 (JP)**

(72) Inventors:
- **AOKI Shin**
**Kawasaki-shi, Kanagawa 210-8548 (JP)**
- **HIRAMOTO Tomomi**
**Kawasaki-shi, Kanagawa 210-8548 (JP)**
- **TAKAMITSU Kohei**
**Kawasaki-shi, Kanagawa 210-8548 (JP)**
- **KONISHI Hiroaki**
**Kawasaki-shi, Kanagawa 210-8548 (JP)**
- **UEMATSU Masahiro**
**Kawasaki-shi, Kanagawa 210-8548 (JP)**

(74) Representative: **Müller-Boré & Partner**
**Patentanwälte PartG mbB**
**Friedenheimer Brücke 21**
**80639 München (DE)**

# (54) RESIN FOR FILM-SHAPED MOLDED BODY, AND MOLDED ARTICLE COMPRISING SAID RESIN

(57) This is a resin composition for a film containing an ionomer which comprises, in a copolymer (P) containing a structural unit (A) derived from ethylene and/or an α-olefm having 3 to 20 carbon atoms, and a structural unit (B) derived from a monomer having a carboxyl group(s) and/or a dicarboxylic anhydride group(s) as essential constitutional units, at least a part of the carboxyl groups and/or the dicarboxylic anhydride groups in the copolymer (P) being converted into a metal-containing carboxylic acid salt(s) containing at least one kind of a metal ion(s) selected from Group 1, Group 2 or Group 12 of the periodic table, and having a phase angle δ at an absolute value G*=0.1 MPa of a complex modulus of elasticity measured by a rotary rheometer of 50 degrees to 75 degrees, and a molded body molded by using the same.

EP 3 988 296 A1

## Description

TECHNICAL FIELD

The present invention relates to a resin for film-shaped molded body, a resin composition and a molding material using the same. More specifically, it relates to an ethylene-based film, a soft sheet, a glass laminated body, a dicing tape and a gasket.

BACKGROUND ART

Heretofore, as ethylene-based polymers for various kinds of molded bodies, it has been known a low-density polyethylene (LDPE) having a large number of branched branched-chains obtained by a high-pressure radical polymerization method and a linear low-density polyethylene (LLDPE or metallocene PE) obtained by a catalytic polymerization method. LDPE is excellent in molding processability but low in strength, and LLDPE or metallocene PE is excellent in strength but low in molding processability, and it is difficult to satisfy all of these required properties.

On the other hand, the ethylene-based ionomer is a resin using an ethylene-unsaturated carboxylic acid copolymer as a base resin, and intermolecularly bonded with metal ions such as sodium and zinc, etc. (U.S. Patent No. 3,264,272). It has characteristics such as tough, enriched in elasticity, and having flexibility, wear resistance and transparency, etc.

At present, as commercially available ethylene-based ionomers, a sodium salt or zinc salt of an ethylene-methacrylic acid copolymer developed by Dupont "Surlyn (Registered Trademark)", and "Himilan (Registered Trademark)" sold by Dow-Mitsui Polychemicals Co., Ltd., and the like. Also, in JP 2011-524918A, a molded product containing an ionomer, which is characterized by having good optical characteristics, has been disclosed.

In the ethylene-unsaturated carboxylic acid copolymers which are a base resin used for the ethylene-based ionomers currently commercially sold, a polar group-containing olefin copolymer in which a polar group-containing monomer such as ethylene and an unsaturated carboxylic acid, etc., are polymerized by the high-pressure radical polymerization method is used in each case. The high-pressure radical polymerization method has a merit that polymerization is possible at a low cost and relatively without selecting the kind of the polar group-containing monomer. However, the molecular structure of this polar group-containing olefin copolymer produced by the high-pressure radical polymerization method has a multi-branched type molecular structure in which it has many long-chain branches and short-chain branches irregularly as shown in the image diagram shown in Fig. 1, and it has a drawback that it is insufficient in strength.

On the other hand, it has conventionally been sought a method for producing a polar group-containing olefin copolymer in which the molecular structure is a linear state using a polymerization method which uses a catalyst, as shown in the image diagram shown in Fig. 2, but the polar group-containing monomer generally becomes catalytic poisons so that its polymerization is difficult, and in fact, it has been deemed to be difficult for long years to obtain a polar group-containing olefin copolymer having desired physical properties by an industrially inexpensive and stable method.

However, in recent years, a method for obtaining a polar group-containing olefin copolymer having a substantially linear state molecular structure industrially low cost and stably has been proposed using a novel catalyst and a novel producing method developed by the applicant of the present application, etc.

And, it has been proposed by the applicant of the present application, etc., that, as a producing method of a polar group-containing olefin copolymer which becomes a base resin of the ethylene-based ionomer, it has been reported to succeed in producing a binary ionomer by producing a copolymer of ethylene and t-butyl acrylate using a late-period transition metal catalyst, and after modifying the obtained polar group-containing olefin copolymer to an ethylene-acrylic acid copolymer by subjecting to a heat or acid treatment, reacting with a metal ion (JP 2016-79408A).

PRIOR ART DOCUMENTS

PATENT DOCUMENTS

Patent Document 1: USP 3264272
Patent Document 2: JP 2011-524918A
Patent Document 3: JP 2016-79408A
Patent Document 4: JP 2018-193261A
Patent Document 5: JP 2016-188158A

Patent Document 6: JP 2009-248377A
Patent Document 7: JP 2017-152499A
Patent Document 8: JP 2008-545017A

## SUMMARY OF THE INVENTION

### PROBLEMS TO BE SOLVED BY THE INVENTION

At present, known ionomers having a multi-branched molecular structure produced by a high-pressure radical polymerization method, which are commercially available as ethylene-based ionomers, have a problem that it is insufficient in strength. Polyethylene-based resins are used as materials for various kinds of molded products including film-shaped bodies such as films or sheets, but improvement in strength has been required from the viewpoint of rigidity, or the viewpoint of wear resistance and deterioration resistance. Further, depending on the uses, it is required to have transparency, glossiness, heat sealing property and flexibility, etc., in combination.

When the characteristics required for each use are described in detail, in the film used for food packaging materials, packaging materials for medical materials, industrial material packaging materials, etc., whereas the degree required for various kinds of uses is different, it is generally required to have high strength, good balance between rigidity and strength, high transparency, high glossiness, strength at the time of heat sealing, and low-temperature heat-sealing property, etc., individually or in combination. However, in the conventional polyethylene resin, it was a difficult situation by the prior art technique to obtain a material that satisfied any one of these physical properties in a dramatically improved form, or a material that satisfied sufficiently in combination. In addition, in the film using the conventional ethylene-based ionomer having a multi-branched molecular structure, resistance to impact from the normal temperature to the low temperature region is not sufficient, and according to the finding by the present inventors, it is poor in bending resistant property, so that it is insufficient in the packaging use where occurrence of pinholes is avoided.

As a use of a soft sheet which is thicker and softer than a film, there may be mentioned a cushioning sheet that suppresses damage due to contact between objects and a vibration-proof sheet that suppresses the transmission of vibration, etc. In general, a sheet made of silicone rubber is often used for such uses, but the silicone rubber sheet is extremely expensive, so that there are large expectation for a soft sheet that is inexpensive and can be used for general purpose.

The soft sheet is considered to be important to have flexibility and wear resistance from the expected method of use, and depending on the situation, impact resistance that can withstand breakage such as "tear" is considered to be required. Further, in order to further improve the degree of freedom of the situation to be used, place and portion, it can be considered to be important characteristics that optical characteristics, in particular, transparency is good.

The ethylene-based ionomers have been also used as a resin layer of a glass laminated body, and as the uses, there may be mentioned a laminated glass interlayer film and a solar cell sealing material. The laminated glass is a laminated glass in which two or more sheets of the glass plates are adhered through an interlayer film made of a resin. The laminated glass is used as windshields of automobiles, monitor glass of measuring instruments and glass for architecture. By providing the interlayer film, the flexibility of the interlayer film and the adhesiveness to the glass provide advantages in the safety aspect such as prevention of cracking of the glass and prevention of scattering of fragments when it is broken. Therefore, the laminated glass interlayer film is required to have transparency, impact resistance and adhesiveness to glass. Laminated glass using the ethylene-based ionomer as an interlayer film is described in JP 2018-193261A and JP 2016-188158A.

The solar cell sealing material is a material that adheres to both the front and back surfaces of a power generation element composed of a cell of a solar cell and an interconnector to seal the element in a solar cell module. The power generation element adheres to the light receiving layer and the back surface layer of the solar cell module through this sealing material. As the light receiving layer, a glass layer called a cover glass is generally used, and as the back surface layer, a weather resistant resin film is used. The sealing material in the solar cell module is required to have high transparency to reach the incident light passed through the light receiving layer to the cell of the solar cell without loss, and a function of protecting the power generation element from the impact from the external environment. In JP 2009-248377A, a solar cell sealing material in which a silane coupling agent is added to an ethylene-based ionomer to improve adhesiveness is described.

As described above, the laminated glass interlayer film and the solar cell sealing material are required to have high impact resistance, high transparency and high adhesiveness to glass. Ionomer is one of the materials to be investigated, and in JP 2018-193261A and JP 2016-188158A, there is described a laminated glass in which adhesiveness is improved by adding a silane coupling agent to an ethylene-based ionomer, but there is no example that adhesiveness is improved by improving the ionomer resin alone until now, so that there is room for improvement in terms of cost and productivity. In addition, regarding the impact resistance, it still cannot be said to be sufficient, and there is no example in which impact resistance is improved by improving the resin alone. In the ionomer described in JP 2009-248377A, it

is not an example in which adhesion strength is improved by the resin alone, and regarding the impact resistance, it still cannot be said to be sufficient, and there is no example in which impact resistance is improved by improving the resin alone.

As one of the proposals for using an ethylene-based ionomer, a dicing tape used at the time of cutting a semiconductor wafer, a semiconductor package, etc., is also mentioned. The semiconductor wafer and various kinds of packages are produced with a state of large diameter, and are cut (dicing) and separated into small semiconductor chips in a state of being adhered and fixed on a dicing tape. As the properties required for the dicing tape, there may be mainly mentioned two points that cutting chips derived from the dicing tape resin are little at the time of dicing, and the expanding property is good since the dicing tape is pulled to expand the distance between the semiconductor chips at the time of separation. As a material of the dicing tape, there are various kinds of materials, and further improvement has been desired to achieve both a small amount of cutting chips and good expanding property in a well-balanced manner. (JP 2017-152499A)

It is required for the dicing tape to have at least expanding property and to be capable of reducing cutting chips. In particular, cutting chips are the problem that, even it is a small amount, it affects the quality of the semiconductor chips that are becoming finer so that it is the point to be required to improve it. However, the conventional ionomers as described in JP 2017-152499A are insufficient in strength, and according to the finding by the present inventors, it becomes clear that they are worn even under the conditions without cutting, and this problem has not yet been solved.

Gaskets made of a resin have come to be widely used as sealing parts for bottle cap closure liners and electronic devices since they are easy in production and processing the shape. The characteristics of the gasket made of a resin are that it has sufficient flexibility to improve adhesiveness and has a certain level or more of elastic recovery to retain the sealing property with the portion to be sealed.

In addition, the gasket made of a resin used in the sealing parts, etc., used for bottle cap closure liners and hinge portions of electromagnetic devices are required, in addition to flexibility and elastic recovery, simultaneously to have durability capable of enduring wear due to repeated rubbing such as opening and closing bottles and operation of the hinge portion, etc., and tearing due to large deformation.

In JP 2008-545017A, there is disclosed a composition which is a polymer composition containing at least an ethylene/$\alpha$-olefin copolymer and at least one of the other polymer(s) as a useful material for preparing a gasket, wherein the other is a second ethylene/$\alpha$-olefin copolymer, elastomer, polyolefin, polar polymer and ethylene/carboxylic acid copolymer or an ionomer thereof.

The composition of JP 2008-545017A has a certain level or more of elastic recovery and wear resistance, but is still insufficient. Also, the composition of the same publication is required to be uniformly kneading a plurality of materials for the purpose of stabilizing the quality, and involves the problem that there are extremely large restriction on production that a molding machine having a high kneading ability is used, or pretreatment such as compounding by a separate step is required which raises the production costs.

In view of the situation of the prior art, an object of the present application is to provide a resin composition for a film-shaped molded body excellent in at least one of various kinds of physical properties of gloss, transparency, tensile strength, piercing strength, pinhole resistance, heat seal strength, impact strength from the normal temperature region to the low temperature region, flexibility (expandability), wear resistance, transparency, adhesiveness, elastic recovery, etc., of the film, preferably a combination of several of these.

## MEANS TO SOLVE THE PROBLEMS

As a result of intensive studies by the present inventors to solve the above-mentioned problems, they have found that a resin composition using a specific ionomer resin has a markedly excellent effect than expected on the physical properties required for various uses in a film-shaped molded body such as a film, a sheet, a glass interlayer film, a dicing tape, a gasket, etc.

The ethylene-based ionomer is a novel ethylene-based ionomer in which the base resin has a substantially linear molecular structure and also has a function as an ionomer, which is never seen before, and its physical properties, etc., are markedly different from the conventional ethylene-based ionomer having a multi-branched type molecular structure, and specific characteristics and suitable uses thereof are unknown. The present invention is based on the finding that a resin composition containing a substantially linear ethylene-based ionomer has an excellent effect on improving required physical properties beyond the region of the properties of the conventional ethylene-based resins.

That is, the present invention is as mentioned in the following [1] to [20].

[1] A resin for a film-shaped molded body characterized in that the resin comprises the following ionomer: an ionomer characterized in that at least a part of a carboxyl group and/or a dicarboxylic anhydride group in a copolymer (P) containing a structural unit (A) derived from ethylene and/or an $\alpha$-olefin having 3 to 20 carbon atoms and a structural unit (B) derived from a monomer having a carboxyl group and/or a dicarboxylic anhydride group as essential constitutional units being converted into a metal-containing carboxylic acid salt containing at least one

kind of a metal ion(s) selected from Group 1, Group 2 or Group 12 of the periodic table, and a phase angle δ of the ionomer at an absolute value G*=0.1 MPa of a complex modulus of elasticity measured by a rotary rheometer is a range of 50 degrees to 75 degrees.

[2] The resin for a film-shaped molded body described in [1] characterized in that a number of methyl branches calculated by $^{13}C$-NMR of the copolymer (P) in the ionomer is 50 or less per 1,000 carbons.

[2'] The resin for a film-shaped molded body described in [1] characterized in that a number of methyl branches calculated by $^{13}C$-NMR of the copolymer (P) in the ionomer is 5 or less per 1,000 carbons.

[3] The resin for a film-shaped molded body described in [1] or [2] characterized in that the copolymer (P) in the ionomer contains 2 to 20 mol% of the structural unit (B) in the copolymer.

[4] The resin for a film-shaped molded body described in any of [1] to [3] characterized in that the structural unit (A) in the ionomer is a structural unit derived from ethylene.

[5] The resin for a film-shaped molded body described in any of [1] to [4] characterized in that the copolymer (P) in the ionomer is produced by using a transition metal catalyst containing a transition metal(s) of Groups 8 to 11 of the periodic table.

[5'] The resin for a film-shaped molded body described in [5] characterized in that the transition metal catalyst is a transition metal catalyst comprising phosphorus sulfonic acid or phosphorus phenol ligand and nickel or palladium.

[6] The resin for a film-shaped molded body described in any of [1] to [5] characterized in that the copolymer (P) is a binary copolymer consisting of the structural unit (A) and the structural unit (B).

[7] The resin for a film-shaped molded body described in any of [1] to [6] characterized in that the copolymer (P) is a copolymer which further comprises a structural unit (C) which is a compound having one or more carbon-carbon double bond in a molecular structure as essential constitutional unit, other than the structural unit (A) and the structural unit (B).

[8] The resin for a film-shaped molded body described in [7] characterized in that the structural unit (C) in the copolymer (P) is a non-cyclic monomer represented by the following general formula (1) or a cyclic monomer represented by the following general formula (2).

[Formula 1]

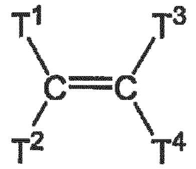

· · · (1)

[in the general formula (1), $T^1$ to $T^3$ each independently represents a substituent selected from the group consisting of a hydrogen atom, a hydrocarbon group having 1 to 20 carbon atoms, a hydrocarbon group having 1 to 20 carbon atoms substituted by a hydroxyl group(s), a hydrocarbon group having 2 to 20 carbon atoms substituted by an alkoxy group(s) having 1 to 20 carbon atoms, a hydrocarbon group having 3 to 20 carbon atoms substituted by an ester group(s) having 2 to 20 carbon atoms, a hydrocarbon group having 1 to 20 carbon atoms substituted by a halogen atom(s), an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group, and

$T^4$ represents a substituent selected from the group consisting of a hydrocarbon group having 1 to 20 carbon atoms substituted by a hydroxyl group(s), a hydrocarbon group having 2 to 20 carbon atoms substituted by an alkoxy group(s) having 1 to 20 carbon atoms, a hydrocarbon group having 3 to 20 carbon atoms substituted by an ester group(s) having 2 to 20 carbon atoms, a hydrocarbon group having 1 to 20 carbon atoms substituted by a halogen atom(s), an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group.]

[Formula 2]

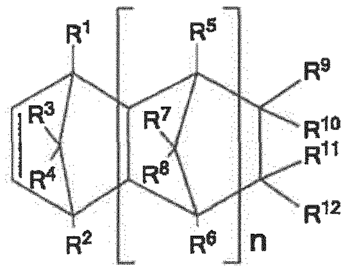

・・・(2)

[in the general formula (2), $R^1$ to $R^{12}$ each may be the same or different from each other, and each is selected from the group consisting of a hydrogen atom, a halogen atom and a hydrocarbon group having 1 to 20 carbon atoms, $R^9$ and $R^{10}$, and $R^{11}$ and $R^{12}$may be integrated to form a divalent organic group, respectively, and $R^9$ or $R^{10}$, and $R^{11}$ or $R^{12}$ may form a ring with each other.
Also, n indicates 0 or a positive integer, and when n is 2 or more, $R^5$ to $R^8$ may be the same or different from each other in each repeating unit.]
[9] The resin for a film-shaped molded body described in [8] characterized in that the structural unit (C) in the copolymer (P) is a non-cyclic monomer represented by the general formula (1).
[10] The resin for a film-shaped molded body described in [8] characterized in that the structural unit (C) in the copolymer (P) is a cyclic monomer represented by the general formula (2).
[11] The resin for a film-shaped molded body described in any of [7] to [10] characterized in that the copolymer (P) contains 0.001 mol% to 20.000 mol% (the total of all the structural units constituting the copolymer is made 100 mol%) of the structural unit (C) in the copolymer.
[12] The resin for a film-shaped molded body described in any of [1] to [11] characterized in that the metal ion is a metal ion of Group 1 of the periodic table or Group 12 of the periodic table.
[13] An ethylene-based ionomer for a soft sheet which is the ionomer described in any of [1] to [12] characterized in that the ionomer further satisfies the following (b) to (f):

\(b) A melt flow rate (MFR) at a temperature of 190°C and a load of 2.16 kg is 0.1 to 15 g/10 min.
(c) A tensile modulus of elasticity is 20 to 350 MPa.
(d) A tensile impact strength is 700 KJ/$m^2$ or more.
(e) A wear amount in a wear test is less than 10 mg.
(f) A haze is 0.1 to 30%.

[14] An ethylene-based ionomer for a dicing tape which is the ionomer described in any of [1] to [12] characterized in that the ionomer further satisfies the following (b2) to (c2):

(b2) A tensile fracture elongation by the cooling method A in accordance with JIS K7151 when molded to a thickness of 1 mm is larger than 350%.
(c2) A wear amount in a wear test when molded to a thickness of 1 mm is less than 10 mg.

[15] An ethylene-based ionomer for a laminated body which is the ionomer described in any of [1] to [12] characterized in that the ionomer further satisfies the following (b3) to (d3):

(b3) A maximum stress in a peeling test when molded to a thickness of 0.5 mm and laminated to a glass is 2 N/10 mm or more.
(c3) A tensile impact strength is 700 KJ/$m^2$ or more.
(d3) A haze is 25% or less.

[16] An ethylene-based ionomer for a gasket which is the ionomer described in any of [1] to [12] characterized in that the ionomer further satisfies the following (b') to (f'); (b') A melt flow rate (MFR) at a temperature of 190°C and a load of 2.16 kg is 0.1 to 30 g/10 min.

(c') An elastic recovery rate in a tensile test is 65 to 100%.
(d') A tensile modulus of elasticity is 20 to 350 MPa.
(e') A tensile impact strength is 700 KJ/$m^2$ or more.

(f') A wear amount in a wear test is less than 10 mg.

[17] A resin composition for a film-shaped molded body which comprises the resin for a film-shaped molded body described in any of [1] to [12], or the ethylene-based ionomer described in any of [13] to [16].
[18] A molded body which is molded by using the resin for a film-shaped molded body described in any one of [1] to [12], or the ethylene-based ionomer described in any of [13] to [16].
[19] A molded body selected from the group consisting of an ethylene-based film, a soft sheet, a dicing tape base material, a resin film for a glass interlayer film, a resin film for an encapsulating material of a solar battery, a resin film for a glass laminated body and a gasket, which comprises molded by or containing at least one layer of a molded layer using the resin for a film-shaped molded body described in any of [1] to [12], or the ethylene-based ionomers described in [13] to [16].
[20] An ethylene-based film characterized in that the film is comprises an ethylene-based resin as a resin component, and has properties of any of the following (i) to (iV).

(i) A film impact at -20°C when molded to a thickness of 30 μm is 20 J/mm or more, and a tensile modulus of elasticity in an MD direction is 150 MPa or more.
(ii) A heat seal strength when molded to a thickness of 30 μm and measured under a seal temperature of 120°C, a seal pressure of 0.2 MPa, a seal time of 1 second and a lower seal bar temperature of 60°C is 10 N/15 mm or more.
(iii) An inflation film having a haze of 2% or less when molded to a thickness of 30 μm.
(iV) An inflation film having a gloss (20°) of 120% or more when molded to a thickness of 30 μm.

## EFFECTS OF THE INVENTION

The resin composition of the present invention using the ionomer which has a substantially linear structure is, when it is molded, excellent in at least one of various kinds of physical properties of gloss, transparency, impact strength from normal temperature to low temperature environment, heat sealing property, pinhole resistance, flexibility (expandability), wear resistance, transparency, adhesiveness, elastic recovery, etc., preferably some combination thereof, as compared with the film comprising the existing polyethylene or the ionomer resin having a multi-branched structure.

## BRIEF DESCRIPTION OF THE DRAWINGS

Fig. 1 is an image diagram of a multi-branched molecular structure of a polar group-containing olefin copolymer produced by the high-pressure radical polymerization method. Circles in the figure represent polar groups.

Fig. 2 is an image diagram of a polar group-containing olefin copolymer in which the molecular structure is linear. Circles in the figure represent polar groups.
Fig. 3 is a graph showing the wear amount and the number of bending times of Comparative Examples I-1 to 9 and Examples I-1 to 16.
Fig. 4 is a graph showing the heat seal strength evaluation results of the inflation films of Comparative Examples I-10 to 13 and Examples 1-17 to 20.
Fig. 5 is a graph showing the film impact at 23°C and the evaluation results of the tensile modulus of elasticity in the MD direction of Comparative Examples I-10 to 13 and Examples 1-17 to 19.
Fig. 6 is a graph showing the film impact at -20°C and the evaluation results of the tensile modulus of elasticity in the MD direction of Comparative Examples I-10 to 13 and Examples 1-17 to 20.
Fig. 7 is a graph showing the value of the haze of the films of Comparative Examples I-10 to 13, Examples 1-17 to 20 and Reference Example (OPP film).
Fig. 8 is a graph showing the value of the gloss of the films of Comparative Examples I-10 to 13, Examples 1-17 to 20 and Reference Example (OPP film).
Fig. 9 is a drawing showing the relationship between the tensile impact strength of Examples III-1 to 10 and Comparative Examples III-1 and 2 and the adhesion strength to glass.
Fig. 10 is a drawing showing an example of the layer structure of the dicing tape which is one embodiment of the present invention.
Fig. 11 is a drawing showing an example of the layer structure of the dicing tape which is one embodiment of the present invention.

EMBODIMENTS TO CARRY OUT THE INVENTION

The present invention relates to a resin for a film-shaped molded body containing an ionomer which comprises a copolymer (P) in which a structural unit (A) derived from ethylene and/or an α-olefin having 3 to 20 carbon atoms and a structural unit (B) derived from a monomer having a carboxyl group(s) and/or a dicarboxylic anhydride group(s) as essential constitutional units, and, if necessary, further a structural unit (C) which is a compound having one or more carbon-carbon double bonds in a molecular structure, are contained as constitutional units and they are substantially linearly copolymerized, preferably random copolymerized as a base resin, and at least a part of the carboxyl groups and/or the dicarboxylic anhydride groups of the structural unit (B) is/are converted into a metal-containing carboxylic acid salt(s) containing at least one kind of a metal ion(s) selected from Group 1, Group 2 or Group 12 of the periodic table.

Hereinafter, uses of the ionomer, films using the ionomer, etc., according to the present invention will be explained in detail for each item. Incidentally, in the present specification, "(meth)acrylic acid" means acrylic acid or methacrylic acid. Also, in the present specification, "to" indicating a numerical range is used to mean that the numerical values described before and after the numerical range are included as the lower limit value and the upper limit value. Further, in the present specification, the copolymer means a copolymer of binary or more containing at least one kind of a unit (A) and at least one kind of a unit (B).

Also, in the present specification, the ionomer means an ionomer of binary or more of the copolymer, which contains the above-mentioned structural unit (A) and a structural unit (B') in which at least a part of the above-mentioned structural unit (B) is converted into a metal-containing carboxylic acid salt(s), and which may further contain the above-mentioned structural unit (B).

1. Ionomer

The ionomer of the present invention is characterized in that it contains a copolymer (P) in which the structural unit (A) derived from ethylene and/or an α-olefin having 3 to 20 carbon atoms, and the structural unit (B) derived from the monomer having a carboxyl group(s) and/or a dicarboxylic anhydride group(s) as essential constitutional units, and, if necessary, further a structural unit (C) which is a compound having one or more carbon-carbon double bonds in a molecular structure, are contained as constitutional units and they are substantially linearly copolymerized, preferably random copolymerized as a base resin, and at least a part of the carboxyl groups and/or the dicarboxylic anhydride groups of the structural unit (B) is/are converted into a metal-containing carboxylic acid salt(s) containing at least one kind of a metal ion(s) selected from Group 1, Group 2 or Group 12 of the periodic table.

(1) Structural unit (A)

The structural unit (A) is at least one kind of a structural unit(s) selected from the group consisting of a structural unit derived from ethylene and a structural unit derived from an α-olefin having 3 to 20 carbon atoms.

The α-olefin according to the present invention is an α-olefin having 3 to 20 carbon atoms represented by the structural formula: $CH_2$=$CHR^{18}$ ($R^{18}$ is a hydrocarbon group having 1 to 18 carbon atoms, which may be a linear structure or may have a branch). The number of the carbon atoms of the α-olefin is more preferably 3 to 12.

Specific examples of the structural unit (A) may be mentioned ethylene, propylene, 1-butene, 1-pentene, 1-hexene, 1-octene, 1-decene, 3-methyl-1-butene, and 4-methyl-1-pentene, etc., and it may be ethylene. As the ethylene, in addition to that derived from a petroleum raw material, ethylene derived from a non- petroleum raw material such as that derived from a plant raw material can be used.

Also, the structural unit (A) may be one kind, or may be a plural kind.

As a combination of two kinds, there may be mentioned, for example, ethylene-propylene, ethylene-1-butene, ethylene-1-hexene, ethylene-1-octene, propylene-1-butene, propylene-1-hexene, and propylene-1-octene, etc.

As a combination of three kinds, there may be mentioned, for example, ethylene-propylene-1-butene, ethylene-propylene-1-hexene, ethylene-propylene-1-octene, propylene-1-butene-hexene, and propylene-1-butene-1-octene, etc.

In the present invention, as the structural unit (A), it preferably contains ethylene as indispensable, and if necessary, one or more kinds of an α-olefin(s) having 3 to 20 carbon atoms may be further contained.

The ethylene in the structural unit (A) may be 65 to 100 mol% based on the total mol of the structural unit (A), and may be 70 to 100 mol%.

From the viewpoints of impact resistance and heat resistance, the above-mentioned structural unit (A) may be a structural unit derived from ethylene.

(2) Structural unit (B)

The structural unit (B) is a structural unit derived from a monomer having a carboxyl group and/or a dicarboxylic

anhydride group. Incidentally, the structural unit (B) represents that it has the same structure as the structural unit derived from the monomer having a carboxyl group and/or a dicarboxylic anhydride group, and as mentioned in the production method mentioned later, it is not necessarily a material produced by using a monomer having a carboxyl group and/or a dicarboxylic anhydride group.

As the structural unit derived from the monomer having a carboxyl group, there may be mentioned, for example, an unsaturated carboxylic acid such as acrylic acid, methacrylic acid, maleic acid, fumaric acid, tetrahydrophthalic acid, itaconic acid, citraconic acid, crotonic acid, isocrotonic acid, norbomenedicarboxylic acid, bicyclo-[2,2,1]hept-2-ene-5,6-dicarboxylic acid, etc., and as the structural unit derived from the monomer having a dicarboxylic anhydride group, there may be mentioned, for example, an unsaturated dicarboxylic anhydride such as maleic anhydride, itaconic anhydride, citraconic anhydride, tetrahydrophthalic anhydride, 5-norbornene-2,3-dicarboxylic anhydride, 3,6-epoxy-1,2,3,6-tetrahydrophthalic anhydride, tetracyclo[6.2.1.1$^{3,6}$.0$^{2,7}$]-dodeca-9-ene-4,5-dicarboxylic anhydride, 2,7-octadien-1-ylsuccinic anhydride, etc.

As the structural unit derived from the monomer having a carboxyl group and/or a dicarboxylic anhydride group, there may be preferably mentioned a structural unit derived from acrylic acid, methacrylic acid, 5-norbornene-2,3-dicarboxylic anhydride from the viewpoint of industrial availability, and in particular, it may be acrylic acid.

Also, the structural unit derived from the monomer having a carboxyl group and/or a dicarboxylic anhydride group may be one kind, or may be a plural kind.

Incidentally, the dicarboxylic anhydride group may react with moisture in the air to open a ring and partially become a dicarboxylic acid, and as long as in the range that the gist of the present invention is not deviated, the dicarboxylic anhydride group may be ring-opened.

(3) Other structural unit (C)

As the copolymer (P) to be used in the present invention, a binary copolymer which consists only of the structural unit (A) and the structural unit (B), and a multinary copolymer comprising the structural unit (A), the structural unit (B) and further a structural unit (C) other than these can be used, and it may be a multinary copolymer which further containing a structural unit (C) other than the structural units represented by the structural unit (A) and the structural unit (B). The monomer which provides the structural unit (C) can be used an optional monomer as long as it is not included in the monomer which provides the structural unit (A) and the structural unit (B). The optional monomer which provides the structural unit (C) is not limited as long as it is a compound having one or more carbon-carbon double bond in the molecular structure, and may be mentioned, for example, a non-cyclic monomer represented by the general formula (1) and a cyclic monomer represented by the general formula (2), etc., mentioned later.

As compared with the binary copolymer which consists only of the structural unit (A) and the structural unit (B), by using ternary or more of a multinary copolymer containing the structural unit (C) component as a base resin of the ionomer, it is possible to control the properties of the ionomer resin more finely. For example, an ionomer having a lower melting point or crystallinity can be obtained. When it is molded, the balance between rigidity and toughness is dramatically improved, a film or a soft sheet markedly excellent in transparency and gloss, and further a film excellent in low-temperature heat-sealing property can be obtained. Further, it is also possible to further more heighten impact resistance. The structural unit (C) may be based on one kind of the monomer, or may be used two or more kinds of the monomers in combination.

Non-cyclic monomer

[Formula 3]

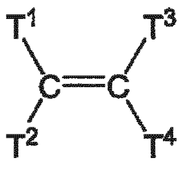

· · · (1)

[in the general formula (1), $T^1$ to $T^3$ each independently represents a substituent selected from the group consisting of a hydrogen atom, a hydrocarbon group having 1 to 20 carbon atoms, a hydrocarbon group having 1 to 20 carbon atoms substituted by a hydroxyl group, a hydrocarbon group having 2 to 20 carbon atoms substituted by an alkoxy group having 1 to 20 carbon atoms, a hydrocarbon group having 3 to 20 carbon atoms substituted by an ester group having 2 to 20 carbon atoms, a hydrocarbon group having 1 to 20 carbon atoms substituted by a halogen atom, an alkoxy group having

1 to 20 carbon atoms, an aryl group having 6 to 20 carbon atoms, an ester group having 2 to 20 carbon atoms, a silyl group having 2 to 20 carbon atoms, a halogen atom and a cyano group, and

$T^4$ represents a substituent selected from the group consisting of a hydrocarbon group having 1 to 20 carbon atoms substituted by a hydroxyl group, a hydrocarbon group having 2 to 20 carbon atoms substituted by an alkoxy group having 1 to 20 carbon atoms, a hydrocarbon group having 3 to 20 carbon atoms substituted by an ester group having 2 to 20 carbon atoms, a hydrocarbon group having 1 to 20 carbon atoms substituted by a halogen atom, an alkoxy group having 1 to 20 carbon atoms, an aryl group having 6 to 20 carbon atoms, an ester group having 2 to 20 carbon atoms, a silyl group having 2 to 20 carbon atoms, a halogen atom and a cyano group.]

In the ionomer of the present invention, $T^1$ and $T^2$ may be hydrogen atoms, $T^3$ may be a hydrogen atom or a methyl group, and $T^4$ may be an ester group having 2 to 20 carbon atoms.

The carbon skeleton possessed by the hydrocarbon group, the substituted alkoxy group, the substituted ester group, the alkoxy group, the aryl group, the ester group and the silyl group with regard to $T^1$ to $T^4$ may have a branch, ring and/or unsaturated bond.

The carbon number of the hydrocarbon group with regard to $T^1$ to $T^4$ may be 1 or more with regard to the lower limit value, and the upper limit value thereof may be 20 or less, and also may be 10 or less.

The carbon number of the substituted alkoxy group with regard to $T^1$ to $T^4$ may be 1 or more with regard to the lower limit value, and the upper limit value thereof may be 20 or less, and also may be 10 or less.

The carbon number of the substituted ester group with regard to $T^1$ to $T^4$ may be 2 or more with regard to the lower limit value, and the upper limit value thereof may be 20 or less, and also may be 10 or less.

The carbon number of the alkoxy group with regard to $T^1$ to $T^4$ may be 1 or more with regard to the lower limit value, and the upper limit value thereof may be 20 or less, and also may be 10 or less.

The carbon number of the aryl group with regard to $T^1$ to $T^4$ may be 6 or more with regard to the lower limit value, and the upper limit value thereof may be 20 or less, and also may be 11 or less.

The carbon number of the ester group with regard to $T^1$ to $T^4$ may be 2 or more with regard to the lower limit value, and the upper limit value thereof may be 20 or less, and also may be 10 or less.

The carbon number of the silyl group with regard to $T^1$ to $T^4$ may be 3 or more with regard to the lower limit value, and the upper limit value thereof may be 18 or less, and also may be 12 or less. As the silyl group, there may be mentioned a trimethylsilyl group, a triethylsilyl group, a tri-n-propylsilyl group, a triisopropylsilyl group, a dimethylphenylsilyl group, a methyldiphenylsilyl group, and a triphenylsilyl group, etc.

In the ionomer of the present invention, from the viewpoint of easiness in production, $T^1$ and $T^2$ may be hydrogen atoms, $T^3$ may be a hydrogen atom or a methyl group, and $T^1$ to $T^3$ maybe all hydrogen atoms.

Also, from the viewpoint of impact resistance, $T^4$ may be an ester group having 2 to 20 carbon atoms.

As the non-cyclic monomer, there may be specifically mentioned the case where $T^4$ which includes (meth)acrylic acid ester, etc., is an ester group having 2 to 20 carbon atoms, and the like.

When $T^4$ is an ester group having 2 to 20 carbon atoms, as the non-cyclic monomer, there may be mentioned a compound represented by the structural formula: $CH_2=C(R^{21})CO_2(R^{22})$. Here, $R^{21}$ is a hydrogen atom or a hydrocarbon group having a carbon number of 1 to 10, which may have a branch, ring and/or unsaturated bond. $R^{22}$ is a hydrocarbon group having 1 to 20 carbon atoms, which may have a branch, ring and/or unsaturated bond. Further, a hetero atom(s) may be contained in an optional position in $R^{22}$.

As the compound represented by the structural formula: $CH_2=C(R^{21})CO_2(R^{22})$, there may be mentioned a compound in which $R^{21}$ is a hydrogen atom or a hydrocarbon group having a carbon number of 1 to 5. Also, there may be mentioned an acrylic acid ester in which $R^{21}$ is a hydrogen atom or a methacrylic acid ester in which $R^{21}$ is a methyl group.

Specific examples of the compound represented by the structural formula: $CH_2=C(R^{21})CO_2(R^{22})$ may be mentioned, for example, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, cyclohexyl (meth)acrylate, octyl (meth)acrylate, 2-ethylhexyl (meth)acrylate, nonyl (meth)acrylate, decyl (meth)acrylate, dodecyl (meth)acrylate, octadecyl (meth)acrylate, phenyl (meth)acrylate, toluyl (meth)acrylate, benzyl (meth)acrylate, etc.

Specific compounds may be mentioned methyl acrylate, ethyl acrylate, n-butyl acrylate (nBA), isobutyl acrylate (iBA), t-butyl acrylate (tBA) and 2-ethylhexyl acrylate, etc., and in particular, it may be n-butyl acrylate (nBA), isobutyl acrylate (iBA) and t-butyl acrylate (tBA).

Incidentally, the non-cyclic monomer may be one kind, or may be a plural kind.

Cyclic monomer

[Formula 4]

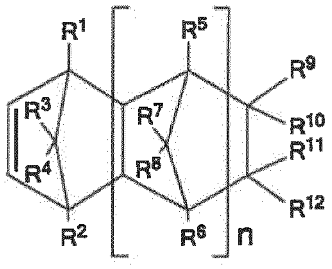

・・・(2)

[in the general formula (2), $R^1$ to $R^{12}$ each may be the same or different from each other, and each is selected from the group consisting of a hydrogen atom, a halogen atom and a hydrocarbon group having 1 to 20 carbon atoms, $R^9$ and $R^{10}$, and $R^{11}$ and $R^{12}$may be integrated to form a divalent organic group, respectively, and $R^9$ or $R^{10}$, and $R^{11}$ or $R^{12}$ may form a ring with each other.

Also, n indicates 0 or a positive integer, and when n is 2 or more, $R^5$ to $R^8$ may be the same or different from each other in each repeating unit.]

As the cyclic monomer, there may be mentioned a norbornene-based olefin, etc., and may be mentioned compounds having a skeleton of a cyclic olefin such as norbomene, vinyl norbornene, ethylidene norbornene, norbomadiene, tetracyclo-dodecene, tricyclo[4.3.0.1$^{2,5}$]deca-3-ene, etc., and which may be 2-norbomene (NB) and tetracyclo[6.2.1.1$^{3,6}$.0$^{2,7}$]dodeca-4-ene, etc.

(4) Copolymer (P)

The copolymer (P) which becomes a base resin of the ionomer used in the present invention comprises a structural unit (A) derived from ethylene and/or an $\alpha$-olefin having 3 to 20 carbon atoms and a structural unit (B) derived from a monomer having a carboxyl group(s) and/or a dicarboxylic anhydride group(s) as essential constitutional units, and further, if necessary, contains an optional structural unit (C) other than the above-mentioned (A) and (B), and these respective structural units are substantially linearly copolymerized, preferably random copolymerized. The term "substantially linearly" refer to the state that the copolymer does not have branches or frequency of appearing branched structure is low, and the copolymer can be regarded as a linear state. Specifically, it refers to the state in which the phase angle $\delta$ of the copolymer is 50 degrees or more under the conditions mentioned later.

The copolymer (P) according to the present invention is required to contain each one or more kinds of the structural unit (A) and the structural unit (B), and to contain two or more kinds of the monomer units in total, and it may contain an optional structural unit (C) other than the above-mentioned (A) and (B).

The structural unit and the amounts of the structural units of the copolymer according to the present invention will be explained.

A structure derived from each one molecule of ethylene and/or an $\alpha$-olefin having 3 to 20 carbon atoms (A), a monomer (B) having a carboxyl group and/or a dicarboxylic anhydride group, and an optional monomer (C) other than (A) and (B) is defined to be one structural unit in the copolymer.

And when the entire structural units in the copolymer is made 100 mol%, a ratio of each structural unit is expressed in mol%, which is an amount of the structural unit.

-Amount of structural unit (A) of ethylene and/or $\alpha$-olefin having 3 to 20 carbon atoms:

A lower limit of an amount of the structural unit of the structural unit (A) according to the present invention is selected from 60.0 mol% or more, preferably 70.0 mol% or more, more preferably 80.0 mol% or more, further preferably 85.0 mol% or more, further more preferably 90.0 mol% or more, particularly preferably 91.2 mol% or more, and most preferably 92.0 mol% or more, and an upper limit is selected from 97.9 mol% or less, preferably 97.5 mol% or less, more preferably 97.0 mol% or less, and further preferably 96.5 mol% or less.
If the amount of the structural unit derived from ethylene and/or an $\alpha$-olefin having 3 to 20 carbon atoms (A) is less than 60.0 mol%, toughness of the copolymer is inferior, while if it is more than 97.9 mol%, crystallinity of the copolymer becomes high and transparency becomes worse in some cases.

• Amount of structural unit of monomer having carboxyl group and/or dicarboxylic anhydride group (B):

A lower limit of an amount of the structural unit of the structural unit (B) according to the present invention is selected from 2.0 mol% or more, preferably 2.9 mol% or more, more preferably 5.1 mol% or more, and particularly preferably 5.2 mol% or more, and an upper limit is selected from 20.0 mol% or less, preferably 15.0 mol% or less, more preferably 10.0 mol% or less, further preferably 8.0 mol% or less, particularly preferably 6.0 mol% or less, and most

preferably 5.6 mol% or less.
If the amount of the structural unit derived from the monomer having a carboxyl group and/or a dicarboxylic anhydride group (B) is less than 2.0 mol%, adhesiveness of the copolymer with a different material having high polarity is not sufficient, while if it is more than 20.0 mol%, sufficient mechanical properties of the copolymer cannot be obtained in some cases.
Further, the monomer having a carboxyl group and/or a dicarboxylic anhydride group to be used may be alone, or may be used in combination of two or more kinds.

• Amount of structural unit of optional monomer (C):

When an optional monomer (C) other than the above-mentioned (A) and (B) is contained in the constitutional elements of the ionomer of the present invention, a lower limit of an amount of the structural unit of the structural unit (C) is selected from 0.001 mol% or more, preferably 0.010 mol% or more, more preferably 0.020 mol% or more, further preferably 0.1 mol% or more, further more preferably 1.9 mol% or more, and particularly preferably 2.0 mol% or more, and an upper limit is selected from 20.0 mol% or less, preferably 15.0 mol% or less, more preferably 10.0 mol% or less, further preferably 5.0 mol% or less, and particularly preferably 3.6 mol% or less.
If the amount of the structural unit derived from the optional monomer (C) is 0.001 mol% or more, flexibility of the copolymer becomes easily sufficient, while if it is 20.0 mol% or less, sufficient mechanical properties of the copolymer can be easily obtained.
The optional monomer to be used may be alone, or may be used in combination of two or more kinds.

Method for measuring amounts of structural units of monomer having carboxyl group and/or dicarboxylic anhydride group, and optional monomer in copolymer:

Amounts of the structural units derived from the monomer having a carboxyl group and/or a dicarboxylic anhydride group, and the optional monomer in the copolymer according to the present invention can be obtained by using $^1$H-NMR spectrum. $^1$H-NMR is measured by the following method.
200 to 250 mg of a sample is charged in an NMR sample tube having an inner diameter of 10 mmϕ with 2.4 ml of a mixed solvent of o-dichlorobenzene/ deuterated benzene bromide ($C_6D_5Br$)=4/1 (volume ratio) and hexamethyldisiloxane which is a standard substance of chemical shift, and after replacing with nitrogen, the tube is sealed and the mixture is dissolved under heating to make a uniform solution and NMR measurement is carried out.
NMR measurement is carried out using an AV400M type NMR apparatus manufactured by Brucker Japan Co., Ltd. equipped with a 10 mmϕ cryoprobe at 120$_{\circ C}$.
$^1$H-NMR is measured with a pulse angle of 4.5°, a pulse interval of 1.8 seconds and a number of integrations of 256 times or more. The chemical shift is set the peak of the methyl proton of hexamethyldisiloxane to 0.088 ppm, and the chemical shift of the peaks by the other protons is based on this.

Number of branches of copolymer per 1,000 carbons:
In the copolymer of the present invention, from the viewpoints of increasing modulus of elasticity and obtaining sufficient mechanical properties, an upper limit of a number of methyl branches calculated by $^{13}$C-NMR per 1,000 carbons may be 50 or less, may be 5 or less, may be 1 or less, and may be 0.5 or less, and a lower limit is not particularly limited, and it is better when the number is as little as possible. Also, an upper limit of a number of ethyl branches per 1,000 carbons may be 3.0 or less, may be 2.0 or less, may be 1.0 or less, and may be 0.5 or less, and a lower limit is not particularly limited, and it is better when the number is as little as possible. Further, an upper limit of a number of butyl branches per 1,000 carbons may be 7.0 or less, may be 5.0 or less, may be 3.0 or less, and may be 0.5 or less, and a lower limit is not particularly limited, and it is better when the number is as little as possible.
Method for measuring amounts of structural units derived from monomer having carboxyl group and/or dicarboxylic anhydride group, and non-cyclic monomer, and number of branches in copolymer:

Amounts of the structural units derived from the monomer having a carboxyl group and/or a dicarboxylic anhydride group, and the non-cyclic monomer, and a number of branches per 1,000 carbons in the copolymer of the present invention can be obtained by using $^{13}$C-NMR spectrum. $^{13}$C-NMR is measured by the following method.
200 to 300 mg of a sample is charged in an NMR sample tube having an inner diameter of 10 mmϕ with 2.4 ml of a mixed solvent of o-dichlorobenzene ($C_6H_4Cl_2$) and deuterated benzene bromide ($C_6D_5Br$) ($C_6H_4Cl_2/C_6D_5Br$=2/1 (volume ratio)) and hexamethyldisiloxane which is a standard substance of chemical shift, and after replacing with nitrogen, the tube is sealed and the mixture is dissolved under heating to make a uniform solution as an NMR measurement sample.
NMR measurement is carried out using an AV400M type NMR apparatus manufactured by Brucker Japan Co., Ltd.

equipped with a 10 mmϕ cryoprobe at 120$_{\circ C}$.
$^{13}$C-NMR is measured with a temperature of the sample at 120$_{\circ C}$, a pulse angle of 90°, a pulse interval of 51.5 seconds, a number of integrations of 512 times or more and a reverse gate decoupling method.
The chemical shift is set the $^{13}$C signal of hexamethyldisiloxane to 1.98 ppm, and the chemical shift of the signals by the other $^{13}$C is based on this.
In the obtained $^{13}$C-NMR, signals specific to the monomer or branches possessed by the copolymer are identified, and by comparing the strength thereof, an amount of the structural unit and a number of branches of each monomer in the copolymer can be analyzed. The positions of the signals specific to the monomer or branches can be referred to known data or can be uniquely identified depending on the sample. Such an analytical method can be generally carried out for those skilled in the art.

Weight average molecular weight (Mw) and molecular weight distribution (Mw/Mn):

A lower limit of the weight average molecular weight (Mw) of the copolymer according to the present invention is generally 1,000 or more, preferably 6,000 or more, and more preferably 10,000 or more, and an upper limit is generally 2,000,000 or less, preferably 1,500,000 or less, further preferably 1,000,000 or less, particularly suitably 800,000 or less, and most preferably 100,000 or less.
If Mw is less than 1,000, physical properties such as mechanical strength and impact resistance, etc., of the copolymer are not sufficient, while if Mw exceeds 2,000,000, melt viscosity of the copolymer becomes extremely high, and molding processing of the copolymer becomes difficult in some cases.

A ratio (Mw/Mn) of the weight average molecular weight (Mw) and the number average molecular weight (Mn) of the copolymer according to the present invention is generally in the range of 1.5 to 4.0, preferably 1.6 to 3.5, and further preferably 1.9 to 2.3. If Mw/Mn is less than 1.5, various kinds of processability including molding of the copolymer are not sufficient, while if it exceeds 4.0, mechanical properties of the copolymer are inferior in some cases.
Also, in the present specification, (Mw/Mn) is sometimes expressed as a molecular weight distribution parameter.
The weight average molecular weight (Mw) and the number average molecular weight (Mn) of the copolymer according to the present invention can be obtained by gel permeation chromatography (GPC). Also, the molecular weight distribution parameter (Mw/Mn) is obtained by, further obtaining the number average molecular weight (Mn) by gel permeation chromatography (GPC), and a ratio of Mw and Mn, Mw/Mn is calculated.
An example of the measurement method of GPC in accordance with the present invention is as follows.

(Measurement condition)

Used model: 150C manufactured by Waters Corp.
Detector: MIRAN1A·IR detector (measurement wavelength: 3.42 μm) manufactured by FOXBORO
Measurement temperature: 140$_{\circ C}$
Solvent: Ortho-dichlorobenzene (ODCB)
Column: AD806M/S (3 columns) manufactured by SHOWA DENKO K.K.
Flow rate: 1.0 mL/min
Injection amount: 0.2 mL

(Preparation of sample)

The sample was prepared as a solution of 1 mg /mL using ODCB (containing 0.5 mg /mL of BHT (2,6-di-t-butyl-4-methylphenol)), and dissolved at 140$_{\circ C}$ over about 1 hour.

(Calculation of molecular weight (M))

It is carried out by the standard polystyrene method, and conversion from the retention volume to the molecular weight is carried out using a calibration curve previously prepared by the standard polystyrenes. The standard polystyrenes to be used are, for example, a brand of (F380, F288, F128, F80, F40, F20, F10, F4, F1, A5000, A2500, A1000) manufactured by TOSOH CORPORATION, and monodispersed polystyrenes (each 0.07 mg/ml solution of S-7300, S-3900, S-1950, S-1460, S-1010, S-565, S-152, S-66.0, S-28.5 and S-5.05) manufactured by SHOWA DENKO K.K., etc. A calibration curve is prepared by injecting 0.2 mL of a solution dissolved in ODCB (containing 0.5 mg/mL of BHT) so that each is contained to be 0.5 mg/mL. As the calibration curve, a cubic equation obtained by approximating the least

squares method, or logarithmic values of the elution time and the molecular weight are approximated by a quaternary equation, etc., is used. For the viscosity formula [η]=K×Mα to be used for conversion to the molecular weight (M), the following numerical values are used.

Polystyrene (PS): $K=1.38\times10^{-4}$, $\alpha=0.7$
Polyethylene (PE): $K=3.92\times10^{-4}$, $\alpha=0.733$
Polypropylene (PP): $K=1.03\times10^{-4}$, a=0.78

• Melting point (Tm, °C):

The melting point of the copolymer according to the present invention is indicated by the maximum peak temperature of the endothermic curve measured by a differential scanning calorimeter (DSC). The maximum peak temperature indicates the temperature of the peak in which the height from the baseline is the maximum, when multiple peaks are shown in the endothermic curve obtained when the vertical axis is a heat flow (mW) and the horizontal axis is a temperature (°C) in the DSC measurement, and indicates the temperature of the peak when the peak is one.
The melting point is preferably 50°C to 140°C, further preferably 60°C to 138°C, and most preferably 70°C to 135°C. If it is lower than the range, heat resistance is not sufficient, while if it is higher than the range, adhesiveness is inferior in some cases.
The melting point can be obtained by, for example, using DSC (DSC7020) manufactured by SII NanoTechnology Co., Ltd., from the absorption curve when charging about 5.0 mg of the sample in an aluminum pan, elevating the temperature at 10°C/min to 200°C, and after retaining at the same temperature of 200°C for 5 minutes, lowering the temperature at 10°C/min to 20°C, and after retaining at the same temperature of 20°C for 5 minutes, again, elevating the temperature at 10°C/min to 200°C.

Crystallinity (%):

In the copolymer of the present invention, the crystallinity observed by the differential scanning calorimetry measurement (DSC) is not particularly limited, and preferably exceeding 0% and 30% or less, further preferably exceeding 0% and 25% or less, particularly preferably exceeding 5% and 25% or less, and most preferably 5% or more and 20% or less.
If the crystallinity is 0%, there is a case where toughness of the copolymer is not sufficient. If the crystallinity is higher than 30%, transparency of the copolymer is inferior in some cases. Incidentally, the crystallinity is an index of transparency, and it can be judged that the lower the crystallinity of the copolymer, the better the transparency. In the uses such as glass interlayer films, it is preferable to have transparency, but in the uses such as dicing tapes and gaskets, etc., where transparency is not necessarily required, an upper limit of the crystallinity is not particularly limited.
In the present invention, the crystallinity can be obtained by, for example, obtaining the heat of fusion (ΔH) from the area of the heat of fusion endothermic peak obtained by the DSC measurement in the same procedure as in the measurement of the above-mentioned melting point, and the heat of fusion is divided by the heat of fusion 293 J/g of the complete crystal of the high-density polyethylene (HDPE).

• Molecular structure of copolymer:
The molecular chain terminal of the copolymer according to the present invention may be the structural unit (A) of ethylene and/or an α-olefin having 3 to 20 carbon atoms, may be the structural unit (B) of the monomer having a carboxyl group and/or a dicarboxylic anhydride group, or may be the optional structural unit (C) other than (A) and (B).

Also, the copolymer according to the present invention may be mentioned a random copolymer, a block copolymer, and a graft copolymer, etc., of the structural unit (A) of ethylene and/or an α-olefin having 3 to 20 carbon atoms, the structural unit (B) of the monomer having a carboxyl group and/or a dicarboxylic anhydride group, and the structural unit (C) of an optional monomer. Among these, it may be a random copolymer capable of containing a large amount of the structural unit (B).

A molecular structure example (1) of a general ternary copolymer is shown in the following.

The random copolymer means a copolymer in which the probability that the structural unit (A) of ethylene and/or an α-olefin having 3 to 20 carbon atoms, the structural unit (B) of the monomer having a carboxyl group and/or a dicarboxylic anhydride group and the structural unit (C) of the optional monomer of the molecular structure example (1) shown below find each structural unit at a position in an arbitrary molecular chain is irrelevant to the kind of the adjacent structural unit.

As shown below, in the molecular structure example (1) of the copolymer, the structural unit (A) of ethylene and/or an α-olefin having 3 to 20 carbon atoms, the structural unit (B) of the monomer having a carboxyl group and/or

a dicarboxylic anhydride group and the structural unit (C) of the optional monomer form a random copolymer.

[Formula 5]

-ABCAAABBCBAABACCAA-

· · · Molecular structure example (1)

Incidentally, when a molecular structure example (2) of the copolymer in which the structural unit (B) of the monomer having a carboxyl group and/or a dicarboxylic anhydride group is introduced by graft modification is also mentioned for reference, a part of the copolymer in which the structural unit (A) of ethylene and/or an α-olefin having 3 to 20 carbon atoms and the structural unit (C) of the optional monomer are copolymerized is graft modified by the structural unit (B) of the monomer having a carboxyl group and/or a dicarboxylic anhydride group.

[Formula 6]

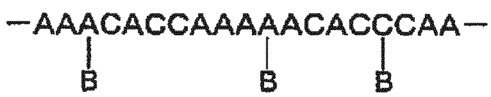

· · · Example (2) of molecular structure

Also, it is possible to confirm random copolymerizability of the copolymer by various methods, a method of judging random copolymerizability from the relationship between the comonomer content and the melting point of the copolymer is described in detail in JP 2015-163691A and JP 2016-079408A. From the above-mentioned documents, it can be judged that randomness is low when the melting point (Tm, °C) of the copolymer is higher than -3.74×[Z]+130 (provided that [Z] is a comonomer content/mol%).

In the copolymer which is a random copolymer according to the present invention, it is preferred that the melting point (Tm, °C) observed by the differential scanning calorimetry measurement (DSC) and the total content [Z] (mol%) of the structural unit (B) of the monomer having a carboxyl group and/or a dicarboxylic anhydride group and the structural unit (C) of the optional monomer satisfy the following formula (I).

$$50<Tm<-3.74\times[Z]+130\cdots(I)$$

When the melting point (Tm, °C) of the copolymer is higher than -3.74×[Z]+ 130(°C), random copolymerizability is low, so that mechanical properties such as impact strength, etc., are inferior, while when the melting point is lower than 50°C, heat resistance is inferior in some cases.

Further, the copolymer according to the present invention is preferably a material produced in the presence of a transition metal catalyst from the viewpoint of making the molecular structure linear.

Incidentally, it has been known that the molecular structure of a copolymer differs depending on the production method such as polymerization by a high-pressure radical polymerization method process, polymerization using a metal catalyst, etc.

It is possible to control this difference in molecular structure by selecting the production method, and for example, as described in JP 2010-150532A, its molecular structure can be estimated by the complex modulus of elasticity measured by a rotary rheometer.

• Phase angle δ at absolute value G*=0.1 MPa of complex modulus of elasticity:

In the copolymer of the present invention, it is the characteristic feature that the phase angle δ at the absolute value G*=0.1 MPa of the complex modulus of elasticity measured with a rotary rheometer is 50 to 75 degrees. A lower limit of the phase angle δ may be 50 degrees or more, may be 51 degrees or more, may be 54 degrees or more, may be 56 degrees or more, and may be 58 degrees or more, and an upper limit of the phase angle δ may be 75 degrees or less, and may be 70 degrees or less.

More specifically, when the phase angle δ (G*=0.1 MPa) at the absolute value G*=0.1 MPa of the complex modulus of elasticity measured by a rotary rheometer is 50 degrees or more, the molecular structure of the copolymer shows a linear state structure and a structure that does not contain any long-chain branches, or a substantially linear state structure that contains a small amount of long-chain branches that do not affect the mechanical strength.

Also, when the phase angle δ (G*=0.1 MPa) at an absolute value G*=0.1 MPa of a complex modulus of elasticity

measured by a rotary rheometer is lower than 50 degrees, the molecular structure of the copolymer shows a structure containing long-chain branches excessively, and becomes a material inferior in mechanical strength.
The phase angle δ at an absolute value G*=0.1 MPa of the complex modulus of elasticity measured by a rotary rheometer is affected by both of the molecular weight distribution and long-chain branches. However, if it is limited to a copolymer having Mw/Mn≦4, more preferably Mw/Mn≦3, it can be an index of the amount of long-chain branches, and the long-chain branches contained in the molecular structure is larger, the δ (G*=0.1 MPa) value becomes smaller. Incidentally, if Mw/Mn of the copolymer is 1.5 or more, the δ (G*=0.1 MPa) value never exceed 75 degrees even if the molecular structure is a structure containing no long-chain branches.

A measurement method of complex modulus of elasticity is as follows.
A sample is charged in a mold for heat press with a thickness of 1.0 mm, preheated in a hot press machine at a surface temperature of 180°C for 5 minutes, a residual gas in a molten resin is degassed by repeating pressurization and depressurization, and the sample is further pressurized at 4.9 MPa and maintained for 5 minutes. Thereafter, the sample is transferred to a press machine with a surface temperature of 25°C to cool it at a pressure of 4.9 MPa for 3 minutes, whereby a press plate comprising the sample having a thickness of about 1.0 mm is prepared. The press plate comprising the sample is processed into a circle with a diameter of 25 mm, which is made a sample, and dynamic viscoelasticity thereof is measured using an ARES type rotary rheometer manufactured by Rheometrics as a measurement device of dynamic viscoelasticity characteristics under nitrogen atmosphere and the following conditions.

- Plate: ϕ25 mm parallel plate
- Temperature: 160°C
- Strain amount: 10%
- Measurement angular frequency range: $1.0\times10^{-2}$ to $1.0\times10^{2}$ rad/s
- Measurement interval: 5 point/decade

A phase angle δ is plotted to the common logarithm log G* of the absolute value G* (Pa) of a complex modulus of elasticity, and the value of 8 (degree) at the point corresponding to log G*=5.0 is made δ (G*=0.1 MPa). When there is no point corresponding to log G*=5.0 in the measurement points, the δ value at log G*=5.0 is obtained by linear interpolation using two points around log G*=5.0. Also, when all the measurement points are log G*<5, the δ value at log G*=5.0 is obtained by extrapolating the δ value at log G*=5.0 using the three points from the largest log G* value with the quadratic curve.

With regard to production of copolymer (P)

The copolymer (P) according to the present invention is preferably a material produced in the presence of a transition metal catalyst from the viewpoint of making the molecular structure linear state.

• Polymerization catalyst

• Polymerization catalyst

A kind of the polymerization catalyst used for production of the copolymer according to the present invention is not particularly limited as long as it is capable of copolymerizing the structural unit (A), the structural unit (B) and the optional structural unit (C) and, for example, there may be mentioned transition metal compounds of Group 5 to Group 11 having a chelating ligand.
Specific examples of preferable transition metals may be mentioned vanadium atom, niobium atom, tantalum atom, chromium atom, molybdenum atom, tungsten atom, manganese atom, iron atom, platinum atom, ruthenium atom, cobalt atom, rhodium atom, nickel atom, palladium atom, copper atom, etc. Among these, it is preferably transition metals of Group 8 to Group 11, further preferably transition metals of Group 10, and particularly preferably nickel (Ni) and palladium (Pd). These metals may be single or may be used in combination of a plural kinds.
The chelating ligand has at least two atoms selected from the group consisting of P, N, O, and S, includes a ligand which is bidentate or multidentate, and is electrically neutral or anionic. In a review by Brookhart et al., structure of the chelating ligands is exemplified (Chem. Rev., 2000, 100, 1169).
As the chelating ligand, there may be preferably mentioned a bidentate anionic P and O ligands. As the bidentate anionic P and O ligands, there may be mentioned, for example, phosphorus sulfonic acid, phosphorus carboxylic acid, phosphorus phenol and phosphorus enolate. As the chelating ligands, as others, there may be mentioned bidentate anionic N and O ligands. As the bidentate anionic N and O ligands, there may be mentioned, for example, salicylamide iminate and pyridine carboxylic acid. As the chelating ligand, as others, there may be mentioned diimine ligand diphenoxide ligand and diamide ligand, etc. Among these, the chelating ligand is preferably phosphorus sulfonic acid or phosphorus phenol is preferable.

The structure of the metal complex obtained from the chelating ligand is represented by the following structural formula (a) or (b) in which an arylphosphine compound, an arylarsine compound or an arylantimony compound each may have a substituent(s) is coordinated.

[Formula 7]

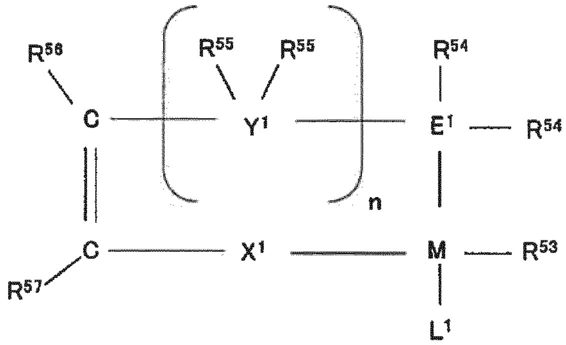

Structural formula (a)

[Formula 8]

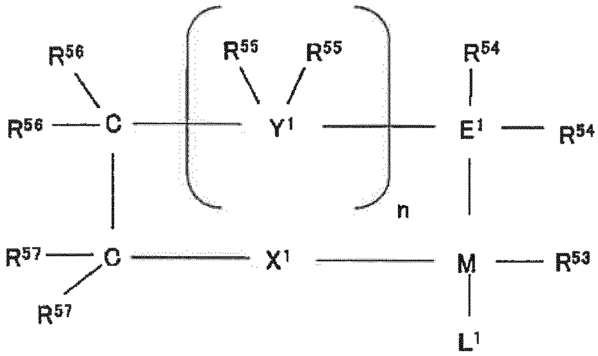

Structural formula (b)

[in the structural formula (a) and the structural formula (b),

M represents a transition metal belonging to any of Group 5 to Group 11 of the periodic table, i.e., various transition metals as mentioned above.

$X^1$ represents oxygen, sulfur, $-SO_3-$ or $-CO_2-$.

$Y^1$ represents carbon or silicon.

n represents an integer of 0 or 1.

$E^1$ represents phosphorus, arsenic or antimony.

$R^{53}$ and $R^{54}$ each independently represents hydrogen or a hydrocarbon group having 1 to 30 carbon atoms which may contain a hetero atom(s).

$R^{55}$s each independently represents hydrogen, halogen or a hydrocarbon group having 1 to 30 carbon atoms which may contain a hetero atom(s).

$R^{56}$ and $R^{57}$ each independently represents hydrogen, halogen or a hydrocarbon group having 1 to 30 carbon atoms which may contain a hetero atom(s), $OR^{52}$, $CO_2R^{52}$, $CO_2M'$, $C(O)N(R^{51})_2$, $C(O)R^{52}$, $SR^{52}$, $SO_2R^{52}$, $SOR^{52}$, $OSO_2R^{52}$, $P(O)(OR^{52})_{2-y}(R^{51})_y$, CN, $NHR^{52}$, $N(R^{52})_2$, $Si(OR^{51})_{3-x}(R^{51})_x$, $OSi(OR^{51})_{3-x}(R^{51})_x$, $NO_2$, $SO_3M'$, $PO_3M'_2$, $P(O)(OR^{52})_2M'$ or an epoxy-containing group.

$R^{51}$ represents hydrogen or a hydrocarbon group having 1 to 20 carbon atoms. $R^{52}$ represents a hydrocarbon group having 1 to 20 carbon atoms.

M' represents an alkali metal, an alkaline earth metal, ammonium, quaternary ammonium or phosphonium, x represents an integer of 0 to 3 and y represents an integer of 0 to 2.
Incidentally, $R^{56}$ and $R^{57}$ may be bonded to each other to form an alicyclic ring, an aromatic ring or a heterocyclic ring containing a hetero atom(s) selected from oxygen, nitrogen or sulfur. At this time, a number of the ring member is 5 to 8, and the ring may have or may not have a substituent(s).
$L^1$ represents a ligand coordinated to M.
Also, $R^{53}$ and $L^1$ may be bonded to each other to form a ring.]

More preferably, the complex which becomes a polymerization catalyst is a transition metal complex represented by the following structural formula (c).

[Formula 9]

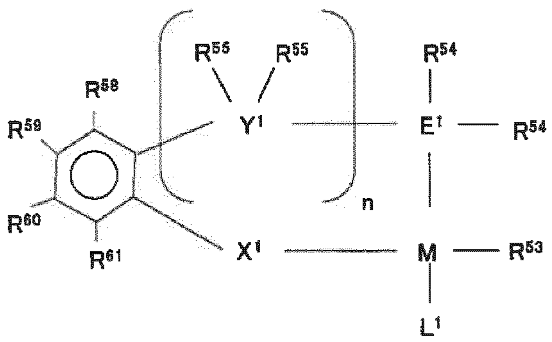

Structural formula (c)

[in the structural formula (c),

M represents a transition metal belonging to any of Groups 5 to 11 of the periodic table, i.e., various transition metals as mentioned above.
$X^1$ represents oxygen, sulfur, $-SO_3-$ or $-CO_2-$.
$Y^1$ represents carbon or silicon.
n represents an integer of 0 or 1.
$E^1$ represents phosphorus, arsenic or antimony.
$R^{53}$ and $R^{54}$ each independently represents hydrogen or a hydrocarbon group having 1 to 30 carbon atoms which may contain a hetero atom(s).
$R^{55}$s each independently represents hydrogen, halogen or a hydrocarbon group having 1 to 30 carbon atoms which may contain a hetero atom(s).
$R^{58}$, $R^{59}$, $R^{60}$ and $R^{61}$ each independently represents hydrogen, halogen or a hydrocarbon group having 1 to 30 carbon atoms which may contain a hetero atom(s), $OR^{52}$, $CO_2R^{32}$, $CO_2M'$, $C(O)N(R^{51})_2$, $C(O)R^{52}$, $SR^{52}$, $SO_2R^{52}$, $SOR^{52}$, $OSO_2R^{52}$, $P(O)(OR^{52})_{2-y}(R^{51})_y$, CN, $NHR^{52}$, $N(R^{52})_2$, $Si(OR^{51})_{3-x}(R^{51})_x$, $OSi(OR^{51})_{3-x}(R^{51})_x$, $NO_2$, $SO_3M'$, $PO_3M'_2$, $P(O)(OR^{52})_2M'$ or an epoxy-containing group.
$R^{51}$ represents hydrogen or a hydrocarbon group having 1 to 20 carbon atoms. $R^{52}$ represents a hydrocarbon group having 1 to 20 carbon atoms.
M' represents an alkali metal, an alkaline earth metal, ammonium, quaternary ammonium or phosphonium, x represents an integer of 0 to 3 and y represents an integer of 0 to 2.
Incidentally, a plural number of the groups optionally selected from $R^{58}$ to $R^{61}$ may be bonded to each other to form an alicyclic ring, an aromatic ring or a heterocyclic ring containing a hetero atom(s) selected from oxygen, nitrogen or sulfur. At this time, a number of the ring member is 5 to 8, and the ring may have or may not have a substituent(s).
$L^1$ represents a ligand coordinated to M.
Also, $R^{53}$ and $L^1$ may be bonded to each other to form a ring.]

Here, as a catalyst of the transition metal compound of Group 5 to Group 11 having a chelating ligand, catalyst such as the so-called SHOP-based catalyst and Drent-based catalyst, etc., have been representatively known.

The SHOP-based catalyst is a catalyst in which a phosphorus-based ligand having an aryl group which may have a substituent(s) is coordinated to a nickel metal (for example, see WO2010-050256).

Also, the Drent-based catalyst is a catalyst in which a phosphorus-based ligand having an aryl group which may have a substituent(s) is coordinated to a palladium metal (for example, see JP 2010-202647A).

Polymerization method of copolymer:

The polymerization method of the copolymer according to the present invention is not limited.
As the polymerization method, there may be mentioned slurry polymerization in which at least a part of the formed polymer becomes a slurry in a medium, bulk polymerization using the liquefied monomer itself as a medium, vapor phase polymerization carried out in a vaporized monomer or high pressure ion polymerization in which at least a part of the formed polymer is dissolved in the monomer liquefied at high temperature and high pressure, etc.
As the polymerization format, it may be any format of batch polymerization, semi-batch polymerization or continuous polymerization.
Also, living polymerization may be carried out, or polymerization may be carried out while simultaneously causing chain transfer.
Further, at the time of the polymerization, it may be carried out by using the so-called chain shuttling agent (CSA) in combination, chain shuttling reaction or coordinative chain transfer polymerization (CCTP) may be carried.
With regard to the specific producing process and conditions, for example, these are disclosed in JP 2010-260913A and JP 2010-202647A.

-Introducing method of carboxyl group and/or dicarboxylic anhydride group into copolymer:

The introducing method of the carboxyl group and/or the dicarboxylic anhydride group into the copolymer according to the present invention is not particularly limited. A carboxyl group and/or a dicarboxylic anhydride group can be introduced by various methods in the range as long as the gist of the present invention is not deviated.
The method for introducing the carboxyl group(s) and/or the dicarboxylic anhydride group(s) may be mentioned, for example, a method in which a comonomer having a carboxyl group(s) and/or a dicarboxylic anhydride group(s) is directly copolymerized, a method in which after the other monomer(s) having a functional group(s) that generates a carboxyl group(s) is/are copolymerized, a carboxyl group(s) and/or a dicarboxylic anhydride group(s) is/are introduced by modification, etc.

As a method for introducing a carboxyl group(s) and/or a dicarboxylic anhydride group(s) by modification, there may be mentioned, for example, when a carboxylic acid is to be introduced, a method in which after copolymerizing an acrylic acid ester as a precursor, the product is hydrolyzed to change to a carboxylic acid, a method in which after copolymerizing a t-butyl acrylate as a precursor, the product is decomposed under heating to change to a carboxylic acid, etc.

When the above-mentioned hydrolysis or decomposition under heating is carried out, a conventionally known acidic or basic catalyst may be used as an additive for promoting the reaction. As the acidic or basic catalyst, it is not particularly limited, and may be optionally used, for example, a hydroxide of an alkali metal or an alkaline earth metal such as sodium hydroxide, potassium hydroxide, lithium hydroxide, etc., a carbonate of an alkali metal or an alkaline earth metal such as sodium hydrogen carbonate, sodium carbonate, etc., solid acid such as montmorillonite, etc., an inorganic acid such as hydrochloric acid, nitric acid, sulfuric acid, etc., an organic acid such as formic acid, acetic acid, benzoic acid, citric acid, para-toluenesulfonic acid, trifluoroacetic acid, trifluoromethanesulfonic acid, etc.

From the viewpoints of reaction promoting effect, price, equipment corrosive property, etc., sodium hydroxide, potassium hydroxide, sodium carbonate, para-toluenesulfonic acid and trifluoroacetic acid are preferable, and para-toluenesulfonic acid and trifluoroacetic acid are more preferable.

(5) Ionomer

The ionomer according to the present invention is an ionomer in which at least a part of the carboxyl groups and/or the dicarboxylic anhydride groups of the structural unit (B) in the copolymer (P) is converted to a metal-containing carboxylic acid salt(s) containing at least one kind of a metal ion selected from Group 1, Group 2 or Group 12 of the periodic table, and the phase angle $\delta$ at the absolute value G*=0.1 MPa of the complex modulus of elasticity measured with a rotary rheometer is 50 degrees to 75 degrees, which has substantially linear structure. Incidentally, the ionomer can be obtained by allowing a metal salt to act on the ionomer base resin as mentioned later, and at that time, a reaction that cleaves the molecular chain of the polymer does not generally occur. Therefore, the parameters regarding the structure such as a molar ratio of the comonomers, degree of branches, randomness, etc., are generally preserved between the ionomer base resin and the ionomer.

• Structure of ionomer

The ionomer according to the present invention has substantially linear structure similarly to the copolymer according to the present invention, so that it is characterized in that the phase angle δ at the absolute value G*=0.1 MPa of the complex modulus of elasticity measured by a rotary rheometer is 50 to 75 degrees. The lower limit of the phase angle δ may be 51 degrees or more, more preferably 54 degrees or more, further preferably 56 degrees or more, and further more preferably 58 degrees or more. The upper limit of the phase angle δ is not particularly limited, and it is better when it is closer to 75 degree, but may be 64 degrees or less.

If the phase angle δ (G*=0.1 MPa) is lower than 50 degrees, the molecular structure of the ionomer shows a structure containing long-chain branches excessively, and becomes a material inferior in mechanical strength. As mentioned above, if Mw/Mn≦4, the value of the phase angle δ becomes an index of an amount of the long-chain branches. If Mw/Mn of the ionomer is 1.5 or more, there is no case where δ (G*=0.1 MPa) value exceeds 75 degrees even in the case where the molecular structure is a structure where it does not contain the long-chain branches.

-Melting point (Tm, °C) of ionomer

The melting point (Tm, °C) of the ionomer according to the present invention is preferably 50°C to 140°C, further preferably 60°C to 138°C, and most preferably 70°C to 135°C. If it is lower than this range, heat resistance is not sufficient, while if it is higher than the range, there is sometimes a case where adhesiveness and molding property are insufficient.

Among the ionomers in accordance with the invention of the present application, the ionomer which comprises a binary copolymer consisting only of the structural unit (A) and the structural unit (B) as a base, shows the melting point of 90°C or higher, preferably 95°C or higher, and further preferably 100°C or higher, and the melting point of the ionomer which comprises a multinary copolymer of ternary or more as a base shows lower than 100°C, preferably lower than 95°C, and further preferably lower than 90°C.

Metal ion

The metal ion contained in the ionomer according to the present invention is not particularly limited, and a metal ion used in the conventionally known ionomer can be contained. As the metal ion, among these, a metal ion of Group 1, Group 2 or Group 12 of the periodic table is preferable, and at least one kind selected from the group consisting of $Li^+$, $Na^+$, $K^+$, $Rb^+$, $Cs^+$, $Mg^{2+}$, $Ca^{2+}$, $Sr^{2+}$, $Ba^{2+}$ and $Zn^{2+}$ is more preferable. It can be mentioned particularly preferably at least one kind selected from the group consisting of $Li^+$, $Na^+$, $K^+$, $Mg^{2+}$, $Ca^{2+}$ and $Zn^{2+}$, and further preferably $Na^+$, and $Zn^{2+}$.

These metal ions can be contained two or more kinds in admixture, if necessary.

• Degree of neutralization (mol%)

A content of the metal ion is preferably to contain an amount that neutralize at least a part or whole of the carboxyl group and/or the dicarboxylic anhydride group in the copolymer as the base polymer, and preferable degree of neutralization (average degree of neutralization) is 5 to 95 mol%, more preferably 10 to 90 mol%, further preferably 10 to 80 mol%, and particularly preferably 10 to 40 mol%.

Incidentally, the degree of neutralization can be obtained from a ratio of a total molar amount of the valence of the metal ionxmolar amount, to the total molar amount of the carboxy group containable in the carboxy group and/or the dicarboxylic anhydride group in the copolymer.

The dicarboxylic anhydride group becomes a dicarboxylic acid by ring-opening at the time of forming a carboxylic acid salt, so that the total molar amount of the carboxy group is obtained assuming that 1 mol of the dicarboxylic anhydride group has 2 mol of the carboxy group. Also, for example, with regard to the divalent metal ion such as $Zn^{2+}$, etc., the total molar amount of the molecule of the degree of neutralization is calculated by 2×molar amount assuming that a salt can be formed with 2 mol of the carboxy group per 1 mol thereof.

When the degree of neutralization is high, tensile strength and tensile fracture stress of the ionomer are high, and tensile fracture strain is small, but the melt flow rate (MFR) of the ionomer tends to be low. On the other hand, when the degree of neutralization is low, an ionomer having a suitable MFR can be obtained, but tensile modulus of elasticity and tensile fracture stress are low, and tensile fracture strain tends to be high. Incidentally, the degree of neutralization can be calculated from an amount(s) of the carboxyl group and/or the dicarboxylic anhydride group and a molar ratio of the added metal ions.

Production method of ionomer

The ionomer according to the present invention may be obtained treating the copolymer of ethylene and/or an α-olefin having 3 to 20 carbon atoms/unsaturated carboxylic acid obtained by the introducing method of the carboxyl group and/or the dicarboxylic anhydride group into the copolymer as mentioned above with a metal salt containing at least one kind of a metal ion selected from Group 1, Group 2 or Group 12 of the periodic table, and subjecting to a conversion step in which it is converted into a metal-containing carboxylic acid salt. Also, the ionomer according to the present invention may be obtained by heating the ethylene and/or an α-olefin having 3 to 20 carbon atoms/unsaturated carboxylic ester copolymer and subjecting to a heat conversion step in which at least a part of the ester group in the copolymer is converted to a metal-containing carboxylic acid salt containing at least one kind of a metal ion selected from Group 1, Group 2 or Group 12 of the periodic table.

When an ionomer is produced after introducing a carboxyl group and/or a dicarboxylic anhydride group into a polymer, the producing method is, for example, as follows. That is, it can be obtained by, according to circumstance, heating and kneading a substance which captures a metal ion such as an ethylene/methacrylic acid (MAA) copolymer, etc., with a metal salt to prepare a metal ion supply source, and then, adding the metal ion supply source to an ionomer base resin with an amount that gives a desired degree of neutralization, and kneading.

Also, in the heat conversion step, (i) the carboxylic acid in an ethylene and/or an α-olefin having 3 to 20 carbon atoms/unsaturated carboxylic acid copolymer may be converted into a metal-containing carboxylic acid salt by heating an ethylene and/or an α-olefin having 3 to 20 carbon atoms/unsaturated carboxylic ester copolymer, and hydrolyzing or thermally decomposing the same to make an ethylene and/or an α-olefin having 3 to 20 carbon atoms/unsaturated carboxylic acid copolymer, and then, reacting with a compound containing a metal ion of Group 1, Group 2 or Group 12 of the periodic table, and (ii) the ester group portion in the ethylene and/or an α-olefin having 3 to 20 carbon atoms/unsaturated carboxylic ester copolymer may be converted into the metal-containing carboxylic acid salt by hating an ethylene and/or an α-olefin having 3 to 20 carbon atoms/unsaturated carboxylic ester copolymer while hydrolyzing or thermally decomposing the ester group of the copolymer, and reacting with a compound containing a metal ion of Group 1, Group 2 or Group 12 of the periodic table.

The compound containing a metal ion may be an oxide, a hydroxide, a carbonate, a bicarbonate, an acetate, a formate, etc., of a metal of Group 1, Group 2 or Group 12 of the periodic table.

The compound containing a metal ion may be supplied to a reaction system in the form of granules or fine powder, may be supplied to a reaction system after dissolving or dispersing in water or an organic solvent, or may be supplied to a reaction system by preparing a master batch using an ethylene/unsaturated carboxylic acid copolymer or olefin copolymer as a base polymer. In order to proceed the reaction smoothly, a method of preparing a masterbatch and supplying it to a reaction system is preferable.

Furthermore, the reaction with a compound containing a metal ion may be carried out melting and kneading with various types of apparatus such as a vent extruder, a Banbury mixer and a roll mill, and the reaction may be a batch system or a continuous method. Since the reaction can be smoothly carried out by discharging the by-producing water and carbon dioxide gas produced by the reaction by the deaerator, it is preferable to continuously carry out the reaction using an extruder equipped with a degassing apparatus such as a bent extruder.

When reacting with the compound containing a metal ion, a small amount of water may be injected to promote the reaction.

The temperature for heating the ethylene and/or an α-olefin having 3 to 20 carbon atoms/unsaturated carboxylic ester copolymer may be a temperature at which the ester becomes a carboxylic acid, and if the heating temperature is too low, the ester is not converted into a carboxylic acid, while if it is too high, decarbonylation and decomposition of the copolymer may proceed in some cases. Accordingly, heating temperature of the present invention is carried out preferably in the range of 80°C to 350°C, more preferably 100°C to 340°C, further preferably 150°C to 330°C, and further more preferably 200°C to 320°C.

A reaction time may vary depending on the heating temperature and reactivity at the ester group portion, etc., and generally 1 minute to 50 hours, more preferably 2 minutes to 30 hours, further preferably 2 minutes to 10 hours, more further preferably 2 minutes to 3 hours, and particularly preferably 3 minutes to 2 hours.

In the above-mentioned step, the reaction atmosphere is not particularly limited, and it is generally preferable to carry out the step under an inert gas stream. As examples of the inert gas, nitrogen, argon and carbon dioxide atmosphere can be used. A small amount of oxygen or air may be mixed therein.

The reactor used in the above-mentioned step is not particularly limited, and it is not limited as long as it is a method capable of stirring the copolymer substantially uniformly, a glass container equipped with a stirrer or an autoclave (AC) may be used, and any conventionally known kneader such as Brabender Plastograph, a single-screw or twin-screw extruder, a high-power screw kneader, a Banbury mixer, a kneader, a roll, etc., can be used.

Whether or not a metal ion is introduced into an ionomer base resin and becomes an ionomer can be confirmed by examining decrease in the peak derived from a carbonyl group of the carboxylic acid (dimer) by measuring an IR

spectrum of the obtained resin. Similarly, the degree of neutralization can be confirmed, in addition to the calculation from the above-mentioned molar ratio, by examining decrease in the peak derived from a carbonyl group of the carboxylic acid (dimer), and increase in the peak derived from a carbonyl group of the carboxylic acid base.

<Physical property of ionomer>

As the ionomer to be used in the present invention, those having any of the following physical properties or a combination thereof under the measurement conditions described in the column of Examples mentioned later.

• MFR:

In the ionomer of the present invention, a melt flow rate (MFR) at a temperature of 190°C and a load of 2.16 kg is preferably 0.01 to 30 g/10 min, more preferably 0.1 to 30 g/10 min, further preferably 0.1 to 15 g/10 min, and particularly preferably 0.5 to 20 g/10 min.

When the MFR of the ionomer is within this range, the molecular weight is high and sufficient wear resistance can be obtained. In addition, the molecular weight is lowered, and sufficient elastic recovery can be obtained. Further, the resin pressure at the time of molding does not increase in injection molding, extrusion molding, etc., and molding of the film or sheet is easy. The MFR can be increased or decreased by adjusting the molecular weight of the copolymer (P) which becomes a base.

• Tensile modulus of elasticity:

In the ionomer of the present invention, tensile modulus of elasticity is preferably 20 MPa or more, more preferably 20 to 350 MPa, and further preferably 20 to 300 MPa.

When the tensile modulus of elasticity of the ionomer is within this range, adhesiveness becomes good at the time when a film or a sheet is prepared. Also, when the tensile modulus of elasticity exceeds 350 MPa, there is a fear of lowering adhesiveness at the time when a gasket is prepared. On the other hand, an ionomer having the tensile modulus of elasticity of less than 20 MPa is difficult to produce, but if the tensile modulus of elasticity is 20 MPa or more, an ionomer can be produced without difficulty in designing in terms of modulus of elasticity.

• Tensile impact strength:

In the ionomer of the present invention, tensile impact strength is preferably 100 $KJ/m^2$ or more, more preferably tensile impact strength is 700 $KJ/m^2$ or more, further preferably 720 $KJ/m^2$ or more, and further preferably 800 $KJ/m^2$ or more.

In the ionomer using a multinary copolymer of ternary-based or more as a base, an ionomer which accomplishes, in particular, tensile impact strength of 700 $KJ/m^2$ or more can be obtained. When the tensile impact strength of the ionomer is within this range, even if there is rubbing, etc., accompanied by large deformation, a fear of breakage is reduced. The upper limit of the tensile impact strength is not particularly limited as long as it can be obtained from a material used for those skilled in the art, and according to our investigation, 2,000 $KJ/m^2$ or so is considered to be the upper limit.

• Amount of wear in wear test:

In the ionomer of the present invention, the amount of wear in the wear test is preferably less than 10 mg, more preferably 9 mg or less, and further preferably 7 mg or less. The conditions of the wear test are as described later. When the amount of wear in the wear test is within this range, breakage is unlikely to occur even when repeated rubbing and compression forces are applied, and generation of wear debris can be suppressed well, and it is possible to reduce pollution of usage environment and risk of foreign matter entering into other products. When the amount of wear in the wear test is 10 mg or more, in the case of the gasket, there is a fear of causing breakage on the surface when repeated rubbing is applied, which leads leakage of the contents and lowering in sealability, and also, in the case of the dicing tape, there is a fear of increasing the generated amount of cutting chips.

• Haze:

In the ionomer of the present invention, the value (%) of haze measured in accordance with JIS K 7136-2000 is preferably 0.1 to 30%, and more preferably 0.1 to 20%. If the haze of the ionomer is 30% or less, it is preferable since it can be used without lowering transparency and without limiting environment and uses. An upper limit of the haze is preferably 25% or less, more preferably 19% or less, further preferably 17% or less, and particularly preferably 15% or less. If the haze (%) is 25% or less, transparency of the molded product becomes better so that it is more preferable in the uses

such as window glass and solar cell modules, etc., where transparency is required. On the other hand, an ionomer having the haze of less than 0.1% is difficult to produce, and an ionomer with a lower limit of 0.1% can be produced without using any specific conditions so that it is sufficiently practical.

• Elastic recovery in tensile test:

The elastic recovery in the tensile test of the ionomer of the present invention is preferably 65 to 100%, more preferably 67 to 100%, and further preferably 69 to 100%. If the elastic recovery is less than 65%, there is a fear that sealability of the gasket during long-term use may is lowered.

• Tensile fracture elongation in tensile test:

The ionomer of the present invention preferably has, particularly when it is used as a resin for a dicing tape, a tensile fracture elongation in the tensile test by the test method described later of larger than 350%. If it is larger than 350%, sufficient expandability can be obtained.

-Adhesive strength with glass:

The ionomer of the present invention has, when it is used as a resin for a glass laminated body, an adhesive strength by the test method described later of preferably 2.0 N/10 mm or more, more preferably 2.3 N/10 mm or more, further preferably 2.5 N/10 mm or more, and further more preferably 3.0 N/10 mm or more. When it is within this range, a laminated body having sufficient adhesiveness to a glass and high reliability as a product can be obtained.

2. Resin composition

As a resin composition to be used for various kinds of molded products including a film or sheet, the ionomer of the present invention may be used alone or may be used as a resin composition to which other resin component(s) is/are formulated. Hereinafter, in the present invention, the terms "resin composition containing the ionomer" when used in a molded product include a composition containing the ionomer alone, or to which other resin component(s), additives, etc., is/are formulated. The other resin component(s) that can be formulated in the ionomer resin composition of the present invention is/are not particularly limited as long as it is compatible with the ionomer and does not impair the effects of the present invention. For example, there may be mentioned high-density polyethylene, medium-density polyethylene, low-density polyethylene, ethylene-vinyl acetate copolymer, ethylene-acrylic acid ester copolymer, and other ionomers, etc. Also, two or more kinds of materials can be used in combination. A formulation amount of these resin components is not particularly limited as long as the effects of the present invention are not impaired.

In the resin composition containing the ionomer of the present invention, the content of the ionomer of the present invention can be preferably selected from the range of 1 to 100% by weight, optionally in combination with the intended use and other various conditions.

As one embodiment, when the ionomer of the present invention is used as a resin material for a film, as the content in the resin composition, the resin material for a film is preferably contained in an amount of 10% by weight or more of the ionomer of the present invention, more preferably contained in an amount of 30% by weight or more, further preferably contained in an amount of 50% by weight or more, and particularly preferably contained in an amount of 60% by weight or more. The upper limit thereof can be optionally selected from 100% by weight or less, 90% by weight or less, 70% by weight or less, 50% by weight or less, or 40% by weight or less.

Also, as another embodiment, when the ionomer of the present invention is used as a resin material for a dicing tape, a resin having a high melting point may be formulated from the viewpoint of heat resistance. As the resin having a high melting point, polyamide and polyurethane can be used. As the polyamide, a polycondensate of dicarboxylic acid and diamine, a ring-opening polymer of lactam, etc., can be used. As the polyurethane, a reaction product of a polymer polyol and a polyisocyanate, etc., can be used. As these resins, commercially available materials such as nylon, etc., as a polyamide can be used. Also, from the viewpoint of the expanding property of the tape, other stretchable resins may be formulated as long as the effects of the present invention are not impaired. Examples of such resins may be mentioned, for example, polyolefins such as high-density polyethylene, medium-density polyethylene, low-density polyethylene, etc., ethylene-vinyl acetate copolymer, ionomer resins other than the ionomer of the present invention, for example, synthesized by high-pressure radical polymerization, ethylene-(meth)acrylic acid copolymer, ethylene-(meth)acrylic acid ester copolymer, ethylene-$\alpha$-olefin copolymer, polyester such as polyethylene terephthalate, polyethylene naphthalate, etc., polycarbonate, polyphenyl sulfide, glass, glass cloth, fluorine resin, polyvinyl chloride, polyvinylidene chloride, cellulose-based resin, silicone resin, etc. In the resin composition for a dicing tape, these other resins are preferably contained in an amount of less than 50% by mass in total when the total mass of the composition is made 100%. From the viewpoint of further reducing cutting chips by the ionomer of the present invention, it is more preferably contained in an amount of less than 40% by mass, further preferably contained in an amount of less than 30% by mass, particularly preferably contained in an amount of less than 25% by mass, and most preferably contained in an amount of less than 20% by mass.

In the resin composition for a dicing tape, the ionomer of the present invention is preferably contained in an amount of 50% by mass or more based on the total mass of the composition. From the viewpoint of further reducing

cutting chips, an amount of the ionomer of the present invention to be contained is more preferably in an amount of 60% by mass or more, further preferably in an amount of 70% by mass or more, particularly preferably in an amount of 75% by mass or more, and most preferably in an amount of 80% by mass or more.

When the content of the specific ionomer according to the invention of the present application in the resin composition is higher, it is possible to exhibit excellent physical properties, etc., due to the use of the ionomer sufficiently. From the viewpoints of other processability, physical properties to be required and cost, the formulation amount can be voluntarily selected.

Also, as a use of a modifying agent of the other resin material, the resin material may contain the ionomer of the present invention with 1% by weight or more, preferably 3% by weight or more, more preferably 10% by weight or more, and further preferably 20% by weight or more as the content in the resin composition.

• Additives

To the ionomer according to the present invention may be formulated conventionally known additives such as antioxidants, ultraviolet absorbers, lubricants, antistatic agents, anti-blocking agents, colorants, pigments, cross-linking agents, foaming agents, nucleating agents, flame retardants, conductive materials and fillers, as long as the gist of the present invention is not deviated. An amount of the additives in the resin composition is optional and preferably in the range of 0 to 20% by mass based on the total mass of the composition.

In the ionomer of the present invention, various kinds of additives and polymer components to be added or formulated as necessary are mixed using a Henschel mixer, a super mixer, a tumbler type mixer, etc., and then, heated and kneaded using a uniaxial or biaxial extruder, a kneader, etc., and it may be pelletized. The resin composition containing the ethylene-based ionomer alone or the ethylene-based ionomer can be pelletized according to a conventional method and then molded by various kinds of molding machines to obtain a desired molded product. As the molding method, various kinds of molding methods in injection molding or compression molding such as low pressure molding, injection compression molding, gas assist molding, two-color molding, in-mold molding, etc., can be adopted. The conditions for the injection molding or compression molding are not particularly limited, and conventionally known conditions can be adopted by using a conventionally known molding apparatus. Also, it can be made into a film or a sheet according to the method described later.

## 3. Molded body

Hereinafter, the film-shaped molded body by the resin or the resin composition containing the ionomer of the present invention will be described in detail together with its use. The "film-shaped molded body" referred to in the present invention generally includes what is called a film or sheet as mentioned below, or a molded product for a specific use made by using the same, and for example, there may be mentioned an ethylene-based film, a soft sheet, a dicing tape base material, a resin film for a glass interlayer film, a resin film for an encapsulating material of a solar battery, a glass laminated body such as a resin film for a glass laminated body, etc., and a gasket.

### 3-1. Film or sheet

One embodiment of the present invention relates to a film-shaped molded product molded by using the resin composition for a film containing the above-mentioned ionomer, that is, an ethylene-based film. Here, the ethylene-based film refers to a film obtained from a resin containing the so-called ethylene monomer as a main component. Another embodiment of the present invention relates to a soft sheet-shaped molded product molded by using the resin composition containing the above-mentioned ionomer.

A thickness of the film can be arbitrarily selected depending on the intended use, and is generally about 1 to 500 μm, preferably 5 to 200 μm, and further preferably 10 to 100 μm. A thickness of the sheet can be arbitrarily selected depending on the intended use, although it partially overlaps with the definition of the film, and is generally 250 μm or more, and preferably 500 μm or more. In the present specification, even if the thickness is out of the above-mentioned range, those in which the thickness is sufficiently small compared to the length in the remaining biaxial direction, and the surface having no thickness direction is exclusively applied to their use are represented by a film-shaped molded product. The molded product of the present invention can take an arbitrary shape such as a quadrilateral, a circle and a triangle at the surface portion if it is in a film-shape. It is preferably bendable. Therefore, the "film-shaped" of the invention of this application means not only a film in a narrow sense (the thickness is less than 250 μm) but also includes a sheet in a narrow sense having a thickness of 250 μm or more, in particular, a soft sheet, a tape, etc. In addition, those skilled in the art can appropriately adopt an appropriate thickness of the film or sheet depending on the uses.

However, in the film uses, in view of the point that the greatest feature of the film molded by the resin composition containing the ionomer of the present invention is that it shows high optical properties, high rigidity and high strength,

dramatic effects such as high strength, transparency, etc., of the film of the invention of this application are likely to appear remarkably particularly when the thickness of the film is thin. Therefore, it is 1 to 100 μm, preferably 1 to 50 μm, and preferably 1 to 30 μm, and depending on the formulation amount and uses, it is also possible that the thickness can be significantly reduced to 1 to 10 μm, and ultimately in the range of 1 to 5 μm.

The resin composition containing the ionomer of the present invention is molded to a film or sheet-shape, a film-shaped molded body can be obtained. As a method for producing a film or sheet, a method known to those skilled in the art can be used. In addition to molding with a general mold, there may be mentioned a press molding method, various kinds of inflation molding methods, a T-die film molding method, a calender molding method, etc. The resin composition containing the ionomer of the present invention can give a film that exerts an unexpected dramatic effect from the ionomer the copolymer alone, particularly by undergoing a film forming step in which the material is molded in a thin and long film in this way.

For example, when the inflation molding method is used, a known inflation molding machine equipped with an annular die can be used.

A temperature of the annular die is preferably set to 70 to 220°C. Also, the blown airing in the process of inflation film molding is not particularly limited, and those having a plurality of blown slits are preferable. A blow-up ratio in the process of inflation film molding is preferably in the range of 0.3 to 10, and more preferably in the range of 1 to 8. In order to increase stability of the bubble, a known bubble internal cooling device can also be used.

(Characteristics as film)

The ethylene-based film molded by using the resin composition for a film containing the ionomer of the present invention is an ethylene-based film having at least one or more of dramatic physical properties or having in combination, which could not be accomplished by the ethylene-based film using the conventional general ethylene-based resin, and are in an unreached region.

That is, it is a film having any of the following properties or in combination thereof, such as high rigidity, high strength, high transparency, high glossiness, low-temperature heat-sealing property, etc.

• High rigidity and high strength (toughness)

One embodiment of the present invention is a film which comprises an ethylene-based resin as a resin component, a film impact at -20°C when it is molded to a thickness of 30 μm and measured is 20 J/mm or more. Also, it is an ethylene-based film in which a tensile modulus of elasticity in the MD direction is 150 MPa or more.

A film impact at 23°C is preferably 30 J/mm or more, the film impact is 40 J/mm or more, and further 50 J/mm or more, and the film impact at -20°C is 20 J/mm or more, further preferably 22 J/mm or more, further 30 J/mm or more, and moreover 40 J/mm or more. On the other hand, a tensile modulus of elasticity in the MD direction is preferably 200 MPa or more, and further 250 MPa or more.

As shown in Figs. 5 and 6, the balance between rigidity and toughness is important for the film, and according to the present invention, it is possible to obtain an ethylene-based film having physical properties in a region which has never been obtained until now, in which both of them are appropriately balanced and show high values, and the balance is good even at the low temperature region of -20°C.

• High heat seal strength

One embodiment of the present invention is a film containing an ethylene-based film as a resin component, and which is an ethylene-based resin having a heat seal strength at a seal temperature of 120°C, a seal pressure of 0.2 MPa, a seal time of 1 second and a lower seal bar temperature of 60°C of 10 N/15 mm or more, when it is molded to a thickness of 30 μm and measured.

More preferably, it is an ethylene-based film having the heat seal strength at a seal temperature of 100°C, a seal pressure of 0.2 MPa, a seal time of 1 second and a lower seal bar temperature of 60°C of 6 N/15 mm or more, further preferably the heat seal strength under the above-mentioned conditions of 7 N/15 mm or more.

• High transparency

One embodiment of the present invention is an ethylene-based resin containing an ethylene-based film as a resin component, in particular, in an inflation film obtained by subjecting to inflation molding, it is an ethylene-based film having a haze of 2% or less when molded to a thickness of 30 μm. Particularly preferably, it is an ethylene-based film having a haze under the above-mentioned conditions of 1% or less, and further preferably 0.5% or less.

• High glossiness

One embodiment of the present invention is an ethylene-based film containing an ethylene-based resin as a resin component, in particular, in an inflation film obtained by subjecting to inflation molding, it is an ethylene-based film having a gloss (20°) of 120% or more when molded to a thickness of 30 μm. Particularly preferably, it is an ethylene-based film having a gloss under the above-mentioned conditions of 130% or more.
The film of the present embodiment can be used for a known use as an ethylene-based film using a conventional ethylene-based resin or ionomer, or a use of another film material in which the ethylene-based film has not been conventionally used, for example, as a film for substituting an OPP film with a single layer or by laminating with the other materials.
For example, as the film, there may be mentioned agricultural films, food films, electronic material films and industrial films, and as the film for packaging, it can be used as various kinds of packaging materials, for example, food packaging materials, medical packaging materials, electronic material packaging, industrial material packaging materials, etc. For example, it can be suitably used as a film for packaging heavy objects or contents containing liquids.
There may be mentioned other adhesive tapes or films for semiconductors, marking films, sanitary materials, protective films, sealant films, steel wire coating materials, clean room curtains, wallpaper, mats, flooring materials, flexible container inner bags, containers, shoes, battery separators, moisture permeable films, antifouling films, dustproof films, PVC substitute films, OPP substitute films, etc.

(Use as soft sheet)

The molded product of the present embodiment can be used for, as one embodiment, a known use as a sheet using a conventional ethylene-based resin or ionomer, or a use of another sheet material in which the ethylene-based resin has not been conventionally used, for example, a sheet for substituting a sheet made of silicone rubber with a single layer or by laminating with the other materials. As the uses, there may be mentioned sanitary materials, protective sheets, steel wire coating materials, mats, antifouling sheets, dustproof sheets, etc.

3-2. Resin film for glass laminated body and glass laminated body

The ionomer according to the present invention can be used for the resin film constituting at least one layer of the glass laminated body. The "glass laminated body" refers to a laminate having a multilayer structure of two or more layers, and at least one layer of which is glass. Therefore, the glass laminated body in the present invention is a structure having at least one glass layer and at least one resin layer containing the ionomer according to the present invention (hereinafter, the layer is also referred to as "ionomer resin layer"). Preferably, the layer of glass and the ionomer resin layer are in direct contact. The material used for the other layers can be freely selected by those skilled in the art depending on the use of the glass laminated body.
The resin film for a glass laminated body of the present invention is a film containing a resin for a glass laminated body containing the above-mentioned ionomer. Here, the term "film" generally refers to a structure having a thickness that can be ignored with respect to the area, and in the present invention, the term "film" is treated not only as a film (generally a thickness of 250 μm or less) or sheet in a narrow sense, but also including a plate-shaped material. In addition, regardless of the flexibility of the film, even if it is hard and has a specific shape, it is not particularly limited as long as it can form a laminated body. The surface portion of the film can take optional shape such as a quadrilateral, a circle, a triangle, etc.
The resin film for a glass laminated body may be composed of the above-mentioned ionomer alone, but, if necessary, it may contain additives such as antioxidants, ultraviolet absorbers, light stabilizers, flame retardants, dyes, pigments, plasticizers, antistatic agents, inorganic particles, fluorescent agents, heat ray absorbers, heat ray reflectors, modified silicone oils as adhesive force adjusting agents, moisture resistant agents, antiblocking agents, etc. In addition, other resins may be contained in order to provide effects such as absorption of ultraviolet rays and infrared rays, soundproofing and moisture proofing, etc., as long as the effects of the present invention are not impaired. The resin that can be used can be freely selected by those skilled in the art according to the use of the laminated body.
Also, the resin film for a glass laminated body itself may have a plurality of layers. That is, it may be a single-layer structure consisting only of the ionomer resin layer, or may be a multi-layer structure in which the above-mentioned ionomer resin layer and the other layer(s) (one layer or two or more layers) are laminated. As the other layer, although it is not always necessary, for example, an adhesive layer containing a resin exhibiting adhesiveness to glass, such as a polyvinyl acetal resin, may be provided.
The layer of glass can be freely designed its material, producing method, a thickness of the layer, etc., according to the use. When a plurality of glass layers are present in the glass laminated body, each layer may be the same material or a different material. The glass laminated body is a structure having each at least one ionomer resin layer and glass

layer as mentioned above, and the glass laminated body has a structure in which the glass layer and the ionomer resin layer may be alternately laminated. Between each glass layer and ionomer resin layer, an adhesive layer may be provided, or other layer(s) may be provided depending on the use of the glass laminated body. Also, the glass layer does not have to be the outermost layer in the laminated body, and a layer(s) made of other material(s) may be further laminated.

As a method for producing the glass laminated body, a method known to those skilled in the art can be used. A flat glass layer and an ionomer resin layer may be separately produced and then pasted, or the ionomer resin may be uniformly coated onto the glass layer and then cured.

The glass laminated body of the present invention may be combined with another plate-shaped body to provide a hollow layer between these. That is, the glass laminated body of the present invention and another plate-shaped body are faced to each other at a certain interval, and sealing the ends and, if necessary, degassing to provide a gas layer or a vacuum layer in the structure.

3-3. Resin film for glass interlayer film, and laminated glass

The resin for a glass laminated body of the present invention can be suitably used for a resin film for a glass interlayer film. That is, the resin film for a glass interlayer film is located between the two glass layers to constitute a laminated body having at least three layers. At least one surface of the resin film for a glass interlayer film is preferably in contact with the glass layer, and more preferably both surfaces. One embodiment of the present invention is a laminated glass in which a resin for a glass laminated body containing the above-mentioned ionomer is used as a resin film for a glass interlayer film. The laminated glass of the present invention can be used as laminated glass for window glass, automobile windshield, monitor glass, building material glass, security glass, etc.

The resin film for a glass interlayer film of the present invention may be a single layer structure consisting of the ionomer resin layer alone, or may be a multi-layer structure in which the above-mentioned ionomer resin layer and the other layer(s) (one layer or two or more layers) are laminated.

The above-mentioned other layer(s) is/are not particularly limited, and, for example, there may be mentioned a layer containing a thermoplastic resin other than the ionomer resin such as a polyvinyl acetal resin, an ethylene-vinyl acetate copolymer resin, an ethylene-acrylic copolymer resin, a polyurethane resin, a polyurethane resin containing sulfur element, a polyvinyl alcohol resin, a vinyl chloride resin, a polyethylene terephthalate resin, etc. Among these, a layer containing polyvinyl acetal resin is suitable since a resin film which exhibits excellent adhesiveness to glass when it is used in combination with a plasticizer, and capable of exhibiting various functions can be obtained by formulating various additives.

The laminated glass is a laminated body having a structure of at least three layers by sandwiching a resin film for a glass interlayer film (ionomer resin layer) between two glass layers. The laminated glass may have a structure in which glass layers and ionomer resin layers are alternately laminated.

3-4. Resin film for encapsulating material of solar battery and solar cell module

The resin for a glass laminated body of the present invention can be suitably used for a resin film for an encapsulating material of a solar battery.

The resin film for an encapsulating material of a solar battery of the present invention may contain additives such as light stabilizers, ultraviolet absorbers, silane coupling agents, etc., if necessary.

As the light stabilizer, it is preferable to formulate a hindered amine-based light stabilizer. The hindered amine-based light stabilizer is a material that captures radical species that are harmful to the polymer and prevents generation of new radicals. In the hindered amine-based light stabilizers, there are many kinds of compounds from low molecular weight materials to high molecular weight materials, and those conventionally known can be used without particular limitation.

As the ultraviolet absorber, there may be mentioned various types such as benzophenone type, benzotriazole type, triazine type, salicylic acid ester type, etc.

As the silane coupling agent, there may be mentioned, for example, vinyltrimethoxysilane, $\gamma$-methacryloxypropyltrimethoxysilane and 3-acryloxypropyltrimethoxysilane, which can be used mainly for the purpose of improving adhesive force to the upper protective material of the solar cell and the solar cell element.

Also, other additional optional ingredients can be formulated as long as the object of the present invention is not significantly impaired. As such optional components, there may be mentioned antioxidants, crystal nucleating agents, clearing agents, lubricants, colorants, dispersants, fillers, fluorescent whitening agents, etc., used in ordinary polyolefin-based resin materials.

When the resin film for an encapsulating material of a solar battery of the present invention is used, a solar cell module can be manufactured by fixing the solar cell element with the upper and lower protective materials. As such a

solar cell module, various types can be exemplified. For example, there may be mentioned a material having a constitution that the both sides of the solar cell element are sandwiched by sealing materials like an upper transparent protective material/sealing material/solar cell element/sealing material/lower protective material, a material having a constitution that a sealing material and an upper transparent protective material are formed on a solar cell element which is formed on an inner peripheral surface of a lower substrate protective material, a material having a constitution that a solar cell element formed on an inner peripheral surface of an upper transparent protective material, for example, a sealing material and a lower protective material are formed on a material in which an amorphous solar cell element is formed by sputtering on a fluorine resin-based transparent protective material, etc.

The resin for a glass laminated body of the present invention, a film made of it and a glass laminated body are not limited to those listed as specific examples above. Within the range which does not deviate the gist of the present invention, a person skilled in the art can appropriately design, change, improve, etc.

3-5. Dicing tape

As the material for the base material film of the dicing tape, the novel ionomer as explained before is used. The material of the base material film may be 100% of the ionomer, and a composition mixed with other resins may be used. That is, one embodiment of the present invention is a resin composition for a dicing tape base material containing the above-mentioned ionomer and other resin(s).

In the dicing step, normally, a blade that individually separates the semiconductor chips is applied deeper than the chip thickness and reaches the dicing tape layer. It is desirable that the dicing tape has high heat resistance because the frictional heat generated by the contact with the blade causes deterioration and changes in dimensions of the base material, which may adversely affect the accurate cutting of the semiconductor chip. Therefore, a resin having a high melting point may be formulated in the resin composition for dicing tapes. As the resin having the high melting point, the polyamide or polyurethane exemplified above can be used. Also, in the dicing step, it is desirable that the expanding property of the tape is good since the dicing tape is pulled in order to widen the interval between the semiconductor chips after cutting the chips. Although the ionomer of the present invention has good elongation characteristics even it is alone, other stretchable resins may be formulated as long as the effects of the present invention are not impaired. Such a resin may be mentioned, for example, various kinds of resins exemplified above.

• Layer structure

The dicing tape of the present invention has a base material film 1 and an adhesive layer 3 laminated on one of the sides of the base material film (Fig. 10). The base material film may be a single layer or a multilayer. In the case of a multilayer, for example, it becomes a film having the adhesive layer 3 on a laminated film of the base material film 1 and the base material film 2 (Fig. 11). In the dicing tape, it is preferable that a release film is temporarily adhered to the upper surface of the adhesive layer before use in order to protect the adhesive agent layer.

The base material film preferably has a layer containing the ionomer of the present invention as a main component, and the layer is so provided that it is in contact with the adhesive layer. In the base material film with a multilayer structure, a base material layer having a plurality of different layers may be formed by a multi-layer extrusion method in a one-step process, or it may be formed by a means that tapes prepared by an inflation method, a single-layer extrusion method, etc., are passed by an adhesive or heat sealing, etc. Also, in order to control adhesiveness of the base material film to the adhesive layer, if necessary, a surface roughening treatment such as a matte treatment, corona treatment, etc., may be applied.

A thickness of the base material film layer is appropriately selected depending on the use, and is preferably 200 μm or less, which is treated as a film.

• Adhesive layer

As the adhesive agent to be used for the adhesive layer, it is not particularly limited, and a radiation-curable type, heat-foaming type or pressure-sensitive type material can be used. In the present invention, an adhesive agent of a radiation-curable type such as ultraviolet rays, etc., is particularly preferable. There are various materials in the radiation-curable type, and a (meth)acrylic adhesive agent is desirably used. In addition, in order to impart radiation reactivity, a monomer(s) having a carbon-carbon double bond(s), an oligomer(s), a polymer(s) and an additive material(s) such as a photoreactive initiator(s), etc., may be prescribed and used depending on necessity. As such an adhesive(s) itself, an optional material can be used and, for example, those described in JP Hei.1-249877A, JP Hei.5-196768A, JP Sho.63-17980A, etc., can be used.

A thickness of the adhesive layer is not particularly limited and is appropriately set according to the required performance, and is preferably 5 to 30 μm.

3-6. Gasket

Gaskets molded by using ethylene-based ionomer alone or a resin composition containing the ethylene-based ionomer are excellent in balance between flexibility, elastic recovery, impact resistance and wear resistance, and can be used as a gasket for sealing parts of bottle cap closure liners and electronic devices, etc.

EXAMPLES

Hereinafter, the present invention will be explained in more detail by referring to Examples and Comparative Examples, but the present invention is not limited to these Examples. Incidentally, measurement and evaluation of physical properties in Examples and Comparative Examples were carried out by the methods shown below. Also, no data in the table means not measured, and not detected means less than detection limit.

<Measurement and evaluation>

(1) Measurement of weight average molecular weight (Mw) and molecular weight distribution parameter (Mw/Mn)

The weight average molecular weight (Mw) was obtained by gel permeation chromatography (GPC). Also, the molecular weight distribution parameter (Mw/Mn) was calculated by further obtaining a number average molecular weight (Mn) by gel permeation chromatography (GPC), and from the ratio of Mw and Mn, i.e., Mw/Mn. The measurement was carried out according to the following procedure and conditions.

1) Pretreatment of sample

When the sample contained a carboxylic acid group, for example, esterification treatment such as methyl esterification using diazomethane or trimethylsilyl (TMS) diazomethane, etc., was carried out and used for the measurement. Also, when the sample contained a carboxylic acid base, an acid treatment was carried out to modify the carboxylic acid base into a carboxylic acid group, and then, the above-mentioned esterification treatment was carried out and used for the measurement.

2) Preparation of sample solution

In 4 mL vial bottle was weighed 3 mg of the sample and 3 mL of o-dichlorobenzene, and after a lid was put thereon with a screw cap and a septum made of Teflon (Registered Trademark), the mixture was shaken at 150°C for 2 hours using SSC-7300 type high-temperature shaking device manufactured by Senshu Scientific Co., Ltd.. After completion of the shaking, it was visually confirmed that there were no insoluble components.

3) Measurement

To Alliance GPCV2000 type manufactured by Waters Corp., were connected high temperature GPC column Showdex HT-G×1 manufactured by SHOWA DENKO K.K. and Ditto HT-806M×2, and the measurement was carried out using o-dichlorobenzene as an eluent at a temperature of 145°C and a flow rate: 1.0 mL/min.

4) Calibration curve

Calibration of the column is carried out by subjecting to measurements of monodispersed polystyrenes (each 0.07 mg/ml solution of S-7300, S-3900, S-1950, S-1460, S-1010, S-565, S-152, S-66.0, S-28.5 and S-5.05) manufactured by SHOWA DENKO K.K., n-eicosane and n-tetracontane under the same conditions as mentioned above, and logarithmic values of the elution time and the molecular weight are approximated by a quaternary equation. Incidentally, for conversion of the polystyrene molecular weight ($M_{PS}$) and the polyethylene molecular weight ($M_{PE}$), the following formula was used.

$$M_{PE}=0.468\times M_{PS}$$

(2) Measurement method of amount of structural unit and number of branches per 1,000 carbons of monomers having carboxy group and/or dicarboxylic anhydride group and derived from non-cyclic monomer

The amount of the structural unit and a number of branches per 1,000 carbons of the monomers having a carboxy group and/or a dicarboxylic anhydride group and derived from the non-cyclic monomer in the copolymer of the present invention

can be obtained by using $^{13}C$-NMR spectrum. The $^{13}C$-NMR were measured according to the following method.

A sample of 200 to 300 mg was charged in an NMR sample tube having an inner diameter of 10 mmϕ with 2.4 ml of a mixed solvent of o-dichlorobenzene ($C_6H_4Cl_2$) and deuterated benzene bromide ($C_6D_5Br$) ($C_6H_4Cl_2/C_6D_5Br$=2/1 (volume ratio)) and hexamethyldisiloxane which is a standard substance of chemical shift and after replacing with nitrogen, the tube was sealed and dissolved by heating to prepare a uniform solution which was made a sample for NMR measurement.

The NMR measurement was carried out using an AV400M type NMR apparatus manufactured by Brucker Japan Co., Ltd. equipped with a 10 mmϕ cryoprobe at 120∘c.
$^{13}C$-NMR is measured with a temperature of the sample at 120∘c, a pulse angle of 90°, a pulse interval of 51.5 seconds, a number of integrations of 512 times or more and a reverse gate decoupling method.

The chemical shift is set the $^{13}C$ signal of hexamethyldisiloxane to 1.98 ppm, and the chemical shift of the signals by the other $^{13}C$ is based on this.

1) Pretreatment of sample

When the carboxylic acid base was contained in the sample, it was used for the measurement after the carboxylic acid base was modified to a carboxy group by subjecting to acid treatment. Also, when a carboxy group was contained in the sample, for example, esterification treatment such as methyl esterification, etc., using diazomethane or trimethylsilyl (TMS) diazomethane, etc., may be optionally carried out.

2) Calculation of amount of structural unit derived from monomer having carboxyl group and/or dicarboxylic anhydride group, and non-cyclic monomer <E/tBA>

The quaternary carbon signal of the t-butyl acrylate group of tBA is detected at 79.6 to 78.8 of $^{13}C$-NMR spectrum. Using these signal intensities, an amount of the comonomer was calculated from the followin equation.

$$\text{Total tBA amount (mol\%)} = I\,(tBA) \times 100 / [I\,(tBA) + I\,(E)]$$

Here, I (tBA) and I (E) are each amount represented by the following equations.

$$I\,(tBA) = I_{79.6\text{ to }78.8}$$

$$I\,(E) = (I_{180.0\text{ to }135.0} + I_{120.0\text{ to }5.0} - I\,(tBA) \times 7)/2$$

<E/tBA/nBA>

The quaternary carbon signal of the t-butyl acrylate group of tBA is detected at 79.6 to 78.8 ppm of $^{13}C$-NMR spectrum, and the methylene signal of the butoxy group of nBA is detected at 64.1 to 63.4 ppm. Using these signal intensities, an amount of the comonomer was calculated from the following equation.

$$\text{Total tBA amount (mol\%)} = I\,(tBA) \times 100 / [I\,(tBA) + I\,(nBA) + I\,(E)]$$

$$\text{Total nBA amount (mol\%)} = I\,(nBA) \times 100 / [I\,(tBA) + I\,(nBA) + I\,(E)]$$

Here, I (tBA), I (nBA) and I (E) are each amount represented by the following equations.

$$I\,(tBA) = I_{79.6\text{ to }78.8}$$

$$I\,(nBA) = I_{64.1\text{ to }63.4}$$

$$I\ (E)=(I_{180.0\ to\ 135.0}+I_{120.0\ to\ 5.0}-I\ (nBA)\times 7-I\ (tBA)\times 7)/2$$

<E/tBA/iBA>

The quaternary carbon signal of the t-butyl acrylate group of tBA is detected at 79.6 to 78.8 ppm of $^{13}$C-NMR spectrum, the methylene signal of the isobutoxy group of iBA is detected at 70.5 to 69.8 ppm and the methyl signal of the isobutoxy group is detected at 19.5 to 18.9 ppm. Using these signal intensities, an amount of the comonomer was calculated from the following equation.

$$\text{Total tBA amount (mol\%)}=I\ (tBA)\times 100/[I\ (tBA)+I\ (iBA)+I\ (E)]$$

$$\text{Total iBA amount (mol\%)}=I\ (iBA)\times 100/[I\ (tBA)+I\ (iBA)+I\ (E)]$$

Here, I (tBA), I (iBA) and I (E) are each amount represented by the following equations.

$$I\ (tBA)=I_{79.6\ to\ 78.8}$$

$$I\ (iBA)=(I_{70.5\ to\ 69.8}+I_{19.5\ to\ 18.9})/3$$

$$I\ (E)=(I_{180.0\ to\ 135.0}+I_{120.0\ to\ 5.0}-I\ (iBA)\times 7-I\ (tBA)\times 7)/2$$

<E/tBA/NB>

The quaternary carbon signal of the t-butyl acrylate group of tBA is detected at 79.6 to 78.8 ppm of $^{13}$C-NMR spectrum and methine carbon signal of NB is detected at 41.9 to 41.1 ppm. Using these signal intensities, an amount of the comonomer was calculated from the following equations.

$$\text{Total tBA amount (mol\%)}=I\ (tBA)\times 100/[I\ (tBA)+I\ (NB)+I\ (E)]$$

$$\text{Total NB amount (mol\%)}=I\ (NB)\times 100/[I\ (tBA)+I\ (NB)+I\ (E)]$$

Here, I (tBA), I (NB) and I (E) are each amount represented by the following equations.

$$I\ (tBA)=I_{79.6\ to\ 78.8}$$

$$I\ (NB)=(I_{41.9\ to\ 41.1})/2$$

$$I\ (E)=(I_{180.0\ to\ 135.0}+I_{120.0\ to\ 5.0}-I\ (NB)\times 7-I\ (tBA)\times 7)/2$$

Incidentally, when the amount of the structural unit of each monomer is indicated by "<0.1" including the inequality sign, it means that it exists as a structural unit in the copolymer, but it is an amount less than 0.1 mol% in consideration of significant figures.

3) Calculation of number of branches per 1,000 carbons

In the copolymer, there exists an isolated type in which a branch is present alone in the main chain and a composite type (a counter type in which branch and branch face each other via the main chain, a branched-branch type

in which branch exists in the branched chain, and a chained type).

The following an example of the structure of ethyl branch. Incidentally, in the example of the counter type, R represents an alkyl group.

[Formula 10]

Ethyl branch (isolated type)

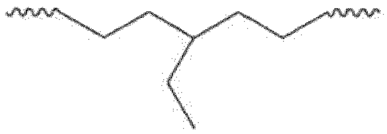

Ethyl branch (composite type)

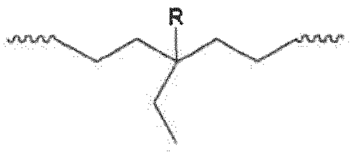

Counter type

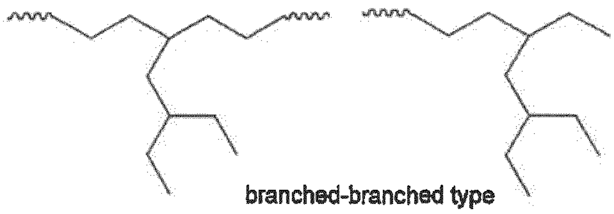

branched-branched type

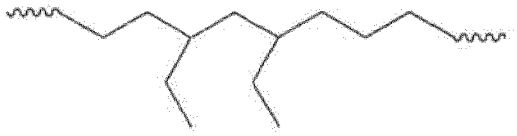

Chained type

The number of branches per 1,000 carbons is obtained by substituting any of the following I (B1), I (B2) and I (B4) in the term of I (branch) of the following formula. B1 represents a methyl branch, B2 represents an ethyl branch and B4 represents a butyl branch. The number of methyl branches is obtained by using I (B1), the number of ethyl branches is obtained by using I (B2), and the number of butyl branches is obtained by using I (B4).

$$\text{Number of branches (number/per 1,000 carbons)} = I\ (\text{branch}) \times 1000 / I\ (\text{total})$$

Here, I (total), I (B1), I (B2) and I (B4) are amounts shown by the following equations.

$$I\ (\text{total}) = I_{180.0 \text{ to } 135.0} + I_{120.0 \text{ to } 5.0}$$

$$I\ (B1) = (I_{20.0 \text{ to } 19.8} + I_{33.2 \text{ to } 33.1} + I_{37.5 \text{ to } 37.3}) / 4$$

$$I\ (B2) = I_{8.6 \text{ to } 7.6} + I_{11.8 \text{ to } 10.5}$$

$$I\ (B4) = I_{14.3 \text{ to } 13.7} - I_{32.2 \text{ to } 32.0}$$

Here, I indicates an integrated intensity, and the numerical value of subscript of I indicates a range of chemical

shift. For example, $I_{180.0\ to\ 135.0}$ indicates an integrated intensity of $^{13}C$ signal detected between 180.0 ppm and 135.0 ppm.

Attribution was based on Non-Patent Document Macromolecules 1984, 17, 1756-1761, Macromolecules 1979, 12, 41.

Incidentally, when the number of each branch is indicated by "<0.1" including the inequality sign, it means that it exists as a structural unit in the copolymer, but it is an amount less than 0.1 mol% in consideration of significant figures. Also, not detected means less than the detection limit.

(3) Melt flow rate (MFR)

MFR was under the conditions of a temperature of 190∘c and a load of 2.16 kg in accordance with Table 1-Condition 7 of JIS K-7210 (1999).

(4) Tensile modulus of elasticity

A sample of a sheet having a thickness of 1 mm was prepared by the method (cooling method A) described in JIS K7151 (1995), and a tensile test was carried out using a 5B-shaped small test piece described in JIS K7162 (1994), which was prepared by punching out the film in accordance with JIS K7161 (1994) under the conditions of a temperature of 23∘c to measure the tensile modulus of elasticity. Incidentally, the test speed was made 10 mm/min. Also, according to the similar method, a tensile fracture elongation, tensile fracture stress and tensile fracture strain were measured.

(5) Melting point and crystallinity

The melting point is shown by the peak temperature of the endothermic curve measured by a differential scanning calorimeter (DSC). For the measurement, DSC (DSC7020) manufactured by SII NanoTechnology Co., Ltd., was used, and the measurement was carried out by the following measurement conditions.

About 5.0 mg of the sample was packed in an aluminum pan, the temperature was raised to 200.c with 10∘c/min, maintained at 200∘c for 5 minutes and then lowered to 30∘c with 10∘c/min. After maintaining at 30∘c for 5 minutes, in the absorption curve when the temperature was raised again with 10∘c/min, the maximum peak temperature was made a melting point Tm, and a heat of fusion (ΔH) was obtained from a melt endothermic peak area, and the heat of fusion thereof was divided by the heat of fusion of 293 J/g of the perfect crystal of the high-density polyethylene (HDPE) to obtain the crystallinity (%).

(6) Infrared absorption spectrum

A sample is melted at 180∘c for 3 minutes, and subjected to compression molding to prepare a film having a thickness of about 50 μm. This film was analyzed by Fourier transform infrared spectroscopy to obtain infrared absorption spectrum.

Product name: FT/IR-6100 manufactured by JASCO Corporation Measurement means: Transmission method
Detector: TGS (Triglycine sulfate)
Number of integrations: 16 to 512 times
Resolution: 4.0 $cm^{-1}$
Measurement wavelength: 5000 to 500 $cm^{-1}$

(7) Measurement of phase angle δ at absolute value G*=0.1 MPa of complex modulus of elasticity

1) Preparation of sample and measurement

A sample was charged in a mold for heat press with a thickness of 1.0 mm, preheated in a hot press machine at a surface temperature of 180∘c for 5 minutes, a residual gas in a molten resin was degassed by repeating pressurization and depressurization, and the sample was further pressurized at 4.9 MPa and maintained for 5 minutes. Thereafter, it was transferred to a press machine with a surface temperature of 25∘c to cool it at a pressure of 4.9 MPa for 3 minutes, whereby a press plate comprising the sample having a thickness of about 1.0 mm was prepared. The press plate comprising the sample was processed into a circle with a diameter of 25 mm, which was made a sample, and dynamic viscoelasticity thereof was measured using an ARES type rotary rheometer manufactured by Rheometrics as a measurement device of dynamic viscoelasticity characteristics under nitrogen atmosphere and the following conditions.

- Plate: ϕ25 mm (diameter) parallel plate

- Temperature: 160◦c
- Strain amount: 10%
- Measurement angular frequency range: $1.0 \times 10^{-2}$ to $1.0 \times 10^{2}$ rad/s
- Measurement interval: 5 points/decade

A phase angle δ was plotted to the common logarithm log G* of the absolute value G* (Pa) of a complex modulus of elasticity, and the value of δ (degree) at the point corresponding to log G*=5.0 was made δ (G*=0.1 MPa). When there was no point corresponding to log G*=5.0 in the measurement points, the δ value at log G*=5.0 was obtained by linear interpolation using two points around log G*=5.0. Also, when all the measurement points were log G*<5, the δ value at log G*=5.0 was obtained by extrapolating the δ value at log G*=5.0 using the three points from the largest log G* value with the quadratic curve.

(8) Haze measurement method

Haze was measured in accordance with JIS K 7136.

Adjustment method of press plate of sample

A sample was charged in a mold for heat press with a size of 50 mm × 60 mm and a thickness of 0.5 mm, preheated in a hot press machine at a surface temperature of 180◦c for 5 minutes, and a residual gas in the sample was degassed by repeating pressurization and depressurization, and the sample was further pressurized with 4.9 MPa and maintained for 3 minutes. Thereafter, it was transferred to a press machine with a surface temperature of 25◦c, and cooled by maintaining at a pressure of 4.9 MPa for 3 minutes to prepare a press plate having a thickness of about 0.5 mm.

(9) Tensile impact strength

1) Preparation method of tensile impact strength test sample

A sample was charged in a mold for heat press with a thickness of 1 mm, preheated in a hot press machine at a surface temperature of 180°C for 5 minutes, the sample was melted and a residual gas in the sample was degassed by repeating pressurization and depressurization, and the sample was further pressurized at 4.9 MPa and maintained for 5 minutes. Thereafter, it was gradually cooled at a rate of 10°C/min in the state of applying a pressure of 4.9 MPa, and when the temperature lowered to around room temperature, then, the molded plate was taken out from the mold. The state of the obtained molded plate was adjusted under the environment of a temperature of 23±2°C and a humidity of 50±5°C for 48 hours or longer. From the press plate after state adjustment, a test piece in the shape of ASTM D1822 Type-S was punched out to make it a tensile impact strength test sample.

2) Tensile impact strength test conditions

Using the above-mentioned test piece, tensile impact strength was measured with reference to the B method of JIS K 7160-1996. Incidentally, the only difference from JIS K 7160-1996 is the shape of the test piece. With regard to other measurement conditions, etc., the test was carried out in accordance with the method of JIS K 7160-1996.

(10) Measurement of wear amount

1) Preparation method of wear test sample

A sample was charged in a mold for heat press with a size of 150 mm × 150 mm and a thickness of 1 mm, preheated in a hot press machine at a surface temperature of 180◦c for 5 minutes, the sample was melted and a residual gas in the sample was degassed by repeating pressurization and depressurization, and the sample was further pressurized at 4.9 MPa and maintained for 5 minutes. Thereafter, it was gradually cooled at a rate of 10◦c/min in the state of applying a pressure of 4.9 MPa, and when the temperature lowered to around room temperature, then, the molded plate was taken out from the mold. The state of the obtained molded plate was adjusted under the environment of a temperature of 23±2◦c and a humidity of 50±5◦c for 48 hours or longer. The press plate after state adjustment was cut out into a circle with a diameter of about 115 mm, and a hole with a diameter of about 6.5 mm was made in the center thereof to make it a wear test sample.

2) Wear test conditions

Using the above test piece, an amount of abrasion loss (mg) was measured under the following conditions in accordance with JIS K 7204-1999.

- Apparatus: Taber's abrasion resistance tester (rotary abrasion tester)_ manufactured by Toyo Seiki Seisaku-sho Ltd.
- Wear wheel: CS-17
- Number of rotation: 60 rotations/min
- Number of test: 1,000 rotation
- Load: 4.9 N

(11) Measurement of number of bending resistance

1) Preparation method of bending test sample

A sample was charged in a mold for heat press with a size of 150 mm × 150 mm and a thickness of 1 mm, preheated in a hot press machine at a surface temperature of 180∘c for 5 minutes, the sample was melted and a residual gas in the sample was degassed by repeating pressurization and depressurization, and the sample was further pressurized at 4.9 MPa and maintained for 3 minutes. Thereafter, it was gradually cooled at a rate of 10∘c/min in the state of applying a pressure of 4.9 MPa, and when the temperature lowered to around room temperature, then, the molded plate was taken out from the mold. The state of the obtained molded plate was adjusted under the environment of a temperature of 23±2∘c and a humidity of 50±5∘c for 48 hours or longer. The press plate after state adjustment was cut out into a width of 15 mm and a length of about 110 mm to make it a bending test sample.

2) Bending test conditions

Using the above-mentioned test piece, the number of bending resistance was measured under the following conditions with reference to JIS P 8115-2001. Incidentally, the only differences from JIS P 8115-2001 are the material of the test piece and load. Regarding other measurement conditions, etc., the test was carried out by a method according to JIS P 8115-2001.
Apparatus: MIT folding resistance fatigue tester_manufactured by Toyo Seiki Seisaku-sho Ltd.

- Load: 29.4N
- Bending speed: 175 times/min
- Bending angle: 135°
- Bending radius of bending clamp: 0.38 mm

(12) Dicing evaluation

1) Preparation method of test sample

Using 25 mm of a ϕ25 mm extruder and a film molding machine having a T-die with a width of200 mm, an ionomer film (base material film having a thickness of 80 μm was produced with a resin temperature of 200 degrees and a taking-over speed of 4 m/min. Also, as an adhesive, an ultraviolet curable acrylic adhesive (BEAMSET 575 (urethane acrylate-based oligomer) available from Arakawa Chemical Industries, Ltd.) was prepared. Using the above-mentioned base material film and adhesive, a material in which the ultraviolet curable acrylic adhesive is dissolved in ethyl acetate was subjected to bar-coat coating on the film to produce a dicing tape comprising the structure of a base material film (80 μm)/adhesive layer (15 μm, thickness after drying).

2) Dicing processing

To the prepared dicing tape was pasted 300 μm of a silicon wafer, and dicing processing of the silicon wafer was carried out under the following conditions.

- Sample size: 20 mm square
- Dicing apparatus: DFD6240 manufactured by Disco Corporation
- Dicing blade: ZH05-SD3000-N1-70 FF manufactured by Disco Corporation
- Rotation number: 30,000 rpm

- Cutting speed: 30 mm/s
- Cutting depth of dicing blade to base material film: 40 μm
- Number of lines: 3 lines

3) Peeling of silicon wafer

After completion of the processing, ultraviolet irradiation was sufficiently carried out from the base material film side, and then, the silicon wafer was carefully peeled off from the end portion.

4) Observation of cutting chips

The state of cutting chips was carried out with a microscope (400-fold) on the dicing line after the silicon wafer was peeled off. For three lines in total, all the cutting chips having a length of 100 μm or more were summed and the state of the cutting chips was compared.

<Preparation method of film>

(Comparative Examples I-10 to 13 and Examples 1-17 to 20)

A die with a die diameter of 75 mmϕ and a lip width of 3 mm is attached to a single-screw extruder with a diameter of 50 mmϕ, and inflation molding was carried out with a blow ratio of 2.0 under the conditions of setting temperatures of the extruder and the die to 190∘c to obtain films having a thickness of 30 μm shown in Comparative Examples 10 to 13 and Example 9. The results of subjecting to evaluation of physical properties regarding this film are shown in Table 7.

<Evaluation method of haze of film>

Haze was measured in accordance with JIS K 7136.

<Evaluation method of gloss of film>

Gloss of the film was measured with reference to JIS Z8741.

<Measurement method of tensile modulus of elasticity of film>

MD and TD directions were measured in accordance with JIS K 7127.

<Evaluation method of impact strength of film>

•Film impact at 23∘c and -20∘c

Using a film impact tester (FILM·IMPACT·TESTER: hereinafter simply referred to as "tester") manufactured by Toyo Seiki Seisaku-sho Ltd., a workload required for penetration breakdown per a unit film thickness was measured. Specifically, the test film was stored in an atmosphere of 23∘c and 50% to carry out state adjustment, then, the test film was fixed to the tester with a holder having a diameter of 50 mm, a hemispherical metal having 1/2 inch (about 13.0 mm) was hit from the inner layer surface of the test film at the penetrating portion, and the amount of the workload required for penetration breakdown was measured. At that time, the load was removed, and the maximum scale (workload) was made to be 3.0 J. Then, the value in which the workload was divided by the thickness of the film was made the film impact value at 23∘c.

In the same manner as mentioned above, using the tester equipped with a thermostatic chamber manufactured by Toyo Seiki Seisaku-sho Ltd., the workload required for penetration breakdown was measured under the conditions that the holding portion fixing the film and the film became -20∘c. At that time, the load was removed similarly as mentioned above, and the maximum scale (workload) was made to be 3.0 J. Then, the value in which the workload was divided by the thickness of the film was made the film impact value at -20∘c.

<Evaluation method of piercing strength of film>

The film was fixed and a semicircular needle with a diameter of 1.0 mm and a tip shape radius of 0.5 mm is

pierced into the film at a speed of 50 ± 0.5 mm per minute, and the maximum load (N) up to the needle penetrated was measured.

<Evaluation method of pin hole resistance of film>

The film was flexed with 3,000 times by Gelbo Flex Tester (manufactured by TESTER SANGYO CO., LTD.). Thereafter, the number of pinholes was measured.

<Heat seal strength of film>

Two sheets of inflation molding films were stacked, and after covering with a PET film having a thickness of 12 μm, the temperature of the lower seal bar was set to 60∘c and the temperature of the upper seal bar was set to 80 to 150∘c, heat sealing was carried out at a pressure of 2.0 MPa and a sealing time of 1.0 second at the time of sealing, and a 180 degree peeling strength with a width of 15 mm was measured. The measurement results are shown in Table 8 and Fig. 4.

<Glass adhesive strength>

The glass adhesive strength was measured by preparing a laminated body which was prepared by superimposing a sample processed to a press plate and a float plate glass and vacuum laminating them, and subjecting to a peeling test. The adjustment method of the press plate and the laminated body, and the measurement method of adhesion strength are explained below in order.

1) Adjustment method of press plate of sample

A sample was charged in a mold for heat press with a size of 50 mm × 60 mm and a thickness of 0.5 mm, preheated in a hot press machine at a surface temperature of 180∘c for 5 minutes, and a residual gas in the sample was degassed by repeating pressurization and depressurization, and the sample was further pressurized with 4.9 MPa and maintained for 3 minutes. Thereafter, it was transferred to a press machine with a surface temperature of 25∘c, and cooled by maintaining at a pressure of 4.9 MPa for 3 minutes to prepare a press plate having a thickness of about 0.5 mm.

2) Adjustment method of plate glass

As the glass plate, a commercially available float plate glass produced by the float method was used. In the float method, molten glass is poured onto molten tin, and the glass is cooled and solidified on the molten tin to obtain a plate glass having high smoothness. At the lower side surface of the float plate glass produced by such a float method, that is, the surface that was in contact with molten tin (hereinafter bottom surface), tin was present and the surface is characterized in that an amount of the silanol group is larger as compared to that of the surface that was not in contact with molten tine (hereinafter top surface). Also, the silanol group of the glass has a property of adsorbing a hydrocarbon substance existing in the atmosphere, so that it is desirable to wash the plate glass used for the adhesion test immediately before the test. Based on the above, in the present invention, the float plate glass having a thickness of 2.5 mm was washed with a neutral detergent before the test, dried at 70∘c and cut to a size of 50 mm × 60 mm, and it was adhered using the top surface to the press plate of the sample.

3) Producing method of laminated body of sample and plate glass

Using a vacuum laminator (manufactured by NPC Incorporated), the above-mentioned press plate and the top surface of the above-mentioned plate glass were pasted together under the conditions of a heating temperature of 180∘c and a heating time of 10 minutes, and then, it was sandwiched between two sheets of aluminum plates and quenched for 3 minutes to obtain two kinds of double layered laminated bodies. A slit with a width of 10 mm was formed into the sheet portion of this laminated body to prepare a test piece.

4) Measurement method of adhesion strength of laminated body

The laminated body obtained by the producing method of the laminated body was made a test piece, and using a Tensilon (manufactured by TOYO SEIKI CO., LTD.) tensile tester, peeling was carried out with a take-up speed of 50 mm/min, and the maximum stress was obtained as the adhesion strength (N/10 mm).

<Synthesis of metal complex>

(1) Synthesis of B-27DM/Ni complex

As the B-27DM/Ni complex, in accordance with Synthetic Example 4 described in WO 2010/050256, the following 2-bis(2,6-dimethoxyphenyl)phosphano-6-pentafluorophenylphenol ligand (B-27DM) was used. In accordance with Example 1 of WO 2010/050256, a nickel complex (B-27DM/Ni) in which B-27DM and $Ni(COD)_2$ were reacted with 1:1 was synthesized using bis(1,5-cyclooctadiene)nickel(0) (which is referred to as $Ni(COD)_2$).

[Formula 11]

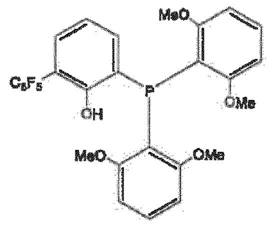

B-27DM

(2) Synthesis of B-423/Ni complex

1) Synthesis of ligand B-423: 2-bis(2,6-dimethoxyphenyl)phosphano-6-(2,6-diisopropylphenyl)phenol

[Formula 12]

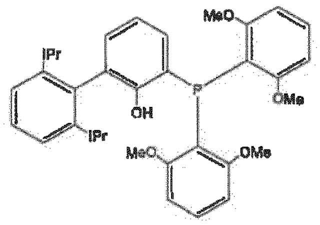

B-423

A ligand B-423 was synthesized according to the following scheme.

Incidentally, in the following chemical formulae, -OMOM represents a methoxymethoxy group ($-OCH_2OCH_3$).

[Formula 13]

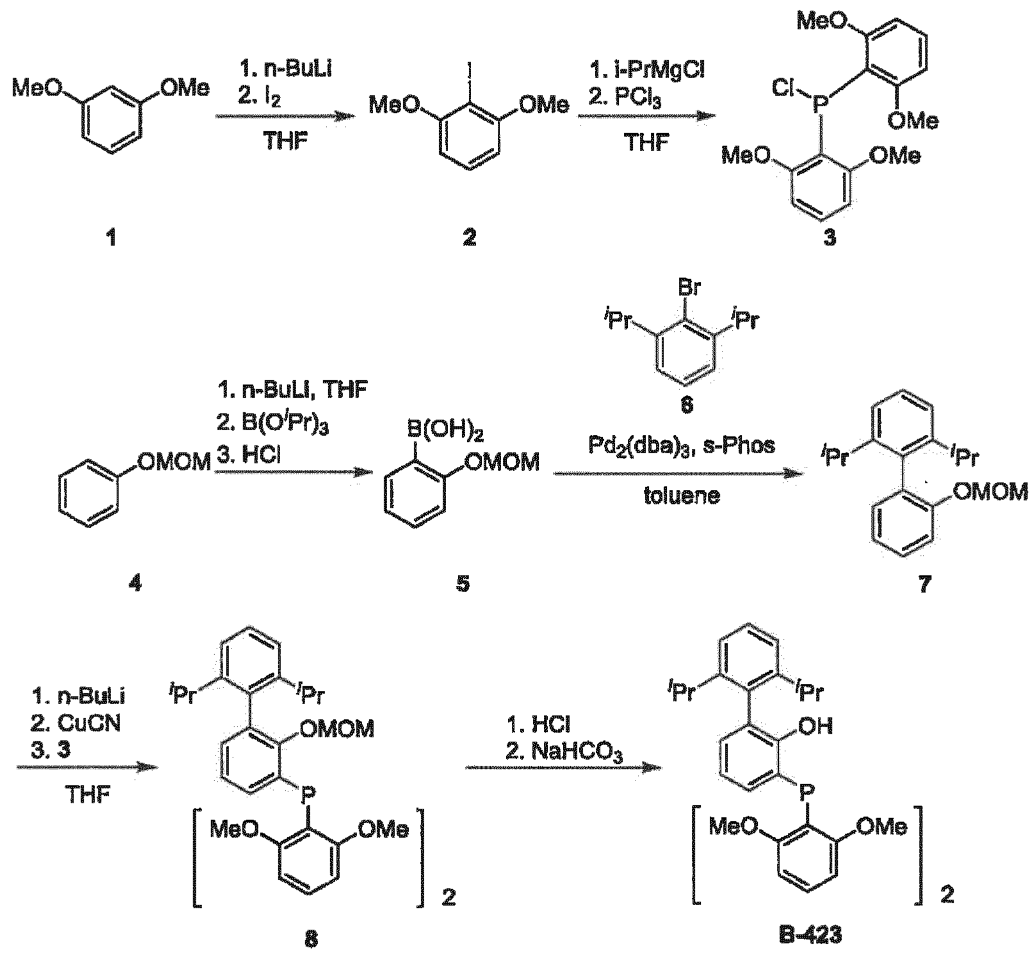


(i) Synthesis of Compound 2

It was synthesized in accordance with Patent Document WO2010/050256.

(ii) Synthesis of Compound 3

i-PrMgCl (2M, 5.25 ml) was added to a THF (5.0 ml) solution of Compound 2 (2.64 g, 10.0 mmol) at 0°c. After the reaction mixture was stirred at 25°c for I hour, $PCl_3$ (618 mg, 4.50 mmol) was added thereto at -78°c.

A temperature of the reaction mixture was elevated to 25°c over 3 hours to obtain a yellow suspension. The solvent was distilled off under reduced pressure to obtain a yellow solid. This mixture was used in the next reaction without purification.

(iii) Synthesis of Compound 5

n-BuLi (2.5M, 96 ml) was added to a THF (250 ml) solution of Compound 4 (30 g, 220 mmol) at 0°c, and the mixture was stirred at 30°c for 1 hour. $B(O^iPr)_3$ (123 g, 651 mmol) was added to this solution at -78°c, and the mixture was stirred at 30°c for 2 hours to obtain a white suspension. Hydrochloric acid (1M) was added thereto to adjust the pH to 6 to 7, and the organic layer was concentrated to obtain a mixture. The obtained mixture was washed with petroleum ether (80 ml) to obtain 26 g of Compound 5.

(iv) Synthesis of Compound 7

Compound 5 (5.00 g, 27.5 mmol), Compound 6 (4.42 g, 18.3 mmol), $Pd_2(dba)_3$ (168 mg, 0.183 mmol), s-Phos(2-dicyclohexylphosphino-2',6'-dimethoxybiphenyl) (376 mg, 0.916 mmol) and $K_3PO_4$ (7.35 g, 34.6 mmol) were weighed into a reaction vessel, and toluene (40 ml) was added thereto. This solution was reacted at 110°c for 12 hours

to obtain a black suspension. $H_2O$ (50 ml) was added thereto and the mixture was extracted with EtOAc (55 ml×3). The organic layer was washed with saline (20 ml) and dehydrated with $Na_2SO_4$. The organic layer was filtered and after the solvent was distilled off under reduced pressure, the residue was purified by silica gel column to obtain 1.3 g of an oily substance.

(v) Synthesis of Compound 8

n-BuLi (2.5M, 9.15 ml) was added dropwise to a THF (40 ml) solution of Compound 7 (6.5 g, 22 mmol) at 0◦c, and the temperature of the mixture was raised to 30◦c and stirred for 1 hour. This reaction solution was cooled to -78◦c and CuCN (2.1 g, 23 mmol) was added thereto, and the mixture was stirred at 30◦c for 1 hour. The reaction solution was cooled to -78◦c, a THF (40 ml) solution of Compound 3 (6.7 g, 20 mmol) was added thereto, and the mixture was stirred at 30◦c for 12 hours to obtain a white suspension. When $H_2O$ (50 ml) was added to the suspension, a white precipitate was generated. The white precipitate was recovered by filtration, dissolved in dichloromethane (20 ml), and aqueous ammonia (80 ml) was added thereto and stirred for 3 hours. The product was extracted with dichloromethane (50 mlx3) and dehydrated with $Na_2SO_4$, and then, concentrated to obtain a yellow oily substance. This oily substance was purified by silica gel column to obtain 2.9 g of Compound 8.

(vi) Synthesis of Compound B-423

HCl/EtOAc (4M, 50 ml) was added to a dichloromethane (20 ml) solution of Compound 8 (2.9 g, 4.8 mmol) at 0◦c, and the mixture was stirred at 30◦c for 2 hours to obtain a pale yellowish solution. The solvent was distilled off under reduced pressure, and then, dichloromethane (50 ml) was added thereto. The mixture was washed with a saturated $NaHCO_3$ aqueous solution (100 ml) to obtain 2.5 g of B-423.

The NMR attribution values of the obtained ligand B-423 are shown below. [NMR]

$^1$H NMR ($CDCl_3$, δ, ppm): 7.49 (t, 1H), 7.33 (t, 1H), 7.22 (m, 4H), 6.93 (d, 1H), 6.81 (t, 1H), 6.49 (dd, 4H), 6.46 (br, 1H), 3.56 (s, 12H), 2.63 (sept, 2H), 1.05 (d, 6H), 1.04 (d, 6H);
$^{31}$P NMR($CDCl_3$, δ, ppm): -61.6(s) .

2) Synthesis of Compound B-423/Ni complex

Regarding B-423/Ni complex, by using B-423 ligand and bisacetylacetonato nickel(II) (which is referred to as $Ni(acac)_2$), a nickel complex (B-423/Ni) in which B-423 and Ni(acac)2 reacted with 1:1 was synthesized in accordance with Example 1 of WO 2010/050256.

<(Production Example 1 to Production Example 10): Production of ionomer base resin precursor>

Using a transition metal complex (B-27DM/Ni complex or B-423/Ni complex), an ethylene/tBu acrylate/acrylic acid ester copolymer, and an ethylene/tBu acrylate/-norbornene copolymer were produced. With reference to Production Example 1 or Production Example 3 described in JP 2016-79408A, production of the copolymer was carried out, and optionally changed production conditions such as a kind of a metal catalyst, an amount of the metal catalyst, an amount of trioctyl aluminum (TNOA), an amount of toluene, a kind of comonomer, an amount of comonomer, a partial pressure of ethylene, a polymerization temperature, a polymerization time, etc., are shown in Table 1, and the physical properties of the obtained ionomer base resin precursors are shown in Table 2. Provided that no data in the table means not measured, and not detected means less than the detection limit.

[Table 1]

| Production example No | Kind of metal complex | Amount of metal complex | Trioctyl aluminum (TNOA) | Toluene | Comonomer 1 | Comonomer 2 | Comonomer 1 | Comonomer 2 | Polymerization conditions | | | Yield | Catalyst efficiency |
|---|---|---|---|---|---|---|---|---|---|---|---|---|---|
| | | | | | | | Concentration | Concentration | Ethylene partial pressure | Temperature | Time | | |
| | | mmol | mmol | L | | | mmol/L | mmol/L | MPa | °C | min | q | q/mol |
| Production example 1 | B-27DM/Ni | 1000 | 225 | 1000 | t-Butyl acrylate | 2-Norbornene | 230 | 210 | 0.8 | 85 | 330 | 117000 | 1.2E+05 |
| Production example 2 | B-423/Ni | 1460 | 3573 | 1000 | t-Butyl acrylate | i-Butyl acrylate | 147 | 66 | 0.8 | 95 | 510 | 75000 | 5.1E+04 |
| Production example 3 | B-27DM/Ni | 0.5 | 0.15 | 1 | t-Butyl acrylate | 2-Norbornene | 67 | 51 | 0.8 | 80 | 35 | 15 | 3.0E+04 |
| Production example 4 | B-27DM/Ni | 0.6 | 0.15 | 1 | t-Butyl acrylate | 2-Norbornene | 67 | 138 | 0.8 | 80 | 32 | 13 | 2.2E+04 |
| Production example 5 | B-27DM/Ni | 0.79 | 0.15 | 1 | t-Butyl acrylate | 2-Norbornene | 48 | 100 | 0.8 | 90 | 354 | 102 | 1.3E+05 |
| Production example 6 | B-27DM/Ni | 0.8 | 0.15 | 1 | t-Butyl acrylate | 2-Norbornene | 49 | 85 | 0.8 | 90 | 111 | 64 | 8.0E+04 |
| Production example 7 | B-27DM/Ni | 0.48 | 0.15 | 1 | t-Butyl acrylate | i-Butyl acrylate | 200 | 60 | 3.0 | 90 | 92 | 62 | 1.3E+05 |
| Production example **8** | B-27DM/Ni | 0.48 | 0.15 | 1 | t-Butyl acrylate | i-Butyl acrylate | 241 | 115 | 3.0 | 80 | 180 | 60 | 1.2E+05 |
| Production example 9 | B-27DM/Ni | 0.36 | 0.15 | 1 | t-Butyl acrylate | i-Butyl acrylate | 241 | 72 | 3.0 | 90 | 88 | 58 | 1.6E+05 |
| Production example 10 | B-423/Ni | 550 | 136 | 1000 | t-Butyl acrylate | - | 135 | - | 0.8 | 102 | 200 | 93000 | 1.7E+05 |

[Table 2]

| Production example No | Comonomer 1 | Comonomer 2 | Comonomer 1 | Comonomer 2 | Melting point | Weight average molecular weight | Molecular weight distribution | Methyl branch amount | Ethyl branch amount | Butyl branch amount |
|---|---|---|---|---|---|---|---|---|---|---|
| | | | Content | Content | Tm | | | | | |
| | | | mol% | mol% | °C | $Mw*10^{-4}$ | Mw/Mn | Number/-1,000C | Number/-1,000C | Number/-1,000C |
| Production example 1 | t-Butyl acrylate | 2-Norbornene | 5.1 | 2.9 | 80.5 | 3.8 | 2.3 | 0.5 | not detected | not detected |
| Production example 2 | t-Butyl acrylate | i-Butyl acrylate | 5.4 | 2.3 | 80.5 | 2.7 | 2.3 | not detected | not detected | not detected |
| Prod uction example 3 | t-Butyl acrylate | 2-Norbornene | 6.1 | 1.2 | 86.6 | 2.5 | 1.7 | 0.4 | not detected | not detected |
| Production example 4 | t-Butyl acrylate | 2-Norbornene | 5.9 | 2.7 | 77.4 | 2.5 | 1.7 | no data | no data | no data |
| Production example 5 | t-Butyl acrylate | 2-Norbornene | 2.9 | 2.8 | 92.7 | 4.2 | 2.0 | 0.8 | not detected | not detected |
| Production example 6 | t-Butyl acrylate | 2-Norbornene | 4.2 | 2.5 | 89.1 | 3.2 | 2.0 | no data | no data | no data |
| Prod uction example 7 | t-Butyl acrylate | i-Butyl acrylate | 5.3 | 2.7 | 82.2 | 2.9 | 1.9 | no data | no data | no data |
| Production example 8 | t-Butyl acrylate | i-Butyl acrylate | 5.2 | 3.6 | 78.2 | 3.9 | 2.0 | 0.2 | not detected | not detected |
| Production example 9 | t-Butyl acrylate | i-Butyl acrylate | 5.4 | 1.9 | 86.0 | 3.1 | 2.2 | 0.5 | not detected | not detected |
| Prod uction example 10 | t-Butyl acrylate | - | 3.5 | - | 103.6 | 4.4 | 2 | 1.1 | not detected | not detected |

<(Resin 1, Resin 2 and Resin 10): Production of ionomer base resin-1>

In Example I, ionomer base resins were produced by the following method regarding Resins 1,2 and 10. In an autoclave made of SUS316L equipped with a stirring blade having an internal volume of 1.6 $m^3$, 100 kg of any one kind of the obtained copolymers among Production Example 1, Production Example 2 and Production Example 10, 2.0 kg of para-toluenesulfonic acid monohydrate and 173 L of toluene were charged, and the mixture was stirred at 105∘c for 4 hours. After charging 173 L of ion-exchange water, the mixture was stirred and then allowed to stand, and the aqueous layer was drawn out. Thereafter, charging and drawn out of the ion-exchange water were carried out repeatedly until the pH of the drawn out aqueous layer became 5 or more. The remaining solution was put into a twin-screw extruder (L/D=45.5) equipped with a 42 mmϕ vent device, and the solvent was distilled off by drawing the vent into a vacuum. Further, the resin extruded continuously in the form of strands from the die at the tip of the extruder was cooled in water and cut with a cutter to obtain resin pellets.

In the IR spectrum of the obtained resin, disappearance of the peak near 850 $cm^{-1}$ derived from the tBu group and decrease of the peak near 1730 $cm^{-1}$ derived from the carbonyl group of the ester, and increase of the peak near 1700 $cm^{-1}$ derived from the carbonyl group of the carboxylic acid (dimer) were observed. According to this, decomposition of the t-Bu ester and formation of the carboxylic acid were confirmed to obtain ionomer base Resin 1, Resin 2 and Resin 10. The physical properties of the obtained resin were shown in Table 3. Provided that no data in the table means not measured, and not detected means less than the detection limit.

<(Resin 3 to Resin 9): Production of ionomer base resin-2>

In Example I, ionomer base resins were produced by the following method regarding Resins 3 to 9. In a separable flask having a volume of 500 ml were charged 40 g of the copolymer obtained in Production Example 3 to Production Example 9, 0.8 g of para-toluenesulfonic acid monohydrate and 185 ml of toluene, and the mixture was stirred at 105∘c for 4 hours. After charging 185 ml of ion-exchange water, the mixture was stirred and then allowed to stand, and the aqueous layer was drawn out. Thereafter, charging and drawn out of the ion-exchange water were carried out repeatedly until the pH of the drawn out aqueous layer became 5 or more. From the remaining solution, the solvent was distilled off under reduced pressure, and the residue was dried until it became constant weight.

In the IR spectrum of the obtained resin, disappearance of the peak near 850 $cm^{-1}$ derived from the tBu group and decrease of the peak near 1730 $cm^{-1}$ derived from the carbonyl group of the ester, and increase of the peak near 1700 $cm^{-1}$ derived from the carbonyl group of the carboxylic acid (dimer) were observed.
According to this, decomposition of the t-Bu ester and formation of the carboxylic acid were confirmed to obtain ionomer base Resin 3 to Resin 9. The physical properties of the obtained resin were shown in Table 3. In the following Table, "AA", "NB", "iBA" and "nBA" are each abbreviations of "acrylic acid", "norbomene", "isobutyl acrylate" and "n-butyl acrylate" as the structural units, respectively. Provided that no data in the table means not measured, and not detected means less than the detection limit.

[Table 3]

| Base resin No. | Phase angle 6 | Tm | AA | NB | iBA | nBA | Methyl branch amount | Ethyl branch amount | Butyl branch amount |
|---|---|---|---|---|---|---|---|---|---|
| | °(G*= 0.1MPa) | °C | mol% | mol% | mol% | mol% | Number/-1,000C | Number/-1,000C | Number/-1,000C |
| Resin 1 | 62 | 84 | 5.1 | 2.9 | | | 0.5 | Not detected | Not detected |
| Resin 2 | 64 | 88 | 5.4 | | 2.3 | | Not detected | Not detected | Not detected |
| Resin 3 | 64 | 90.5 | 6.1 | 1.2 | | | 0.4 | No data | No data |
| Resin 4 | 67 | 82.5 | 5.9 | 2.7 | | | No data | No data | No data |
| Resin 5 | 51 | 94.5 | 2.9 | 2.8 | | | 0.8 | No data | No data |
| Resin 6 | 64 | 93 | 4.2 | 2.5 | | | No data | No data | No data |
| Resin 7 | 70 | 87 | 5.3 | | | 2.7 | No data | No data | No data |

(continued)

| Base resin No. | Phase angle 6 | Tm | AA | NB | iBA | nBA | Methyl branch amount | Ethyl branch amount | Butyl branch amount |
|---|---|---|---|---|---|---|---|---|---|
| | °(G*= 0.1MPa) | °C | mol% | mol% | mol% | mol% | Number/-1,000C | Number/-1,000C | Number/-1,000C |
| Resin 8 | 58 | 83.2 | 5.2 | | | 3.6 | 0.2 | Not detected | Not detected |
| Resin 9 | 61 | 89.8 | 5.4 | | | 1.9 | 0.5 | Not detected | Not detected |
| Resin 10 | 64 | 108 | 3.5 | | | | 1.1 | Not detected | Not detected |

<Production of ionomer-1>

1) Preparation of Na ion supply source

To a Laboplast Mill: roller mixer Type R60 manufactured by TOYO SEIKI CO., LTD., equipped with a small size mixer having a volume of 60 ml were charged 22 g of an ethylene/methacrylic acid (MAA) copolymer (available from Dow-Mitsui Chemicals Co., Ltd., brand: Nucrel N1050H) and 18 g of sodium carbonate, and the mixture was kneaded at 180◦c and 40 rpm for 3 minutes to prepare a Na ion supply source.

2) Preparation of Zn ion supply source

To a Laboplast Mill: roller mixer Type R60 manufactured by TOYO SEIKI CO., LTD., equipped with a small size mixer having a volume of 60 ml were charged 21.8 g of an ethylene/methacrylic acid (MAA) copolymer (available from Dow-Mitsui Chemicals Co., Ltd., brand: Nucrel N1050H), 18 g of zinc oxide and 0.2 g of zinc stearate, and the mixture was kneaded at 180◦c and 40 rpm for 3 minutes to prepare a Zn ion supply source.

3) Preparation of ionomer

To a Laboplast Mill: roller mixer Type R60 manufactured by TOYO SEIKI CO., LTD., equipped with a small size mixer having a volume of 60 ml was charged 40 g of the resin, and the mixture was kneaded at 160◦c and 40 rpm for 3 minutes to dissolve the same. Thereafter, the Na ion supply source or Zn ion supply source was charged therein so that the mixture became a desired degree of neutralization, and the mixture was kneaded at 250◦c and 40 rpm for 5 minutes.

In the IR spectrum of the obtained resin, the peak near 1,700 $cm^{-1}$ derived from a carbonyl group of the carboxylic acid (dimer) decreased and the peak near 1,560 $cm^{-1}$ derived from a carbonyl group of the carboxylic acid base increased. It was confirmed that an ionomer having a desired degree of neutralization could be prepared from the decreased amount of the peak near 1,700 $cm^{-1}$ derived from a carbonyl group of the carboxylic acid (dimer).

<Production of ionomer-2>

1) Preparation of Na ion supply source

To a twin-screw extruder (L/D=64) equipped with a 26 mmϕ vent device manufactured by Toshiba Machine Co., Ltd., were continuously charged so as to have a formulation ratio of 55 wt% of ethylene/methacrylic acid (MAA) copolymer (available from Dow-Mitsui Chemicals Co., Ltd., brand: Nucrel N1050H) and 45 wt% of sodium carbonate, and extrusion was carried out under the kneading conditions of a barrel set temperature of 150◦c and a screw rotation number of 150 rpm while removing the gas and water generated during the kneading from the vent portion with a vacuum pump. Further, the resin extruded continuously in the form of strands from the die at the tip of the extruder was cooled in water and cut with a cutter to obtain resin pellets of the Na ion supply source.

2) Preparation of Zn ion supply source

To a twin-screw extruder (L/D=64) equipped with a 26 mmϕ vent device manufactured by Toshiba Machine Co., Ltd., were continuously charged so as to have a formulation ratio of 55 wt% of ethylene/methacrylic acid (MAA) copolymer (available from Dow-Mitsui Chemicals Co., Ltd., brand: Nucrel N1050H) and 45 wt% of sodium carbonate, and extrusion was carried out under the kneading conditions of a barrel set temperature of 150∘c and a screw rotation number of 150 rpm while removing the gas and water generated during the kneading from the vent portion with a vacuum pump. Further, the resin extruded continuously in the form of strands from the die at the tip of the extruder was cooled in water and cut with a cutter to obtain resin pellets of the Na ion supply source.

3): Preparation of ionomer

To a twin-screw extruder (L/D=64) equipped with a 26 mmϕ vent device manufactured by Toshiba Machine Co., Ltd., were continuously charged the resin and the Na ion supply source or the Zn ion supply source with a formulation ratio so as to be a predetermined degree of neutralization, and extrusion was carried out under the kneading conditions of a barrel set temperature of 200∘c and a screw rotation number of 150 rpm while injecting water with a ratio of 4 parts based on 100 parts of the charged resin amount and while removing the gas and water generated during the kneading from the vent portion with a vacuum pump. Further, the resin extruded continuously in the form of strands from the die at the tip of the extruder was cooled in water and cut with a cutter to obtain resin pellets.

In the IR spectrum of the obtained resin, the peak near 1,700 $cm^{-1}$ derived from a carbonyl group of the carboxylic acid (dimer) decreased and the peak near 1,560 $cm^{-1}$ derived from a carbonyl group of the carboxylic acid base increased. It was confirmed that an ionomer having a desired degree of neutralization could be prepared from the decreased amount of the peak near 1,700 $cm^{-1}$ derived from a carbonyl group of the carboxylic acid (dimer).

The raw materials used as Comparative Examples will be explained.

<Existing polyethylene>

(PE-1) Ethylene·butene-1 copolymer, available from Nippon Polyurethane Industry Co., Ltd., trade name Novatec HD, Ziegler-Natta high-density polyethylene, ethylene ·α-olefin copolymer, grade name: HS430P, MFR=0.8 g/10 min, density=0.955g/$cm^3$

(PE-2) Ethylene·propylene ·1-hexene copolymer, available from Nippon Polyurethane Industry Co., Ltd., trade name Kernel, metallocene-based linear low-density polyethylene, ethylene·α-olefin copolymer, grade name: KF360T, MFR=3.5 g/10 min, density=0.898g/$cm^3$

(PE-3) Ethylene·propylene·1-hexene copolymer, available from Nippon Polyurethane Industry Co., Ltd., trade name Kernel, metallocene-based linear low-density polyethylene, ethylene·α-olefin copolymer, grade name: KF560T, MFR=16.5 g/10 min, density=0.898g/$cm^3$

(PE-4) Available from Nippon Polyurethane Industry Co., Ltd., trade name Novatec LD, high-pressure radical method low-density polyethylene, grade name: LF405M, MFR=2.0 g/10 min, density=0.919g/$cm^3$

(PE-5) Ethylene·1-butene copolymer, available from Nippon Polyurethane Industry Co., Ltd., trade name Novatec LL, Ziegler-Natta linear low-density polyethylene, grade name: UF421, MFR=0.9 g/10 min, density=0.926g/$cm^3$

(PE-6) Ethylene·1-hexene copolymer, available from Nippon Polyurethane Industry Co., Ltd., trade name HARMOREX, metallocene-based linear low-density polyethylene, ethylene·α-olefin copolymer, grade name: NF324A, MFR=1.0 g/10 min, density=0.906g/$cm^3$

(PE-7) Ethylene·propylene·1-hexene copolymer, available from Nippon Polyurethane Industry Co., Ltd., trade name Kernel, metallocene-based linear low-density polyethylene, ethylene·α-olefin copolymer, grade name: KS240T, MFR=2.2 g/10 min, density=0.880g/$cm^3$

(PE-8) Ethylene·1-butene copolymer, available from Nippon Polyurethane Industry Co., Ltd., trade name Novatec LL, Ziegler-Natta linear low-density polyethylene, grade name: UF641, MFR=2.1 g/10 min, density=0.927g/$cm^3$

(PE-9) Ethylene·1-hexene copolymer, available from Nippon Polyurethane Industry Co., Ltd., trade name HARMOREX, metallocene-based linear low-density polyethylene, ethylene·α-otefin copolymer, grade name: NF444N, MFR=2.0 g/10 min, density=0.912g/$cm^3$

<E/MAA-based binary ionomers (HIM-1 to 3)>

Ionomer resins (available from Dow-Mitsui Chemicals Co., Ltd., brand: HIMILAN HIM1605 (HIM-1), HIM1707

(HIM-2) and HIM1555 (HIM-3)), which are copolymers of ethylene, methacrylic acid and Na methacrylate and produced by the high-pressure radical method process were used as reference ionomers. These ionomers have a phase angle δ of 46 to 49° and have a structure containing long-chain branches excessively.

<E/MAA-based binary ionomers (HIM-4 and 5)>

Ionomer resins (available from Dow-Mitsui Chemicals Co., Ltd., brand: HIMILAN HIM1652 (HIM-4) and HIM1706 (HIM-5)), which are copolymers of ethylene, methacrylic acid and Zn methacrylate and produced by the high-pressure radical method process were used as reference ionomers. These ionomers have a phase angle δ of 41° or 45°and have a structure containing long-chain branches excessively.

[Examples I-1 to 20: Preparation of press sheet or inflation film]

In Examples I-1, I-3 to 6, I-8 to I-14 and I-16, using the ionomers obtained by the method described in the above-mentioned Production of ionomer-1, press sheets were prepared. In Examples I-2, I-7, I-15 and I-17 to 20, using the ionomers obtained by the method described in the above-mentioned Production of ionomer-2, press sheets or inflation films were prepared. Physical properties of the press sheets of the ionomers obtained in Example I are shown in Table 5 and Table 6. Also, physical properties (Examples I-17 to 20) of the inflation films using the ionomers obtained in Examples I-2, I-7, I-15 and I-17 are shown in Table 7. Further, the results of the heat seal test of the inflation films are shown in Table 8.

[Comparative Examples I-1 to 15: Preparation of press sheet or inflation film]

PE 1 to 4 and HIM 1 to 5 were similarly used to prepare press sheets. Physical properties of these press sheets are shown in Table 4. Also, PE-5 to 9 and HIM-1 were similarly used as in Examples to prepare inflation films. Physical properties of these inflation films are shown in Table 7. Also, the results of the heat seal test of the inflation films are shown in Table 8.

[Table 4]

| Item | Unit | Comparative Example I-1 | Comparative Example I-2 | Comparative Example I-3 | Comparative Example I-4 | Comparative Example I-5 | Comparative Example I-6 | Comparative Example I-7 | Comparative Example I-8 | Comparative Example I-9 |
|---|---|---|---|---|---|---|---|---|---|---|
| No | | PE-1 | PE-2 | PE-3 | PE-4 | HIM-1 | HIM-2 | HIM-3 | HIM-4 | HIM-5 |
| Kind of resin | | HDPE | m-LL | m-LL | LOPE | Ionomer | Ionomer | Ionomer | Ionomer | Ionomer |
| Characteristic of structure | | Linear | Linear | Linear | Branched | Branched | Branched | Branched | Branched | Branched |
| Monomer 1 | | - | - | - | - | MAA | MAA | MAA | MAA | MAA |
| Monomer 2 | | - | - | - | - | - | - | - | - | - |
| Na+/(M)AA or 2×Zn2+/(M)AA | mol/mol | - | - | - | - | 0.30 | 0.54 | 0.38 | 0.17 | 0.59 |
| Kind of metal | - | - | - | - | - | Na | Na | Na | Zn | Zn |
| | | | | | | | | | | |
| Phase angle δ | *(G*=0.1MPa) | 57 | 66 | 66 | 37 | 46 | 47 | 49 | 41 | 45 |
| Melting point (Tm) | °C | 132 | 88 | 86 | 108 | 91 | 86 | 95 | 97 | 87 |
| MFR | dg/min | 0.8 | 3.5 | 16.5 | 2.0 | 2.8 | 0.9 | 10 | 5.5 | 0.9 |
| Haze | % (t=0.5mm) | 90 | 27 | 29 | 81 | 1.8 | 19 | 20 | 21 | 18 |
| Tensile break strength | MPa | 36 | NB | NB | 16 | 40 | 40 | 27 | 28 | 41 |
| Tensile fracture elongation | % | 734 | 521 | 647 | 441 | 350 | 277 | 357 | 445 | 272 |
| Tensile modulus of elasticity | MPa | 763 | 37 | 34 | 111 | 250 | 233 | 180 | 126 | 199 |
| Tensile impact strength | kJ/m2 | 203 | 2632 | 1541 | 242 | 623 | 707 | 428 | 508 | 673 |

(continued)

| Item | Unit | Comparative Example I-1 | Comparative Example I-2 | Comparative Example I-3 | Comparative Example I-4 | Comparative Example I-5 | Comparative Example I-6 | Comparative Example I-7 | Comparative Example I-8 | Comparative Example I-9 |
|---|---|---|---|---|---|---|---|---|---|---|
| Number of bending times | times | 2074 | >40000 | >40000 | 679 | 788 | 347 | 318 | 2048 | 280 |
| Wear amount | mg | 2.5 | 12.1 | 14.7 | 16,0 | 10 | 5 | 16 | 18 | 5 |

[Table 5]

| Item | Unit | Example I-1 | Example I-2 | Example I-3 | Example I-4 | Example I-5 | Example I-6 | Example I-7 | Example I-8 |
|---|---|---|---|---|---|---|---|---|---|
| | | I-1 | I-2 | I-3 | I-4 | I-5 | I-6 | I-7 | I-8 |
| Kind of resin | | Ionomer | Ionomer | Ionomer | Ionomer | Ionomer | Ionomer | Ionomer | Ionomer |
| Ionomer base resin | | Resin 1 | Resin 1 | Resin 1 | Resin 1 | Resin 1 | Resin 1 | Resin 1 | Resin 1 |
| Characteristic of structure | | Linear | Linear | Linear | Linear | Linear | Linear | Linear | Linear |
| Monomer 1 | | AA | AA | AA | AA | AA | AA | AA | AA |
| Monomer 2 | | NB | NB | NB | NB | iBA | iBA | iBA | iBA |
| Na+/ (M)AA or 2×Zn2+/ (M)AA | mol/mol | 0.2 | 0.3 | 0.45 | 0.6 | 0.2 | 0.3 | 0.45 | 0.6 |
| Kind of metal | | Na | Na | Na | Na | Na | Na | Na | Na |
| | | | | | | | | | |
| Phase angle δ | *(G*=0.1MPa) | 63 | 61 | 61 | 58 | 57 | 57 | 55 | 54 |
| Melting point | °C | 86 | 85 | 82 | 81 | 88 | 88 | 86 | 84 |
| | dg/min | 2.8 | 1.3 | 0.5 | 0.1 | 19.0 | 10.5 | 3.5 | 1.6 |
| Haze | (t=0.5mm) | 14 | 14 | 14 | 15 | 17 | 17 | 23 | 15 |
| Tensile break strength | MPa | 52 | 51 | 61 | 55 | 37 | 41 | 42 | 43 |
| Tensile fracture elongation | % | 446 | 354 | 366 | 302 | 532 | 469 | 424 | 387 |
| Tensile modulus of elasticity | MPa | 194 | 215 | 184 | 150 | 69 | 97 | 113 | 113 |
| Tensile impact strength | kl/m2 | 1160 | 1301 | 1282 | 1425 | 705 | 682 | 793 | 612 |
| Number of bending times | times | 24942 | 13519 | 1776 | 1955 | 62925 | 10036 | 6614 | 2939 |
| Wear amount | mg | 8 | 4 | 1 | 0 | 7.7 | 2.65 | 0 | 0 |

[Table 6]

| Item | Unit | Example I-9 | Example I-10 | Example I-11 | Example I-12 | Example I-13 | Example I-14 | Example I-15 | Example I-16 |
|---|---|---|---|---|---|---|---|---|---|
| No | | I-9 | I-10 | I-11 | I-12 | I-13 | I-14 | I-15 | I-16 |
| Kind of resin | | Ionomer | Ionomer | Ionomer | Ionomer | Ionomer | Ionomer | Ionomer | Ionomer |
| Ionomer base resin | | Resin 2 | Resin 2 | Resin 2 | Resin 2 | Resin 2 | Resin 2 | Resin 2 | Resin 2 |
| Characteristic of structure | | Linea r | Linear | Linear | Linear | Linear | Linear | Linear | Linear |
| Monomer 1 | | AA | AA | AA | AA | AA | AA | AA | AA |
| Monomer 2 | | NB | NB | NB | NB | iBA | iBA | iBA | iBA |
| Na+/(M)AA or 2×Zn2+/ (M)AA | mol/ mol | 0.1 | 0.2 | 0.4 | 0.6 | 0.1 | 0.2 | 0.4 | 0.6 |
| Kind of metal | - | Zn | Zn | Zn | Zn | Zn | Zn | Zn | Zn |
| | | | | | | | | | |
| Phase angle δ | *(G*=0.1MPa) | 61 | 58 | 51 | 52 | 59 | 55 | 55 | 54 |
| Melting point | °C | 85 | 84 | 84 | 79 | 85 | 84 | 83 | 82 |
| MFR | dg/min | 4.5 | 1.4 | 0.4 | <0.01 | 32.6 | 10.2 | 0.9 | 0.2 |
| Haze | (t=0.5 mm) | 14 | 15 | 15 | 15 | 16 | 12 | 14 | 17 |
| Tensile break strength | MPa | 43 | 51 | i 52 | 33 | 34.3 | 35.0 | 38.1 | 40.5 |
| Tensile fracture elongation | % | 433 | 439 | 333 | 164 | 535.3 | 485.5 | 408.3 | 277.0 |
| Tensile modulus of elasticity | MPa | 104 | 116 | 130 | 140 | 54 | 65 | 93 | 114 |
| Tensile impact strength | kJ/m2 | 1020 | 1400 | 1436 | 856 | 792 | 837 | 829 | 850 |
| Number of bending times | times | 16995 | 20085 | 35067 | 12217 | 55416 | 50252 | 25355 | 6585 |
| Wear amount | mg | 2.4 | 1.3 | 0 | 0 | 8.7 | 5.9 | 3.4 | 1.55 |

[Table 7]

| Item | | Unit | Com para tive Example I-10 | Compara tive Example I-11 | Compara tive Example I-12 | Compara tive Example I-13 | Compara tive Example I-14 | Compara tive Example I-15 | Example I-17 | Example I-18 | Example I-19 | Example I-20 |
|---|---|---|---|---|---|---|---|---|---|---|---|---|
| No | | | PE-5 | PE-6 | PE-7 | HIM-1 | PE-8 | PE-9 | I-2 | I-7 | I-15 | I-17 |
| Kind of resin | | | LLDPE | m-LLDPE | m-LLDPE | Ionomer | LLDPE | m-LLDPE | Ionomer | Ionomer | Ionomer | Ionomer |
| Characteristic of structure | | | Linear | Linear | Linear | Branched | Linear | Linear | Linear | Linear | Linea r | Linear |
| Monomer 1 | | | - | - | - | MAA | - | - | AA | AA | AA | AA |
| Monomer 2 | | | - | - | - | - | - | - | NB | iBA | iBA | - |
| Kind of metal | | | - | - | - | Na | - | - | Na | Na | Zn | Na |
| Na+/(M)AA or 2×Zn2+/(M)AA | | | - | - | - | 0.3 | - | - | 0.3 | 0.45 | 0.4 | 0.2 |
| MFR | | g/ 10mi n | 0.9 | 1.0 | 2.2 | 2.8 | 2.1 | 2.0 | 1.7 | 3.5 | 0.9 | 2.9 |
| Molding temperature | | °C | 190 | 190 | 190 | 190 | 160 | 160 | 190 | 160 | 160 | 160 |
| Haze | | % | 5.4 | 22.5 | 12.7 | 5.9 | 15.5 | 34.7 | 0.2 | 0.5 | 1.2 | 1.2 |
| Gloss (20°) | Outer surface | % | 78.3 | 10.8 | 30.2 | 43.0 | 31.0 | 4.8 | 145.4 | 137.8 | 138.9 | 143.3 |
| Tensile modulus of elasticity | MD | MPa | 310 | 100 | 26 | 490 | 310 | 150 | 390 | 350 | 340 | 550 |
| | TD | | 410 | 110 | 31 | 410 | 400 | 160 | 360 | 300 | 300 | 560 |
| Film impact (23°C) | | J/mm | 7.5 | 36.0 | 56.0 | 20.0 | 7.8 | 61.0 | 66.0 | 36.0 | 25.0 | 16.0 |
| Film impact (-20°C) | | J/mm | - | - | - | 19.0 | 19.0 | 17.0 | 34.0 | 35.0 | 26.0 | 28.0 |
| Piercing strength (ϕ1.18 mm) | | N | 1.3 | 1.3 | 1.3 | 3.2 | 1.2 | 2.6 | 5.1 | 4.1 | 3.5 | 3.2 |
| Gelbo flex | MD | Number | 0 | 0 | 0 | 4.5 | 19 | 0 | 0 | 0 | 0 | 6 |
| | TD | | 0 | 0 | 0 | 8.5 | 6 | 0 | 0 | 0 | 0 | 9 |

[Table 8]

| Sealing temperature (°C) | Comparative Example I-10 | Comparative Example I-11 | Comparative Example I-12 | Comparative Example I-13 | Comparative Example I-14 | Comparative Example I-15 | Example I-17 | Example I-18 | Example I-19 | Example I-20 |
|---|---|---|---|---|---|---|---|---|---|---|
| 80 | 0.00 | 0.44 | 4.60 | 0.04 | 0.01 | 0.07 | 0.06 | 0.56 | 0.08 | 0.00 |
| 90 | 0.03 | 3.84 | 4.90 | 0.13 | 0.02 | 0.65 | 6.19 | 0.31 | 0.58 | 0.01 |
| 100 | 0.10 | 4.90 | 4.31 | 2.66 | 0.05 | 4.72 | 9.41 | 7.74 | 6.76 | 0.06 |
| 110 | 0.35 | 5.61 | 4.13 | 6.70 | 0.21 | 5.91 | 10.60 | 9.91 | 9.61 | 1.44 |
| 120 | 2.42 | 6.29 | 4.51 | 7.88 | 1.04 | 6.91 | 10.80 | 11.43 | 11.12 | 11.19 |
| 130 | 9.72 | 6.47 | 4.09 | 9.27 | 7.41 | 6.79 | 11.10 | 12.51 | 12.63 | 11.41 |
| 140 | 9.35 | 6.92 | 4.24 | 11.10 | 6.57 | 7.81 | 11.60 | 13.63 | 11.65 | 12.54 |
| 150 | 10.46 | 7.68 | 4.28 | 11.30 | 8.57 | 8.83 | 11.50 | 16.56 | 13.59 | 13.38 |

<Evaluation I-1: With regard to physical property of press sheet>

- Transparency

The values of the haze in Tables 4 to 6 are evaluation indexes of transparency. The haze value is a value showing the degree of cloudiness, and when the value is lower, then transparency is excellent. The press sheet of each Example was lower than any of Comparative Examples I-1 to 4, and the haze value was substantially equal to or lower than that of the existing ionomer films (Comparative Examples I-5 to 9). It can be seen that the ionomer of the present invention is excellent in transparency than those of the existing polyethylene and the existing ionomer.

•Impact strength

The values of the tensile modulus of elasticity and tensile impact strength in Tables 4 to 6 are observed. It can be seen that in the existing polyethylene, the tensile impact strength tends to decrease as increasing the tensile modulus of elasticity, which is the evaluation index of rigidity. In view of this, looking at the values of the tensile modulus of elasticity and tensile impact strength of the existing ionomers of Comparative Examples I-5 to 9, it can be seen that the strength per tensile modulus of elasticity is higher than that of the existing polyethylene, and in the ionomer of the present invention, in particular, in Examples I-1 to 8, whereas the tensile modulus of elasticity is higher than that of Comparative Examples I-5 to 9, they have equal to or higher tensile impact strength than that of the same and the balance between rigidity and strength is excellent. In Examples I-9 to 16, the tensile modulus of elasticity is the numerical value equal to or less as compared with that of the existing ionomer, and it can be seen that the tensile impact strength is generally high. Therefore, it can be also seen that the ionomer of the present invention is a material having excellent flexibility and strength.

•Pinhole resistance

The values of wear amount and a number of bending times in Tables 4 to 6 are observed. Fig. 3 is a graph in which the wear amount is on the horizontal axis and the bending times is on the vertical axis of each press sheet. In evaluating the pinhole resistance, it is desirable that the wear amount is small and the value of the number of bending times is large. By satisfying both of these conditions, it can be said that the material has high durability against bending and wear in an actual use environment, and consequently difficultly generating pinholes. Comparative Examples I-1 to 9 and Examples I-1 to 16 are observed, with regard to Examples I-1 to 16, they are located at the upper left of the plots of Comparative Examples I-1 to 9. Therefore, it can be seen that the ionomer of the present invention has a small wear amount and a large number of bending times, and can be said to be excellent in pinhole resistance.

<Evaluation I-2: With regard to film physical property>

•Optical properties

The haze value and the gloss values in Table 7 are observed. The haze value is an evaluation index of cloudiness, and the numerical value is lower, it means excellent in transparency, and in general, when it is less than 10%, it is judged to be excellent in transparency. On the other hand, the gloss value is an evaluation index of glossiness of the film, and the numerical value is higher, it means excellent in gloss. When Table 7 is observed, it can be understood that the haze values and the gloss values of Examples I-17 to 20 are markedly excellent as compared with that of Comparative Examples I-10 to 15. The transparency possessed by the film of the present invention is almost unreachable region as an ethylene-based resin film, and even when it is compared with the haze value of 1.2% and the gloss value of 135.5% of the OPP film (polypropylene stretched film) with 20 μm which has been known to be highly transparent film, it is more excellent.

• Impact strength

The values of the tensile modulus of elasticity and film impact in Table 7 are observed. The tensile modulus of elasticity is an evaluation index showing rigidity of the film, and the value of the film impact is an evaluation index showing impact strength of the film. From the tendency of Comparative Examples I-10 to 12, 14 and 15, it can be seen that the impact strength tends to increase as the rigidity decreases and the flexibility increases. In view of this tendency, when comparing general linear polyethylene with the existing ionomers, it shows the numerical values that the rigidity of Comparative Example I-13 is 1.6 times that of Comparative Example 1-10, and the impact strength is 2.5 times of the same, and it can be understood that the existing ionomer has a better balance between rigidity and strength as compared with the existing linear low-density polyethylene. Next, the existing ionomer and the ionomer of the present invention

are compared. It can be seen that the films of Examples I-17 to 19 have a large difference in impact strength of 1.25 to 3.3 times while maintaining the excellent rigidity than the polyethylene film similarly to the existing ionomers. In particular, the strength level shown in Example I-17 is a strength higher than that of the metallocene-based polyethylene having extremely high flexibility shown in Comparative Example I-12, so that it can be seen that the film produced by the ionomer of the present invention is extremely excellent in the balance between rigidity and strength as compared with the film produced by the existing polyethylene and ionomer.

Subsequently, when the value of the film impact at -20◦c similarly in Table 7 is observed, the films of Comparative Examples I-13 to 15 are 17 to 19 J/mm, which does not exceed 20 J/mm, while the films of Examples I-17 to 20 are 28.0 to 35.0 J/mm, which show higher strength of about 1.5 to 2.0 times. From this results, it can be seen that the ionomer of the present invention is excellent in impact strength not only at normal temperature but also at low temperature region.

•Piercing strength

The value of the piercing strength in Table 7 is observed. The piercing strength is an evaluation index showing the force required for a sharp tip to penetrate the film. When the ionomers of the present invention of Examples I-17 to 20 are compared with the existing polyethylenes of Comparative Examples I-10 to 12, they show numerical values 2.4 to 3.8 times higher, and compared with the existing ionomer of Comparative Example I-13, 1.0 to 1.6 times higher. From this results, it can be seen that the film produced by the ionomer of the present invention is excellent in strength to piercing as compared with the films produced by the existing polyethylenes and ionomers.

•Pinhole resistance property

The values of gelbo flex in Table 7 are observed. This numerical value is an evaluation index showing how many pinholes are generated when the film is bent a plurality of times, and it can be evaluated that the numerical value is lower, generation of pinholes is less and it can be evaluated to be excellent in pinhole resistance. It can be said from Comparative Example I-10 and Comparative Example 1-14 that the number of pinholes is larger in Comparative Example I-14 even though the LLDPE is the same. From this result, it can be seen that when molding is carried out at 160◦c, which is a lower temperature than 190◦c, it is disadvantageous in pinhole resistance. Based on this, when Comparative Examples I-10 to 12, 14 and 15 and Comparative Example I-13 are observed, it can be seen that although the existing ionomer is molded at 190◦c, from the viewpoint of pinhole resistance, the property is equal to or inferior to the existing PE. Here, when Examples I-17 to 19 are observed, the ionomer of the present invention has excellent property than that of the existing ionomer in the point that the number of pinholes is 0 not only when molding at 190◦c as a matter of course, but also when molding at 160◦c. With regard to the film of Example I-20, the number of pinholes is fewer than that of LLDPE molded at the same 160◦c, and is the same number of pinholes as the existing ionomer molded at 190◦c, which is an advantageous condition, so that it can be seen that the property is higher property or similar property, and when comprehensively considered with the other physical properties introduced in the present application, it can be understood that they have excellent physical properties than those of the existing PE or ionomers.

•Heat seal strength

The values of the heat seal strength shown in Table 8 and Fig. 4 are observed. This is an evaluation index showing the strength at the time of tensile fracture of the portion where the films are melt-bonded together at a predetermined temperature and a constant pressure. In general, it is desirable that the heat seal strength is not only high as a matter of course, but also high strength can be obtained when sealing at a lower temperature. As shown in Example I-17 to 20, it can be seen that the film produced by the ionomer of the present invention has the highest sealing strength in the temperature range of 90◦c to 150◦c.

As explained above, from physical properties of the press sheet and the physical properties of the inflation film, the film comprising the ionomer of the present invention is excellent in gloss, transparency, impact strength, piercing strength, pinhole resistance and heat seal strength.

• Regarding balance between rigidity and toughness

The balance between rigidity (tensile modulus of elasticity) and toughness (tensile impact strength) shown in Table 7 and Fig. 5 is observed. Both need to be appropriately balanced and take a high value, and in Fig. 5, the upper right side shows a good direction.

The films using the conventional linear low-density polyethylene (LLDPE) shown in Comparative Examples I-10 to 12 and Comparative Examples I-14 and 15, and using the multi-branched structure-based ionomer resin shown in Comparative Example I-13 are insufficient in either rigidity or toughness. It is shown that, as compared with these

Comparative Examples, the films using the ionomers having the linear structure of Examples I-17 to 20 of the present application are ethylene-based resin films having rigidity-toughness which is in the region never conventionally be seen.

• Regarding transparency and glossiness

The comparison of the transparency shown in Table 7 and Fig. 6 is carried out by the value of the haze. When the haze value is small, the transparency is high. It is shown that, as compared with the films using the conventional linear low-density polyethylene (LLDPE) shown in Comparative Examples I-10 to 12,14 and 15, and using the multi-branched structure-based ionomer resin shown in Comparative Example I-13, the films using the ionomers having the linear structure of Example I-17 to 20 of the present application are ethylene-based resin films having dramatically excellent haze that the haze values when molded to a thickness of 30 μm are 0.2% to 1.2%. As an ethylene-based resin film having transparency in this region, it is an almost unreachable region, and it is more excellent as compared with a value of 1.2% of an OPP film (polypropylene stretched film) having 20 μm which has been known to be a film having high transparency.

The comparison of the glossiness shown in Table 7 and Fig. 7 is carried out by the gloss value. When the gloss value is large, the glossiness is high. It is shown that, as compared with the films using the conventional linear low-density polyethylene (LLDPE) shown in Comparative Examples I-10 to 12, 14 and 15, and using the multi-branched structure-based ionomer resin shown in Comparative Example I-13, the films using the ionomers having the linear structure of Example I-17 to 20 of the present application are ethylene-based resin films having dramatically excellent gloss values that the gloss values when molded to a thickness of 30 μm are 137.8 to 145.4%. As an ethylene-based resin film having glossiness in this region, it is an almost unreachable region, and it is more excellent as compared with a value of 135.5% of an OPP film (polypropylene stretched film) having 20 μm which has been known to be a film having high glossiness.

[Example II: Preparation of soft sheet]

In Example II, the ionomer base resin was produced by the same method as the method of "Production of ionomer base resin-2" using the resin used in Production Examples 1 and 2. The physical properties of the respective ionomer base resins are shown in Table 9.

[Table 9

| Base resin | Resin com positlon | MFR | Melting point | Crystal Unity | Structural unit amount [Z] | -3.74x(Z] +130 | Phase angle | Methyl branch amount | Ethyl branch amount | Butyl branch amount |
|---|---|---|---|---|---|---|---|---|---|---|
| | A/B/C | 190deg, 2.16kg | Tm | | [B] + [C] | | 6 ($G^*$=0.1MPa) | | | |
| | mol/mol/mol | g/10mln | °C | % | mol% | | - | Number /1,000C | Number /1,000C | Number /1.000C |
| Resin 1 | E/AA/NB= 92.0/5.1/2.9 | 17 | 84 | 20 | 8 | 100 | 62 | 0.5 | not detected | not detected |
| Resin 2 | E/AAfiBA= 92.3/5.4/2.3 | 81 | 88 | 17 | 7.7 | 101 | 64 | not detected | not detected | not detected |

Then, ionomers obtained from these ionomer base resins in the same manner as in Examples 1-15,1-9 and I-14 were designated as Examples II-1 to 3, respectively. Also, the commercially available ionomer HIM-3 was designated as Comparative Example II-1 and HIM-1 was designated as Comparative Example II-2. For these resins, a sheet prepared by the above-mentioned "Preparation method of tensile impact strength test sample" or "Preparation method of wear test sample" was used as a test piece. The compositions of the respective resins, etc., are shown in Table 10, and the measurement results of the tensile modulus of elasticity, wear amount, tensile impact strength and haze are shown in Table 11.

[Table 10]

| | Base resin | Resin composition | Degree of neutralization | | MFR | Phase angle |
|---|---|---|---|---|---|---|
| | | A/B/C | $Na^+$/(M)AA | 2x $Zn^{2+}$/(M)AA | 190deg, 2.16kg | $\delta$(G* = 0.1 MPa) |
| | | mol/mol/mol | mol% | mol% | g/10min | ° |
| Example II-1 | Resin 2 | E/AA/IBA=92.3/5.4/2.3 | - | 40 | 0.9 | 55 |
| Example II-2 | Resin 1 | E/AA/NB=92.0/5.1/2.9 | - | 10 | 4.5 | 61 |
| Example II-3 | Resin 2 | E/AA/IBA=92.3/5.4/2.3 | - | 20 | 10.2 | 55 |
| Comparative Example II-1 | - | E/MAA/=96.1/3.9 | 38 | - | 10.0 | 49 |
| Comparative Example II-2 | - | E/MAA/=94.6/5.4 | 30 | - | 2.8 | 46 |

[Table 11]

| | Base resin | Resin composition | Degree of neutralization | | Tensile modulus of elasticity | Wear amount | Tensile Impact strength | Haze (t=0.5 mm) |
|---|---|---|---|---|---|---|---|---|
| | | A/B/C | $Na^+$/ (M) AA | 2x $Zn^{2+}$/(M)AA | | | | |
| | | mol/mol/mol | mol% | mol% | MPa | mg | kJ/m2 | % |
| Example II-1 | Resin 2 | E/AA/iBA=92.3/5.4/2.3 | - | 40 | 93 | 3 | 829 | 14 |
| Example II-2 | Resin 1 | E/AA/NB=92.0/5.1/2.9 | - | 10 | 104 | 2 | 1020 | 14 |
| Example II-3 | Resin 2 | E/AA/iBA=92.3/5.4/2.3 | - | 20 | 65 | 6 | 837 | 12 |
| Comparative Example 11-1 | - | E/MAA/=96.1/3.9 | 38 | - | 180 | 16 | 428 | 18 |
| Comparative Example 11-2 | - | E/MAA/=94.6/5.4 | 30 | - | 250 | 10 | 623 | 20 |

<Evaluation II>

As described above, from the results shown in Table 11, when Examples II-1 to 3 and Comparative Example II-1 to 2 are compared, the ethylene-based ionomers which do not satisfy the specific requirements of the ethylene-based ionomer for a soft sheet of the present invention are inferior to the ethylene-based ionomers of Examples II-1 to 3 in the balance of flexibility, wear resistance, impact resistance and transparency.

As compared with these Comparative Examples, it can be confirmed that the ethylene-based ionomers for a soft sheet and its molded body according to the present invention have a good balance of flexibility, wear resistance, impact resistance and transparency as shown in Examples II-1 to 3.

[Example III: Production of resin for glass interlayer film]

In Example III, as the ionomer base resin precursors, the resins of Production Example 1, 2, 3 and 5, and that in which the comonomer in the resin of Production Example 8 was changed to n-butyl acrylate (Production Example 8'), and the conditions such as a synthetic catalyst, etc., are changed in the resin of Production Example 10 (Production Example 11) were used. The synthesis conditions, yields, etc., of the respective ionomer base resin precursors are shown in Table 12, and the results of summarizing various physical properties are shown in Table 13.

[Table 12]

| | Kind of metal complex | Amount of metal complex | Trioctyl aluminum | Toluene | Comonomer 1 | Comono mer 2 | Comono mer 1 concentration | Comono mer 2 concentration | Polymerization conditions | | | Yield | Catalyst efficiency |
|---|---|---|---|---|---|---|---|---|---|---|---|---|---|
| | | | | | | | | | Ethylene partial pressure | Temperature | Time | | |
| | | [mmol] | [mmol] | 11-1 | | | [mmol/L] | (mmol/L] | [MPa] | [°C] | [min] | [g] | [g/mol] |
| Production example 1 | B-27DM/Ni | 1000 | 225 | 1000 | t-aetyi acrylate | 2-Norbornene | 230 | 210 | 0.8 | 85 . | 330 | 117000 | 1.2E+OS |
| Production example 5 | B-27DM/NI | 0.79 | 0.15 | 1 | t-Butyl acrylate | 2-Norbornene | 48 | 100 | 0.8 | 90 | 354 | 102 | 1.3E+05 |
| Production example 3 | B-27DM/Ni | 0.5 | 0.15 | 1 | t-Buty [ acrylate | 2-Norbornene | 67 | 51 | 0.8 | 80 | 35 | 15 | 3.0E+04 |
| Production example 8' | B-27DM/Ni | 0.48 | 0.15 | 1 | t-Butyl acrylate | n-Butyl acrylate | 241 | 115 | 3.0 | 80 | 180 | 60 | 1.2E+05 |
| Production example 2 | B-423/Ni | 1460 | 3573 | 1000 | t-Buty) acrylate | I-Butyl acrylate | 147 | 66 | 0.8 | 95 | 510 | 75000 | 5.1E+04 |
| Production example 11 | B-27DM/Ni | 0.36 | 0.15 | 1 | t-Butyl acrylate | - | 302 | - | 3 | 90 | 76 | 76 | 2. 1 E+05 |

[Table 13]

| | Comono mer 1 | Comonomer 2 | Comono mer 1 content | Comonomer 2 content | Melting point | crystallinity | Weight average molecular weight | Molecular weight distribution | Methyl branch amount | Ethyl branch amount | Butyl branch amount |
|---|---|---|---|---|---|---|---|---|---|---|---|
| | | | [mol%] | [mol%] | [°C] | [%] | Mw*$10^{-4}$ | [Mw/Mn] | Number/-1,000C | Number/-1.000C | Number/-1,000C |
| Production example 1 | t-Butyl acrylate | 2-Norbornene | 5.1 | 2.9 | 80.5 | 14.6 | 3.8 | 2.3 | 0.5 | not detected | not detected |
| Production example 5 | t-Butyl acrylate | 2-Norbornene | 2.9 | 2.8 | 92.7 | 22 | 4.2 | 2.0 | 0.8 | not detected | not detected |
| Production example 3 | t-Butyl acrylate | 2-Norbornene | 6.1 | 1.2 | 86.6 | 18 | 2.5 | 1.7 | 0.4 | not detected | not detected |
| Production example 8' | t-Butyl acrylate | n-Butyl acrylate | 5.2 | 3.6 | 78.2 | 12.2 | 3.9 | 2.0 | 0.2 | not detected | not detected |
| Production example 2 | t-Butyl acrylate | i-Butyl acrylate | 5.4 | 2.3 | 80.5 | 11.6 | 2.7 | 2.3 | not detected | not detected | not detected |
| Production example 11 | t-Butyl acrylate | - | 7.4 | - | 84.1 | 16 | 3.2 | 2.0 | no data | no data | no data |

From the resins obtained in the respective Production Examples, ionomer base resins (Resins 1, 5, 3, 8', 2 and 11) were obtained in accordance with the above-mentioned "Production of ionomer base resin-2". The physical properties of the obtained resins are shown in Table 14.

[Table 14]

| | Comonomer1 | Comonomer 2 | Comonomer 1 content | Comonomer 2 content | Melting point | Crystallinity | Weight average molecular weight | Molecular weight distribution | Methyl branch amount | Ethyl branch amount | Butyl branch amount |
|---|---|---|---|---|---|---|---|---|---|---|---|
| | | | [mol%] | [mol%] | [°C] | [%] | $Mw*10^{-4}$ | [Mw/Mn] | Number/-1,000C | Number/-1,000C | Number/-1,000C |
| Production example 1 | t-Butyl acrylate | 2-Nor-bornene | 5.1 | 2.9 | 80.5 | 14.6 | 3.8 | 2.3 | 0.5 | not detected | not detected |
| Production example 5 | t-Butyl acrylate | 2-Norbornene | 2.9 | 2.8 | 92.7 | 22 | 4.2 | 2.0 | 0.8 | not detected | not detected |
| Production example 3 | t-Butyl acrylate | 2-Norbornene | 6.1 | 1.2 | 86.6 | 18 | 2.5 | 1.7 | 0.4 | not detected | not detected |
| Production example 8' | t-Butyl acrylate | n-Butyl acrylate | 5.2 | 3.6 | 78.2 | 12.2 | 3.9 | 2.0 | 0.2 | not detected | not detected |
| Production example 2 | t-Butyl acrylate | I-Butyl acrylate | 5.4 | 2.3 | 80.5 | 11.6 | 2.7 | 2.3 | not detected | not detected | not detected |
| Production example 11 | t-Butyl acrylate | - | 7.4 | - | 84.1 | 16 | 3.2 | 2.0 | no data | no data | no data |

Then, the obtained ionomer base resins were treated in the same method as the method of "Production of ionomer-1" to obtain the respective ionomers (Examples III-1 to 10). As Comparative Examples, using HIM-5 (Comparative Example III-1) and HIM-2 (Comparative Example III-2), the tensile impact strength, haze and adhesion strength were measured by the methods as mentioned above. The physical properties of the obtained ionomers and Comparative Examples are shown in Table 15 and Table 16.

[Table 15]

| | Base resin | Resin composition | Degree of neutralization | | MFR | Melting point | Phase angle |
|---|---|---|---|---|---|---|---|
| | | A/B/C | $Na^+$/(M)AA | $2\times Zn^{2+}$/(M)AA | 190deg, 2.16kg | Tm | δ (G*=0.1M Pa) |
| | | mol/mol/mol | [mol%] | [mol%] | [g/10min] | [°C] | [*] |
| Example III-1 | Resin 1 | E/AA/NB=92.0/5.1/2.9 | - | 10 | 5.0 | 85 | 61 |
| Example III-2 | Resin 1 | E/AA/NB=92.0/5.1/2.9 | - | 20 | 1.4 | 84 | 58 |
| Example III-3 | Resin 1 | E/AA/NB=92.0/5.1/2.9 | - | 40 | 0.4 | 84 | 51 |
| Example III-4 | Resin 1 | E/AA/NB=92.0/5.1/2.9 | - | 60 | <0.01 | 79 | 52 |
| Example III-5 | Resin 1 | E/M/NB=92.0/5.1/2.9 | 45 | - | 0.5 | 82 | 61 |
| Example III-6 | Resin 5 | E/AA/NB=94.3/2.9/2.8 | 35 | - | 1.0 | 94 | 52 |
| Example III-7 | Resin 3 | E/AA/NB=92.7/6.1/1.2 | 58 | - | 0.8 | 88 | 66 |
| Example III-8 | Resin 8' | E/AA/nBA=91.2/5.2/3.6 | 40 | - | 1.6 | 82 | 59 |
| Example III-9 | Resin 2 | E/AA/iBA=92.3/5.4/2.3 | - | 20 | 10.2 | 84 | 55 |
| Example III-10 | Resin 11 | E/AA=92.6/7.4 | 23 | - | 3.1 | 93 | 59 |
| Comparative Example III-1 | - | E/MAA/=94.6/5.4 | - | 59 | 0.9 | 87 | 45 |
| Comparative Example III-2 | - | E/MAA/=94.6/5.4 | 54 | - | 0.9 | 86 | 47 |

[Table 16]

| | Base resin | Resin composition | Degree of neutralization | | Tensile impact strength | Haze | Adhesion strength |
|---|---|---|---|---|---|---|---|
| | | A/B/C | $Na^+$/(M)AA | $2\times Zn^{2+}$/(M)AA | | | |
| | | mol/mol/mol | [mol%] | [mol%] | [k)/m2] | [%] | [N,10mm] |
| Example III-1 | Resin 1 | E/AA/NB=92.0/5.1/2.9 | - | 10 | 1020 | 14 | 32.4 |
| Example III-2 | Resin 1 | E/AA/NB=92.0/5.1/2.9 | - | 20 | 1400 | 15 | 18.7 |
| Example III-3 | Resin 1 | E/AA/NB=92.0/5.1/2.9 | - | 40 | 1436 | 15 | 6.0 |
| Example III-4 | Resin 1 | E/AA/NB=92.0/5.1/2.9 | - | 60 | 856 | 15 | 4.0 |

(continued)

| | Base resin | Resin composition | Degree of neutralization | | Tensile impact strength | Haze | Adhesion strength |
|---|---|---|---|---|---|---|---|
| | | A/B/C | $Na^+$/(M)AA | $2\times Zn^{2+}$/(M)AA | | | |
| | | mol/mol/mol | [mol%] | [mol%] | [k)/m2] | [%] | [N,10mm] |
| Example III-5 | Resin 1 | E/AA/MB=92.0/5.1/2.9 | 45 | - | 1282 | 14 | 3.6 |
| Example III-6 | Resin 5 | E/AA/NB=94.3/2.9/2.8 | 35 | - | 1231 | 19 | 3.1 |
| Example III-7 | Resin 3 | E/AA/NB=92.7/6.2/L2 | 58 | - | 988 | 18 | 2.5 |
| Example III-8 | Resin 8' | E/AA/nBA=91.2/S. 2/3.6 | 40 | - | 1759 | 17 | 5.6 |
| Example III-9 | Resin 2 | E/AA/iBA=92.3/5.4/2.3 | - | 20 | 837 | 12 | 5.8 |
| Example III-10 | Resin 11 | E/AA=92.6/7.4 | 23 | - | 750 | 21 | 2.4 |
| Comparative Example III-1 | - | E/MAA=94.6/5.4 | - | 59 | 673 | 18 | 2.3 |
| Comparative Example III-2 | - | E/MAA=94.6/5.4 | 54 | - | 707 | 19 | 0.7 |

<Evaluation III>

Since Comparative Examples III-1 and 2 are ionomers composed of a base resin produced by the high-pressure radical method and a metal ion source, their molecular structure has many long-chain branches and has the phase angle δ at an absolute value G*=0.1 MPa of a complex modulus of elasticity of less than 50°. On the other hand, since Examples III-1 to 10 are ionomers composed of a base resin produced by a transition metal catalyst and metal ions, their molecular structure is substantially linear and the phase angle δ (G*=0.1 MPa) is 50° or more.

From the measurement results shown in Table 16, it can be understood that, in Examples of the laminated body of the present invention, the resin layer is firmly adhered to the glass layer, and the transparency and tensile impact strength are also high. Comparative Example III-1and Example III-4, and Comparative Example III-2 and Example III-7 are each existing ionomers having the same acid content and neutralization degree, respectively, and as compared with Examples, whereas Comparative Examples are equivalent in the transparency but inferior in the adhesion strength and tensile impact strength.

This result shows that, the ionomers of the present invention in which the phase angle δ (G*=0.1 MPa) is 50° or more are relatively excellent in the balance of the transparency, adhesion strength and tensile impact strength than the conventional ionomers.

[Regarding composition of ionomer, degree of neutralization and kind of metal ions]

Examples III-1 to 10 are ionomers each having different composition of the base resin, degree of neutralization, and the kind of metal ions, and each has a desired transparency (haze), desired adhesive property (adhesion strength) and desired strength (tensile impact strength) for a glass interlayer film, and has excellent adhesion strength and tensile impact strength than those of Comparative Examples III-1 and 2 of the existing ionomers.

This shows that, as shown in Fig. 9, when a multinary ionomer of the present invention having the phase angle δ (G*=0.1 MPa) of 50° or more is used, irrespective of the degree of neutralization, the product is relatively excellent in the balance of the transparency, adhesion strength and tensile impact strength.

From the comparison between such Examples and Comparative Examples, it could be understood that the ionomer of the present invention exhibits an excellent balance of the transparency, adhesiveness and impact resistance due to its characteristic molecular structure, which was never found in the conventional ionomers.

[Example IV: Preparation of resin for dicing tape]

In Example IV, ionomer base resins were obtained in accordance with the above-mentioned "Production of ionomer base resin-1" from the resins of Production Examples 1 to 3. The physical properties of the obtained resins are shown in Table 17.

[Table 17]

| Base resin | Resin composition | MFR | Melting point | Crystallinity | Structural unit amount [Z] | -3.74× | Phase angle | Methyl branch amount | Ethyl branch amount | Butyl branch amount |
|---|---|---|---|---|---|---|---|---|---|---|
| | A/B/C | 190deg, 2.16kg | Tm | | [BMC] | [Z] +130 | 6 (G*=0.1M Pa) | | | |
| | mol/mol/mol | g/10min | °C | % | mol% | | • | Number/-1,000C | Number/-1,000C | Number/-1,000C |
| Resin 1 | E/AA/NB= 92.0/5.1/2.9 | 17 | 84 | 20 | 8 | 100 | 62 | 0.5 | not detected | not detected |
| Resin 2 | E/AA/iBA= 92.3/5.4/2.3 | 81 | 88 | 19 | 7.7 | 101 | 64 | not detected | not detected | not detected |
| Resin 10 | E/AA= 96.5/3.5 | 13 | 108 | 37 | 3.5 | 117 | 64 | 1.1 | not detected | not detected |

Then, the obtained ionomer base resins were treated in the same method as the method of "Production of ionomer-2" to obtain ionomers in which the kind of the metal and degree of neutralization had been changed (Examples IV-1 to 5). As Comparative Examples, using HIM-1 and HIM-4, the tensile fracture elongation, wear amount and number of cutting chips were measured by the method as mentioned above. The physical properties of the obtained ionomers and Comparative Examples are shown in Table 18.

[Table 18]

| | Base resin | Resin compositlon | Degree of neutralization | | MFR | Melting point | Phase angle | Tensile elongation | Wear amount | Number of cutting |
|---|---|---|---|---|---|---|---|---|---|---|
| | | A/B/C | Na $^{+}$/(M)AA | 2×$Zn^{2+}$ /(M) AA | 190deg, 2.16kg | Tm | 6 (G*=0,1M Pa) | | | |
| | | mol/mol/mol | mol% | mol% | g/10min | °C | • | % | mg | Number/cm |
| Example IV-1 | Resin 1 | E/AA/NB= | 30 92.0/5.1/2.9 | - | 1.3 | 85 | 61 | 354 | 4.0 | 19 |
| Example IV-2 | Resin 1 | E/AA/NB= 92.015.1/2.9 | - | 10 | 4.5 | 85 | 61 | 433 | 2.4 | 13 |
| Example IV-3 | Resin 2 | E/AA/iBA= 92.3/5.4/2.3 | 45 | - | 2.2 | 87 | 55 | 434 | 3.4 | 17 |
| Example IV-4 | Resin 2 | E/AA/iBA= 92.3/5.4/2.3 | - | 35 | 1.9 | 87 | 55 | 535 | 4.3 | 21 |
| Example IV- | Resin 10 | E/AA= 96.5/3.5 | 20 | - | 2.9 | 107 | 59 | 458 | 5.4 | 28 |
| Comparative Example 1 IV- | HIM1605 | E/MAA= 94.6/5.4 | 30 | - | 2.8 | 91 | 46 | 350 | 10.0 | 41 |
| Comparative Example 2 IV- | HIM1652 | E/MAA= 96.9/3.1 | - | 17 | 5.5 | 97 | 41 | 445 | 18.0 | 63 |

<Evaluation IV>

From the comparison in Table 18, in the ionomers of the present invention and the ionomers of the conventional high-pressure radical method, the tensile fracture elongation which is an index of expandability was almost the same value. Therefore, it can be said that the both are almost the same in terms of expanding property. On the other hand, the wear amount is extremely small when the ionomers of the present invention are used, and the number of cutting chips is also small simultaneously. It can be said that the dicing tapes using the novel ionomers of the present invention are superior in the viewpoint of reducing cutting chips as compared with the dicing tapes using the conventional ionomers while maintaining the expandability to the level of the conventional product.

[Example V: Preparation of resin for gasket]

In Example V, ionomer base resins were obtained in accordance with the above-mentioned "Production of ionomer base resin-2" from the resins of Production Examples 1 and 2. The physical properties of the obtained resins are shown in Table 19.

[Table 19]

| Base resin | Resin composition | MFR | Melting point | Crystallinity | Structural unit amount [Z] | -3.74×[Z] +130 | Phase angle | Methyl branch amount | Ethyl branch amount | Butyl branch amount |
|---|---|---|---|---|---|---|---|---|---|---|
| | A/B/C | 190deg, 2.16kg | Tm | | [B]+[C] | | 6 (G*=0.1MPa) | | | |
| | mol/mol/mol | g/10min | °C | % | mol% | | • | Number/ 1,000C | Number/ 1,000C | Number/ 1,000C |
| Resin 1 | E/AA/NB= 92.0/5.1/2.9 | 17 | 84 | 20 | 8 | 100 | 62 | 0.5 | not detected | not detected |
| Resin 2 | E/AA/iBA= 92.3/5.4/2.3 | 81 | 88 | 17 | 7.7 | 101 | 64 | not detected | not detected | not detected |

Then, the obtained ionomer base resins are treated by the same method as in the method of "Production of ionomer-1" to obtain ionomers in which the degree of neutralization had been changed (Examples V-1 to 3). As Comparative Examples, using HIM-3 and HIM-4, the tensile modulus of elasticity, elastic recovery, tensile impact strength and wear amount were measured by the method as mentioned above. The physical properties of the obtained ionomers and Comparative Examples are shown in Tables 20 and 21.

[Table 20]

| | Base resin | Resin composition | Degree of neutralization | | MFR | Phase angle |
|---|---|---|---|---|---|---|
| | | A/B/C | $Na^+$/(M)AA | $2\times Zn^{2+}$/(M)AA | 190deg, 2.16kg | δ (G*=0.1MPa) |
| | | mol/mol/mol | mol% | mol% | g/10min | |
| Example V-1 | Resin 2 | E/AA/iBA=92.3/5.4/2.3 | - | 40 | 0.9 | 55 |
| Example V-2 | Resin 1 | E/AA/NB=92.0/5.1/2.9 | - | 10 | 4.5 | 61 |
| Example V-3 | Resin 2 | E/AA/iBA=92.3/5.4/2.3 | - | 20 | 10.2 | 55 |
| Comparative Example V-1 | - | E/MAA/=96.1/3.9 | 38 | - | 10.0 | 49 |
| Comparative Example V-2 | - | E/MAA/=96.9/3.1 | - | 17 | 5.5 | 41 |

[Table 21]

| | Base resin | Resin composition | Degree of neutralization | | Tensile modulus of elasticity | Elastic recovery | Tensile impact strength | Wear amount |
|---|---|---|---|---|---|---|---|---|
| | | A/B/C | $Na^+$/(M)AA | $2\times Zn^{2+}$/(M)AA | | | | |
| | | mol/mol/mol | mol% | mol% | MPa | % | kJ/m2 | mg |
| Example V-1 | Resin 2 | E/AA/iBA=92.3/5.4/2.3 | - | 40 | 93 | 69 | 829 | 3 |
| Example V-2 | Resin 1 | E/AA/NB=92.0/5.1/2.9 | - | 10 | 104 | 77 | 1020 | 2 |
| Example V-3 | Resin 2 | E/AA/iBA=92.3/5.4/2.3 | - | 20 | 65 | 73 | 837 | 6 |
| Comparative Example V-1 | - | E/MAA/=96.1/3.9 | 38 | - | 180 | 63 | 428 | 16 |
| Comparative Example V-2 | - | E/MAA/=96.9/3.1 | - | 17 | 126 | 73 | 508 | 18 |

<Evaluation V>

From the results shown in Table 21, when Examples V-1 to 3 and Comparative Examples V-1 to 2 are compared, the ethylene-based ionomers according to the present invention are excellent in the balance of the flexibility, elastic recovery, impact resistance and wear resistance as compared with the ethylene-based ionomers of Comparative Examples which do not satisfy the specific requirement according to the present invention. The ethylene-based ionomers of the present invention have a good balance of flexibility, elastic recovery, impact resistance and wear resistance as shown in Examples V-1 to 3, and it could be confirmed that they are suitable for gaskets.

UTILIZABILITY IN INDUSTRY

The ionomer of the present invention is extremely useful in industry since it is possible to obtain a molded product, in particular, a film or sheet-shaped molded body which satisfies characteristics required for various uses. The film using the ionomer of the present invention is excellent in at least one of gloss, transparency, tensile strength, impact strength, piercing strength, pinhole resistance and heat seal strength of the film as compared with the film produced by using the existing polyethylene or the existing ionomer. The film of the present invention can be used as a film for packaging, and can be suitably used as various packaging materials, for example, including food packaging materials, packaging materials for medical materials, industrial material packaging materials, etc. In addition, according to the present invention, it is possible to provide a soft sheet made of an ethylene-based ionomer which is suitable for a cushioning sheet and a vibration-proof sheet. That is, the molded product using the ethylene-based ionomer of the present invention is excellent in the balance of the flexibility, wear resistance, impact resistance and transparency so that it is therefore very useful in industry. Further, when the resin for a glass laminated body containing the ionomer of the present invention is used, as compared with the resin for a glass laminated body containing the conventional ionomer, it can be expected to obtain a laminated glass interlayer film or a solar cell module sealing material excellent in adhesiveness and impact resistance while maintaining the same transparency. When it is the laminated glass, it can be expected to improve safety while retaining visibility, so that utility value as a glass for automobiles and a glass for architecture is considered to be high. When it is the solar cell module, it can be expected to improve durability without lowering the conversion efficiency.

Also, as another use, as compared with the dicing tape using the conventional ionomer, it can be provided a dicing tape excellent in the viewpoint of reducing cutting chips.

Also, according to the present invention, it is possible to provide a gasket made of the ethylene-based ionomer, which is suitable for a bottle cap closure liner and a sealing component of an electronic device. That is, the gasket containing the ethylene-based ionomer of the present invention is excellent in the balance of the flexibility, elastic recovery, impact resistance and wear resistance, so that it is therefore very useful in industry.

## Claims

1. A resin for a film-shaped molded body **characterized in that** the resin comprises the following ionomer:
an ionomer **characterized in that** at least a part of a carboxyl group and/or a dicarboxylic anhydride group in a copolymer (P) containing a structural unit (A) derived from ethylene and/or an $\alpha$-olefin having 3 to 20 carbon atoms and a structural unit (B) derived from a monomer having a carboxyl group and/or a dicarboxylic anhydride group as essential constitutional units being converted into a metal-containing carboxylic acid salt containing at least one kind of a metal ion(s) selected from Group 1, Group 2 or Group 12 of the periodic table, and a phase angle $\delta$ of the ionomer at an absolute value G*=0.1 MPa of a complex modulus of elasticity measured by a rotary rheometer is a range of 50 degrees to 75 degrees.

2. The resin for a film-shaped molded body according to Claim 1 **characterized in that** a number of methyl branches calculated by $^{13}C$-NMR of the copolymer (P) in the ionomer is 50 or less per 1,000 carbons.

3. The resin for a film-shaped molded body according to Claim 1 or 2 **characterized in that** the copolymer (P) in the ionomer contains 2 to 20 mol% of the structural unit (B) in the copolymer.

4. The resin for a film-shaped molded body according to any one of Claims 1 to 3 **characterized in that** the structural unit (A) in the ionomer is a structural unit derived from ethylene.

5. The resin for a film-shaped molded body according to any one of Claims 1 to 4 **characterized in that** the copolymer (P) in the ionomer is produced by using a transition metal catalyst containing a transition metal(s) of Groups 8 to

11 of the periodic table.

6. The resin for a film-shaped molded body according to any one of Claims 1 to 5 **characterized in that** the copolymer (P) is a binary copolymer consisting of the structural unit (A) and the structural unit (B).

7. The resin for a film-shaped molded body according to any one of Claims 1 to 6 **characterized in that** the copolymer (P) is a copolymer which further comprises a structural unit (C) which is a compound having one or more carbon-carbon double bond in a molecular structure as essential constitutional unit, other than the structural unit (A) and the structural unit (B).

8. The resin for a film-shaped molded body according to Claim 7 **characterized in that** the structural unit (C) in the copolymer (P) is

a non-cyclic monomer represented by the following general formula (1) or
a cyclic monomer represented by the following general formula (2):

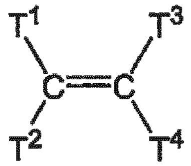
・・・(1)

in the general formula (1), $T^1$ to $T^3$ each independently represents a substituent selected from the group consisting of a hydrogen atom, a hydrocarbon group having 1 to 20 carbon atoms, a hydrocarbon group having 1 to 20 carbon atoms substituted by a hydroxyl group(s), a hydrocarbon group having 2 to 20 carbon atoms substituted by an alkoxy group(s) having 1 to 20 carbon atoms, a hydrocarbon group having 3 to 20 carbon atoms substituted by an ester group(s) having 2 to 20 carbon atoms, a hydrocarbon group having 1 to 20 carbon atoms substituted by a halogen atom(s), an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group, and
$T^4$ represents a substituent selected from the group consisting of a hydrocarbon group having 1 to 20 carbon atoms substituted by a hydroxyl group(s), a hydrocarbon group having 2 to 20 carbon atoms substituted by an alkoxy group(s) having 1 to 20 carbon atoms, a hydrocarbon group having 3 to 20 carbon atoms substituted by an ester group(s) having 2 to 20 carbon atoms, a hydrocarbon group having 1 to 20 carbon atoms substituted by a halogen atom(s), an alkoxy group having 1 to 20 carbon atoms, an aryl group having 6 to 20 carbon atoms, an ester group having 2 to 20 carbon atoms, a silyl group having 3 to 20 carbon atoms, a halogen atom or a cyano group,

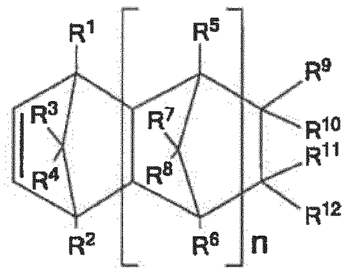
・・・(2)

in the general formula (2), $R^1$ to $R^{12}$ each may be the same or different from each other, and each is selected from the group consisting of a hydrogen atom, a halogen atom and a hydrocarbon group having 1 to 20 carbon atoms, $R^9$ and $R^{10}$, and, $R^{11}$ and $R^{12}$ may be each integrated to form a divalent organic group, and $R^9$ or $R^{10}$, and $R^{11}$ or $R^{12}$ may form a ring with each other, and
n indicates 0 or a positive integer, and when n is 2 or more, $R^5$ to $R^8$ may be the same or different from each other in each repeating unit.

9. The resin for a film-shaped molded body according to Claim 8 **characterized in that** the structural unit (C) in the copolymer (P) is a non-cyclic monomer represented by the general formula (1).

**10.** The resin for a film-shaped molded body according to Claim 8 **characterized in that** the structural unit (C) in the copolymer (P) is a cyclic monomer represented by the general formula (2).

**11.** The resin for a film-shaped molded body according to any one of Claims 7 to 10 **characterized in that** the copolymer (P) contains 0.001 mol% to 20.000 mol% (the total of all the structural units constituting the copolymer is made 100 mol%) of the structural unit (C) in the copolymer.

**12.** The resin for a film-shaped molded body according to any one of Claims 1 to 11 **characterized in that** the metal ion is a metal ion of Group 1 of the periodic table or Group 12 of the periodic table.

**13.** An ethylene-based ionomer for a soft sheet which is the ionomer according to any one of Claims 1 to 12 **characterized in that** the ionomer further satisfies the following (b) to (f):

(b) a melt flow rate (MFR) at a temperature of 190∘c and a load of 2.16 kg is 0.1 to 15 g/10 min,
(c) a tensile modulus of elasticity is 20 to 350 MPa,
(d) a tensile impact strength is 700 $KJ/m^2$ or more,
(e) a wear amount in a wear test is less than 10 mg,
(f) a haze is 0.1 to 30%.

**14.** An ethylene-based ionomer for a dicing tape which is the ionomer according to any one of Claims 1 to 12 **characterized in that** the ionomer further satisfies the following (b2) to (c2):

(b2) a tensile fracture elongation by the cooling method A in accordance with JIS K7151 when molded to a thickness of 1 mm is larger than 350%,
(c2) a wear amount in a wear test when molded to a thickness of 1 mm is less than 10 mg.

**15.** An ethylene-based ionomer for a laminated body which is the ionomer according to any one of Claims 1 to 12 **characterized in that** the ionomer further satisfies the following (b3) to (d3):

(b3) a maximum stress in a peeling test when molded to a thickness of 0.5 mm and laminated to a glass is 2 N/10 mm or more,
(c3) a tensile impact strength is 700 $KJ/m^2$ or more,
(d3) a haze is 25% or less.

**16.** An ethylene-based ionomer for a gasket which is the ionomer according to any one of Claims 1 to 12 **characterized in that** the ionomer further satisfies the following (b') to (f');

(b') a melt flow rate (MFR) at a temperature of 190∘c and a load of 2.16 kg is 0.1 to 30 g/10 min,
(c') an elastic recovery rate in a tensile test is 65 to 100%,
(d') a tensile modulus of elasticity is 20 to 350 MPa,
(e') a tensile impact strength is 700 $KJ/m^2$ or more,
(f') a wear amount in a wear test is less than 10 mg.

**17.** A resin composition for a film-shaped molded body which comprises the resin for a film-shaped molded body according to any one of Claims 1 to 12, or the ethylene-based ionomer described in any one of Claims 13 to 16.

**18.** A molded body which is molded by using the resin for a film-shaped molded body according to any one of Claims 1 to 12, or the ethylene-based ionomer according to any one of Claims 13 to 16.

**19.** A molded body selected from the group consisting of an ethylene-based film, a soft sheet, a dicing tape base material, a resin film for a glass interlayer film, a resin film for an encapsulating material of a solar battery, a resin film for a glass laminated body and a gasket, which comprises molded by or containing at least one layer of a molded layer using the resin for a film-shaped molded body according to any of Claims 1 to 12, or the ethylene-based ionomer according to any one of Claims 13 to 16.

**20.** An ethylene-based film **characterized in that** the film comprises an ethylene-based resin as a resin component, and has properties of any of the following (i) to (iV):

(i) a film impact at -20◦c when molded to a thickness of 30 μm is 20 J/mm or more, and a tensile modulus of elasticity in an MD direction is 150 MPa or more,
(ii) a heat seal strength when molded to a thickness of 30 μm and measured under a seal temperature of 120◦c, a seal pressure of 0.2 MPa, a seal time of 1 second and a lower seal bar temperature of 60◦c is 10 N/15 mm or more,
(iii) an inflation film having a haze of 2% or less when molded to a thickness of 30 μm, and
(iV) an inflation film having a gloss (20°) of 120% or more when molded to a thickness of 30 μm.

Fig. 1

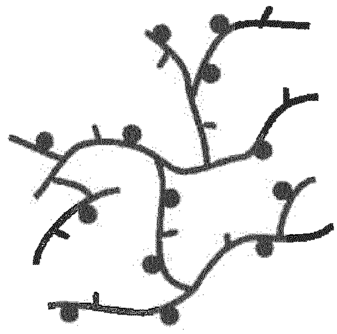

Fig. 2

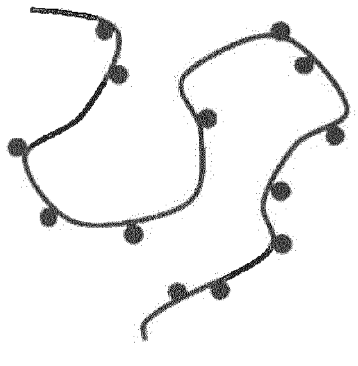

**Fig. 3**

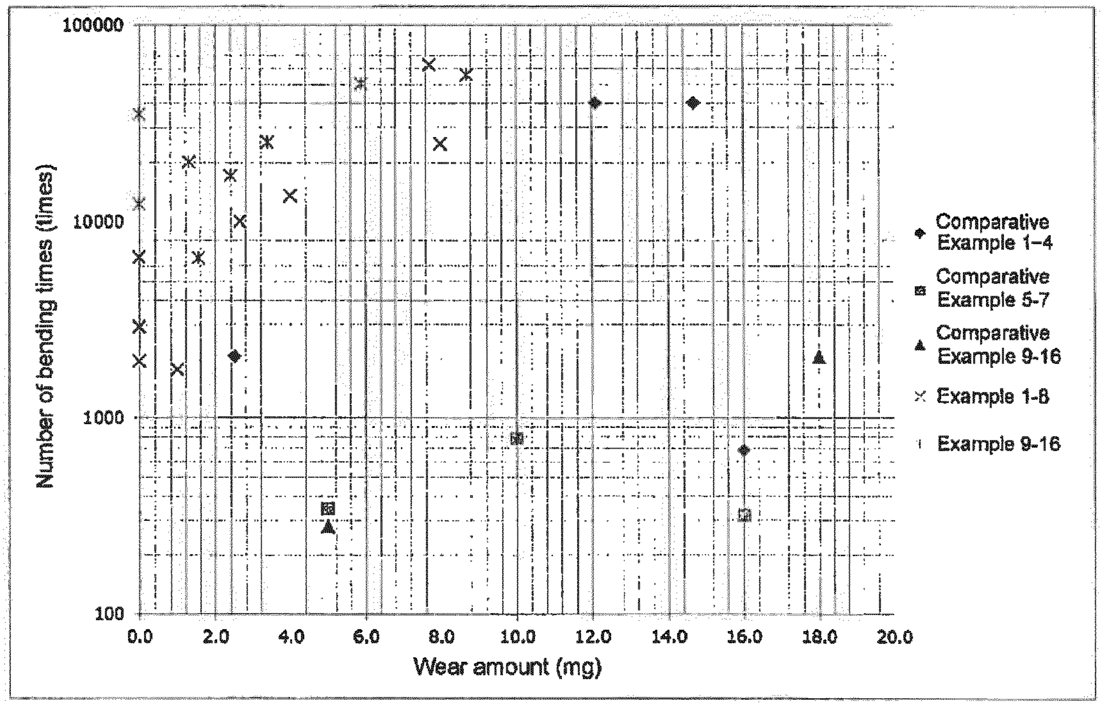
100000
10000
1000
100
Number of bending times (times)
0.0
2.0
4.0
6.0
8.0
10.0
12.0
14.0
16.0
18.0
20.0
Wear amount (mg)
Comparative Example 1-4
Comparative Example 5-7
Comparative Example 9-16
Example 1-8
Example 9-16

Fig. 4

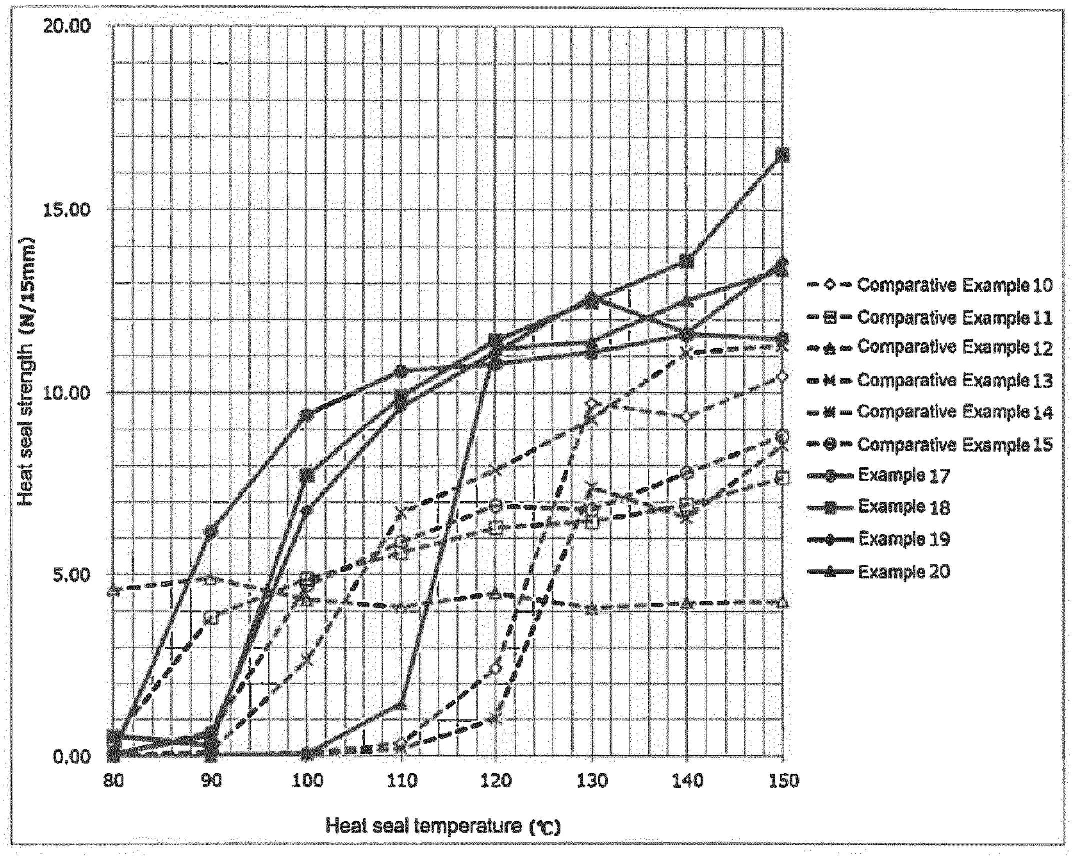
20.00
15.00
10.00
5.00
0.00
Heat seal strength (N/15mm)
80
90
100
110
120
130
140
150
Heat seal temperature (℃)
Comparative Example 10
Comparative Example 11
Comparative Example 12
Comparative Example 13
Comparative Example 14
Comparative Example 15
Example 17
Example 18
Example 19
Example 20

**Fig. 5**

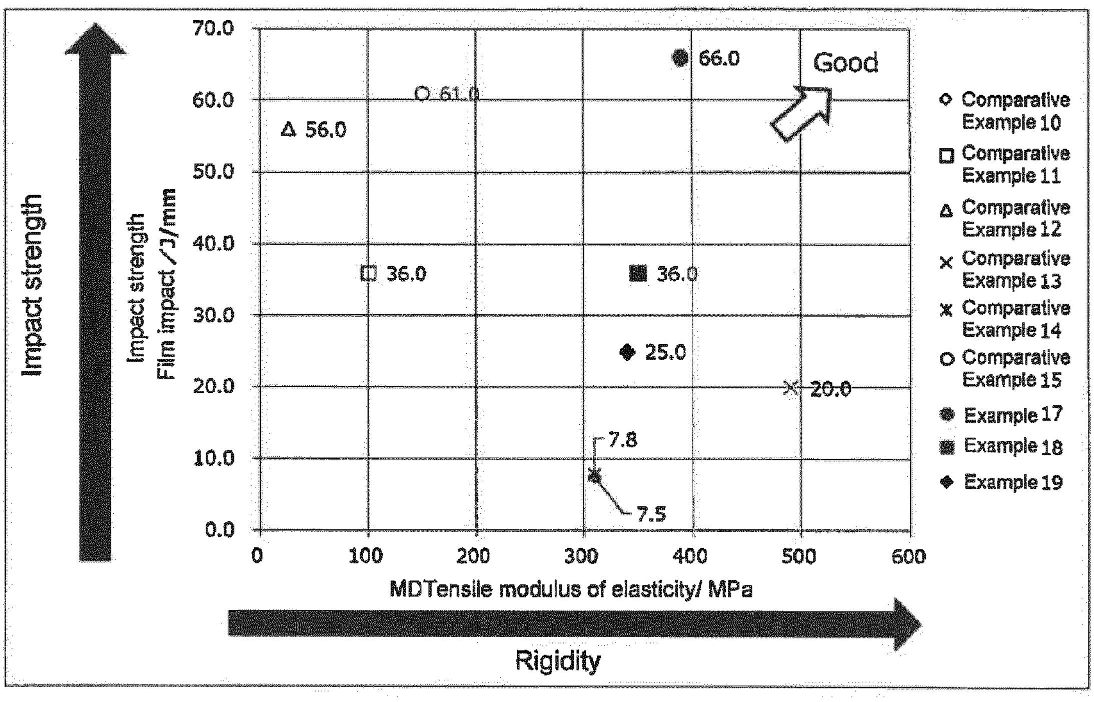
Impact strength
Impact strength
Film impact /J/mm
70.0
60.0
50.0
40.0
30.0
20.0
10.0
0.0
66.0
Good
61.0
56.0
36.0
36.0
25.0
20.0
7.8
7.5
0
100
200
300
400
500
600
MDTensile modulus of elasticity/ MPa
Rigidity
Comparative Example 10
Comparative Example 11
Comparative Example 12
Comparative Example 13
Comparative Example 14
Comparative Example 15
Example 17
Example 18
Example 19

**Fig. 6**

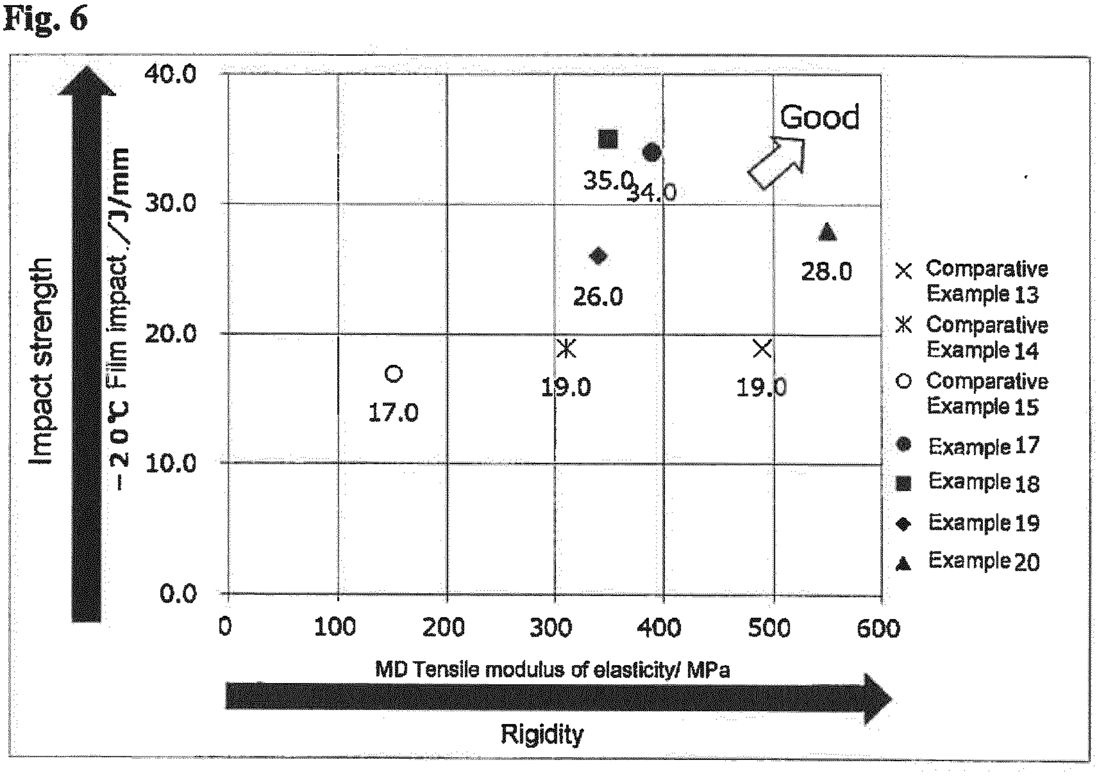
Impact strength
－20℃ Film impact /J/mm
40.0
30.0
20.0
10.0
0.0
Good
35.0
34.0
26.0
28.0
19.0
19.0
17.0
0
100
200
300
400
500
600
MD Tensile modulus of elasticity/ MPa
Rigidity
Comparative Example 13
Comparative Example 14
Comparative Example 15
Example 17
Example 18
Example 19
Example 20

**Fig. 7**

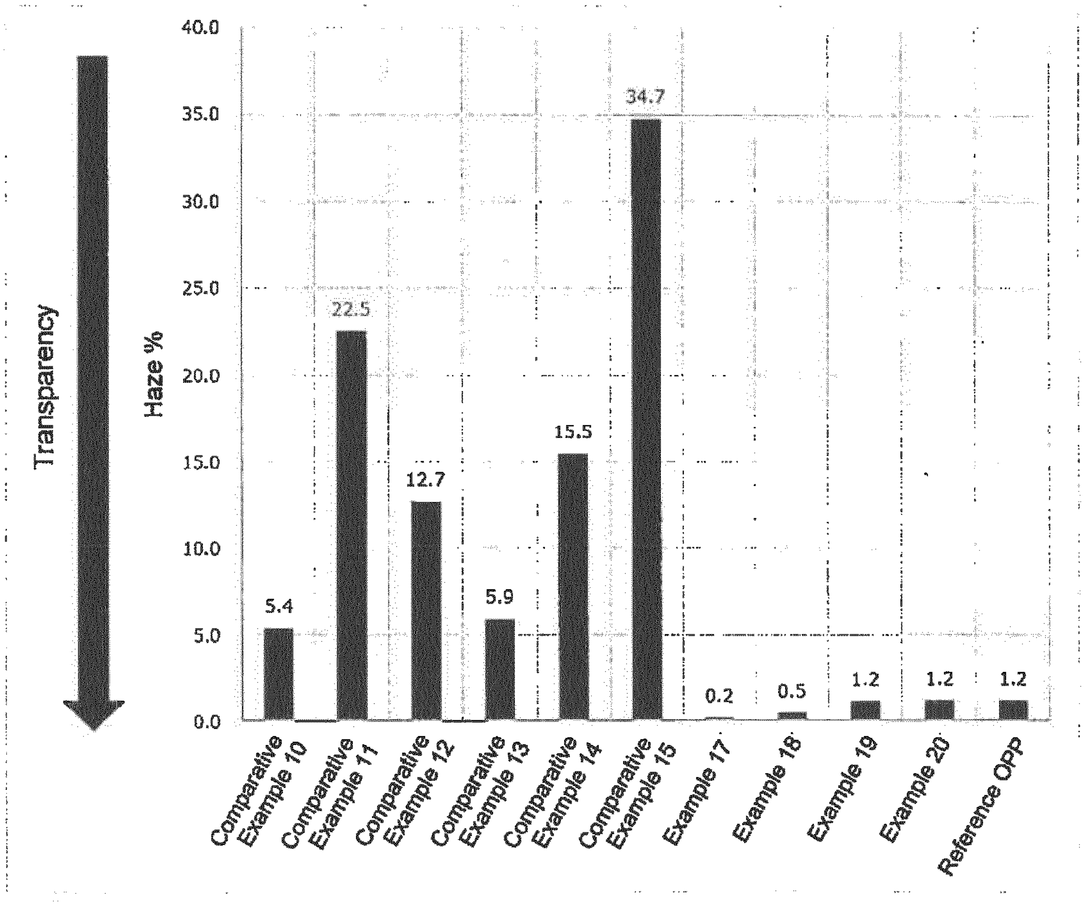
Transparency
Haze %
40.0
35.0
30.0
25.0
20.0
15.0
10.0
5.0
0.0
5.4
22.5
12.7
5.9
15.5
34.7
0.2
0.5
1.2
1.2
1.2
Comparative Example 10
Comparative Example 11
Comparative Example 12
Comparative Example 13
Comparative Example 14
Comparative Example 15
Example 17
Example 18
Example 19
Example 20
Reference OPP

Fig. 8

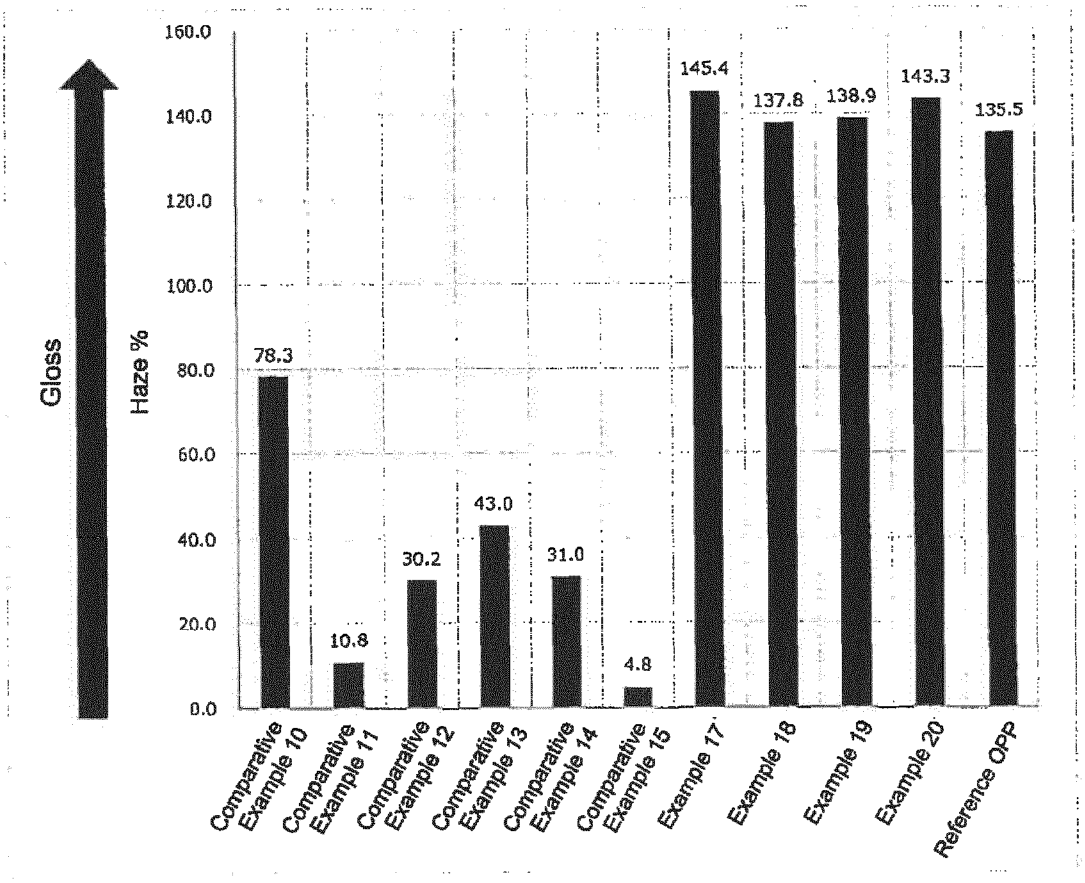
Gloss
Haze %
160.0
140.0
120.0
100.0
80.0
60.0
40.0
20.0
0.0
78.3
10.8
30.2
43.0
31.0
4.8
145.4
137.8
138.9
143.3
135.5
Comparative Example 10
Comparative Example 11
Comparative Example 12
Comparative Example 13
Comparative Example 14
Comparative Example 15
Example 17
Example 18
Example 19
Example 20
Reference OPP

Fig. 9

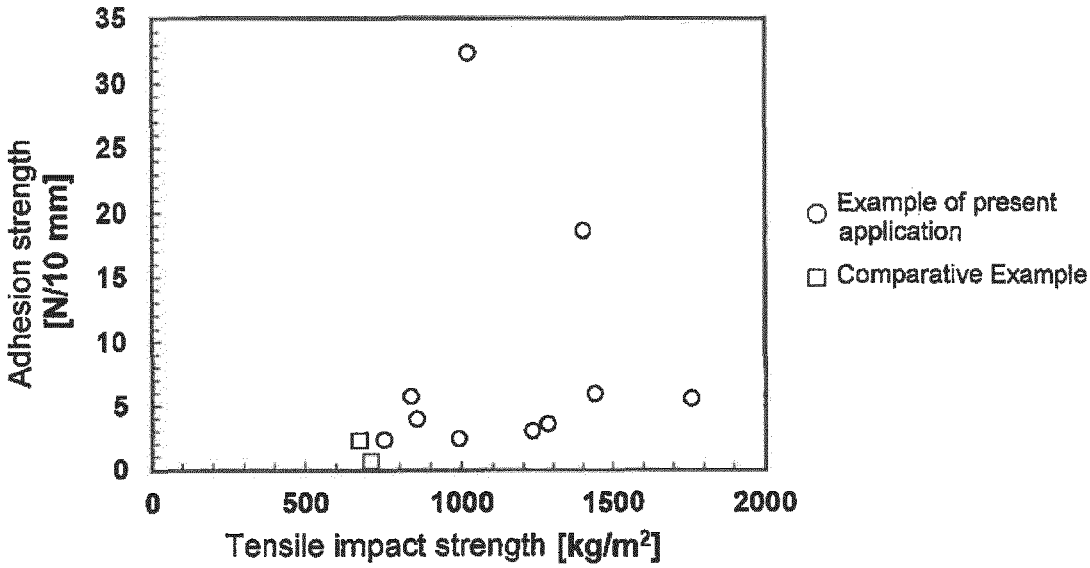


Fig. 10

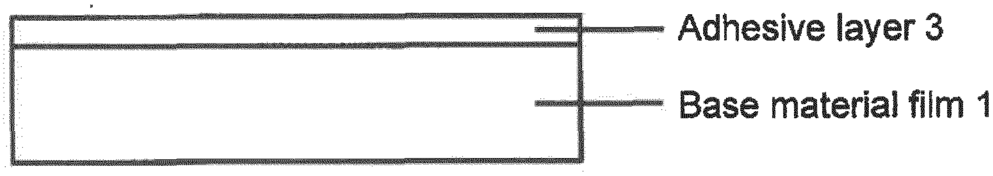


Fig. 11

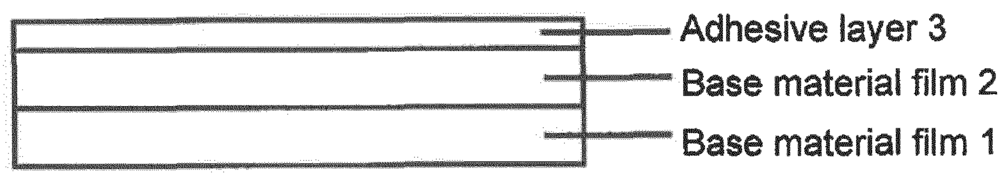

## INTERNATIONAL SEARCH REPORT

International application No.
PCT/JP2020/024884

A. CLASSIFICATION OF SUBJECT MATTER
Int.Cl. B32B17/10(2006.01)i, C08F8/42(2006.01)i, C08F4/70(2006.01)i, C08F210/02(2006.01)i, C08L23/26(2006.01)i, C08J5/18(2006.01)i
FI: C08F8/42, C08F210/02, C08L23/26, C08F4/70, C08J5/18CEY, B32B17/10
According to International Patent Classification (IPC) or to both national classification and IPC

B. FIELDS SEARCHED
Minimum documentation searched (classification system followed by classification symbols)
Int.Cl. C08F4, C08F6-246, C08L

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 63-270709 A (IDEMITSU KOSAN CO., LTD.) 08.11.1988 (1988-11-08), claims, page 4, upper left column, page 9, lower left column, example 3 | 1-4, 6, 12, 13, 15, 17-20<br>7-10, 14, 16-19 |
| X<br>Y | JP 2016-79408 A (JAPAN POLYETHYLENE CORP.) 16.05.2016 (2016-05-16), claims, paragraphs [0021]-[0023], [0192], production examples 1, 3-5 | 1-13, 15, 17-20<br>7-10, 14, 16-19 |
| Y | JP 2011-507278 A (E. I. DU PONT DE NEMOURS AND COMPANY) 03.03.2011 (2011-03-03), claims | 7-9 |
| Y | JP 2015-195394 A (E. I. DU PONT DE NEMOURS AND COMPANY) 05.11.2015 (2015-11-05), claims, paragraph [0041] | 7-9 |
| Y | JP 2010-74136 A (HITACHI CHEMICAL CO., LTD.) 02.04.2010 (2010-04-02), claims | 14, 17-19 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>07.09.2020 | Date of mailing of the international search report<br>24.09.2020 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2020/024884

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2006/054741 A1 (JSR CORPORATION) 26.05.2006 (2006-05-26), claims, paragraph [0071] | 16-19 |

Form PCT/ISA/210 (second sheet) (January 2015)

**INTERNATIONAL SEARCH REPORT**

International application No.
PCT/JP2020/024884

**Box No. II Observations where certain claims were found unsearchable (Continuation of item 2 of first sheet)**

This international search report has not been established in respect of certain claims under Article 17 (2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**

International application No.
PCT/JP2020/024884

**Box No. III Observations where unity of invention is lacking (Continuation of item 3 of first sheet)**

This International Searching Authority found multiple inventions in this international application, as follows:

The invention of the present application are classified into the two inventions below.

- Invention 1: Invention of claims 1-19
- Invention 2: Invention of claim 20

In this regard, a matter that is common between inventions 1 and 2 is the feature of a film, alone. It is obvious that this feature is so well known that it is not necessary to provide a document therefor.

As above, inventions 1 and 2 thus do not meet the unity of invention.

Meanwhile, for invention 2, an additional fee has not been requested.

Form PCT/ISA/210 (continuation of first sheet) (January 2015)

**INTERNATIONAL SEARCH REPORT**
Information on patent family members

International application No.
PCT/JP2020/024884

| | | |
|---|---|---|
| JP 63-270709 A | 08.11.1988 | US 4956418 A<br>claims,<br>columns 3, 5, examples<br>EP 293595 A2<br>KR 10-1988-0012659 A |
| JP 2016-79408 A | 16.05.2016 | US 2017/0306134 A1<br>claims, paragraphs [0064]-[0070],<br>production examples 1, 3-5<br>WO 2016/060218 A1<br>EP 3208285 A1<br>CN 107075005 A |
| JP 2011-507278 A | 03.03.2011 | US 2009/0151772 A1<br>claims<br>WO 2009/079322 A2<br>EP 2217441 A<br>CN 101952975 A |
| JP 2015-195394 A | 05.11.2015 | US 2010/0108126 A1<br>claims, paragraph [0046]<br>WO 2010/051522 A1<br>EP 2342209 A1<br>CN 102333786 A |
| JP 2010-74136 A | 02.04.2010 | (Family: none) |
| WO 2006/054741 A1 | 26.05.2006 | US 2009/0171032 A1<br>claims, paragraph [0075]<br>EP 1816147 A1<br>CN 101103052 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 3264272 A
- JP 2011524918 A
- JP 2016079408 A
- JP 2018193261 A
- JP 2016188158 A
- JP 2009248377 A
- JP 2017152499 A
- JP 2008545017 A
- JP 2015163691 A
- JP 2010150532 A
- WO 2010050256 A
- JP 2010202647 A
- JP 2010260913 A
- JP HEI1249877 A
- JP HEI5196768 A
- JP SHO6317980 A

### Non-patent literature cited in the description

- **BROOKHART et al.** *Chem. Rev.,* 2000, vol. 100, 1169
- *Macromolecules,* 1984, vol. 17, 1756-1761
- *Macromolecules,* 1979, vol. 12, 41